(19) Europäisches Patentamt
European Patent Office
Office européen des brevets

(11) **EP 4 160 718 A1**

(12) **EUROPEAN PATENT APPLICATION**
published in accordance with Art. 153(4) EPC

(43) Date of publication:
**05.04.2023 Bulletin 2023/14**

(21) Application number: **21814354.3**

(22) Date of filing: **17.02.2021**

(51) International Patent Classification (IPC):
*H01M 4/13* $^{(2010.01)}$    *H01M 4/131* $^{(2010.01)}$
*H01M 4/136* $^{(2010.01)}$    *H01M 4/48* $^{(2006.01)}$
*H01M 4/505* $^{(2010.01)}$    *H01M 4/525* $^{(2010.01)}$
*H01M 4/58* $^{(2006.01)}$    *H01M 4/62* $^{(2006.01)}$

(52) Cooperative Patent Classification (CPC):
**H01M 4/13; H01M 4/131; H01M 4/136; H01M 4/48;
H01M 4/505; H01M 4/525; H01M 4/58; H01M 4/62;
Y02E 60/10**

(86) International application number:
**PCT/JP2021/005990**

(87) International publication number:
**WO 2021/240913 (02.12.2021 Gazette 2021/48)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.05.2020 JP 2020092751**

(71) Applicant: **Idemitsu Kosan Co., Ltd
Tokyo 100-8321 (JP)**

(72) Inventors:
• **MASUDA, Naoya
  Sodegaura-shi, Chiba 299-0293 (JP)**
• **UTSUNO, Futoshi
  Sodegaura-shi, Chiba 299-0293 (JP)**
• **HIGUCHI, Hiroyuki
  Sodegaura-shi, Chiba 299-0293 (JP)**

(74) Representative: **Vossius & Partner
Patentanwälte Rechtsanwälte mbB
Siebertstraße 3
81675 München (DE)**

(54) **ELECTRODE MIXTURE AND METHOD FOR PRODUCING SAME**

(57) To provide an electrode composite material that is excellent in conductivity through the excellent contact state of a solid electrolyte and an electrode active material, and is capable of exhibiting a high battery capability, containing the sulfide solid electrolyte and the electrode active material, having an electron conductivity parameter X represented by the prescribed expression satisfying $0.30 \le X \le 2.10$.

EP 4 160 718 A1

**Description**

Technical Field

The present invention relates to an electrode mixture and a method for producing the same.

Background Art

With the rapid spread of information-related instruments, communication instruments, and the like, such as personal computers, video cameras, and mobile phones, in recent years, development of batteries that are utilized as a power source therefor is considered to be important. While the batteries to be used for such an application have used an electrolytic solution containing a flammable organic solvent, batteries having a solid electrolyte layer instead of the electrolytic solution are being developed in view of the fact that by making the battery all-solid-state, the disuse of the flammable organic solvent in the battery can be applied to simplify the safety unit, which is excellent in production costs and productivity.

The electrode used in the all-solid-state battery includes an electrode composite material containing an active material and a solid electrolyte, and the enhancement of the ionic conductivity thereof is being investigated by enhancing the contact at the interface between the active material and the solid electrolyte. For example, PTL 1 describes a composite active material containing active material particles containing prescribed elements and a sulfide solid electrolyte covering 76.0% or more of the surface of the active material particles. PTL 2 describes a method of dissolving a solid electrolyte in an organic solvent to provide a solution, with which an active material is mixed. NPL 1 describes that a sulfide solid electrolyte obtained through synthesis in ethanol and an active material are mixed to produce a composite material.

Citation List

Patent Literatures

    PTL 1: JP 2014-154407 A
    PTL 2: JP 2014-191899 A

Non-patent Literature

NPL 1: J. Jpn. Soc. Colour Mater., 89[9], 300-305 (2016)

Summary of Invention

Technical Problem

However, the enhancement of the dispersion state and the contact state of the solid electrolyte and the electrode active material is still difficult, and there is room for improvement.

The present invention has been made in view of the circumstances, and an object thereof is to provide an electrode composite material that is excellent in conductivity through the excellent dispersion state and the contact state of the solid electrolyte and the electrode active material, and is capable of exhibiting a high battery capability.

Solution to Problem

As a result of the earnest investigations by the present inventors for solving the problem, it has been found that the problem can be solved by the following inventions.

    1. An electrode composite material containing a sulfide solid electrolyte and an electrode active material, having an electron conductivity parameter X represented by the following expression (1) satisfying $0.30 \leq X \leq 2.10$:

$$X = \Sigma(C)/10^{[\{Log\Sigma(A)\cdot Log\Sigma(SE)\}\alpha + Log\Sigma(SE)]} \quad\quad (1)$$

wherein

$\Sigma(C)$: the electron conductivity of the electrode composite material,
$\Sigma(A)$: the electron conductivity of the electrode active material,
$\Sigma(SE)$: the electron conductivity of the sulfide solid electrolyte, and
$\alpha$: the fraction of the electrode active material.

Advantageous Effects of Invention

According to the present invention, an electrode composite material that is excellent in conductivity through the excellent dispersion state and contact state of the solid electrolyte and the electrode active material, and is capable of exhibiting a high battery capability, and a method for producing the electrode composite material can be provided.

Brief Description of Drawings

Fig. 1 is a flow chart explaining one example of a preferred embodiment of a method for producing a crystalline sulfide solid electrolyte.
Fig. 2 is a flow chart explaining one example of a preferred embodiment of the method for producing a crystalline sulfide solid electrolyte.
Fig. 3 is the X-ray diffraction spectra of an electrolyte precursor, an amorphous sulfide solid electrolyte, and a crystalline sulfide solid electrolyte obtained in an embodiment of the present invention.
Fig. 4 is the X-ray diffraction spectra of the raw materials used in the examples.
Fig. 5 is the X-ray diffraction spectra of the crystalline sulfide solid electrolytes of Example 1 and Comparative Example 1.
Fig. 6 is the SEM (scanning electron microscope) image of the electrode composite material obtained in Example 1.
Fig. 7 is the SEM (scanning electron microscope) image of the electrode composite material obtained in Example 2.
Fig. 8 is the SEM (scanning electron microscope) image of the electrode composite material obtained in Comparative Example 1.
Fig. 9 is a graph showing the evaluation results of Examples and Comparative Examples.
Fig. 10 is the EDS image of a nickel element constituting the electrode active material used in Example 1.
Fig. 11 is the EDS image of a phosphorus element constituting the sulfide solid electrolyte used in Example 1.
Fig. 12 is the EDS image of a nickel element constituting the electrode active material used in Example 2.
Fig. 13 is the EDS image of a phosphorus element constituting the sulfide solid electrolyte used in Example 2.
Fig. 14 is the SEM (scanning electron microscope) image of the electrode composite material obtained in Example 3.
Fig. 15 is the EDS image of a nickel element constituting the electrode active material used in Example 3.
Fig. 16 is the EDS image of a phosphorus element constituting the sulfide solid electrolyte used in Example 3.
Fig. 17 is the SEM (scanning electron microscope) image of the electrode composite material obtained in Example 4.
Fig. 18 is the EDS image of a nickel element constituting the electrode active material used in Example 4.
Fig. 19 is the EDS image of a phosphorus element constituting the sulfide solid electrolyte used in Example 4.
Fig. 20 is the EDS image of a nickel element constituting the electrode active material used in Comparative Example 1.
Fig. 21 is the EDS image of a phosphorus element constituting the sulfide solid electrolyte used in Comparative Example 1.
Fig. 22 is the SEM (scanning electron microscope) image of the electrode composite material obtained in Comparative Example 2.
Fig. 23 is the EDS image of a nickel element constituting the electrode active material used in Comparative Example 2.
Fig. 24 is the EDS image of a phosphorus element constituting the sulfide solid electrolyte used in Comparative Example 2.
Fig. 25 is the SEM (scanning electron microscope) image of the electrode composite material obtained in Comparative Example 3.
Fig. 26 is the EDS image of a nickel element constituting the electrode active material used in Comparative Example 3.
Fig. 27 is the EDS image of a phosphorus element constituting the sulfide solid electrolyte used in Comparative Example 3.
Fig. 28 is the SEM (scanning electron microscope) image of the electrode composite material obtained in Example 5.

Fig. 29 is the EDS image of a nickel element constituting the electrode active material used in Example 5.
Fig. 30 is the EDS image of a phosphorus element constituting the sulfide solid electrolyte used in Example 5.
Fig. 31 is the SEM (scanning electron microscope) image of the electrode composite material obtained in Example 6.
Fig. 32 is the EDS image of a nickel element constituting the electrode active material used in Example 6.
Fig. 33 is the EDS image of a phosphorus element constituting the sulfide solid electrolyte used in Example 6.
Fig. 34 is the SEM (scanning electron microscope) image of the electrode composite material obtained in Example 7.
Fig. 35 is the EDS image of a nickel element constituting the electrode active material used in Example 7.
Fig. 36 is the EDS image of a phosphorus element constituting the sulfide solid electrolyte used in Example 7.
Fig. 37 is the SEM (scanning electron microscope) image of the electrode composite material obtained in Comparative Example 4.
Fig. 38 is the EDS image of a nickel element constituting the electrode active material used in Comparative Example 4.
Fig. 39 is the EDS image of a phosphorus element constituting the sulfide solid electrolyte used in Comparative Example 4.

Description of Embodiments

Embodiments of the present invention (which may be hereinafter referred to as the "present embodiment") are described below. In this specification, the numerical values of the upper limits and the lower limits relating to the numerical value ranges of "or more", "or less", and "to" each are a numerical value that can be arbitrarily combined, and the numerical values in Examples can also be used as numerical values of the upper limit and the lower limit, respectively.

The "solid electrolyte" as referred to in this specification means an electrolyte keeping the solid state at 25°C in a nitrogen atmosphere. The solid electrolyte in the present embodiment is a solid electrolyte containing a lithium element, a sulfur element, a phosphorus element, and a halogen element and having an ionic conductivity derived from the lithium element, and may be referred to as a "sulfide solid electrolyte" due to the involved sulfur element.

The "solid electrolyte" encompasses both a crystalline solid electrolyte having a crystal structure and an amorphous solid electrolyte. The crystalline solid electrolyte as referred to in this specification is a material that is a solid electrolyte in which peaks derived from the solid electrolyte are observed in an X-ray diffraction pattern in the X-ray diffractometry, and the presence or absence of peaks derived from the raw materials of the solid electrolyte does not matter. That is, the crystalline solid electrolyte contains a crystal structure derived from the solid electrolyte, in which a part thereof may be a crystal structure derived from the solid electrolyte, or all of them may be a crystal structure derived from the solid electrolyte. The crystalline solid electrolyte may be one in which an amorphous solid electrolyte is contained in a part thereof as long as it has the X-ray diffraction pattern as mentioned above. In consequence, in the crystalline solid electrolyte, so-called glass ceramics which is obtained by heating the amorphous solid electrolyte to a crystallization temperature or higher is contained.

The amorphous solid electrolyte as referred to in this specification is a halo pattern in which other peak than the peaks derived from the materials is not substantially observed in an X-ray diffraction pattern in the X-ray diffractometry, and it is meant that the presence or absence of peaks derived from the raw materials of the solid electrolyte does not matter.

[Electrode Composite Material]

The electrode composite material of the present embodiment contains a sulfide solid electrolyte and an electrode active material, and has an electron conductivity parameter X represented by the following expression satisfying $0.30 \leq X \leq 2.10$.

$$X = \Sigma(C)/10^{[\{Log\Sigma(A)\cdot Log\Sigma(SE)\}\alpha+Log\Sigma(SE)]} \qquad (1)$$

wherein

$\Sigma(C)$: the electron conductivity of the electrode composite material
$\Sigma(A)$: the electron conductivity of the electrode active material
$\Sigma(SE)$: the electron conductivity of the sulfide solid electrolyte
$\alpha$: the fraction of the electrode active material

The composite active material described in PTL 1 has a low electron conductivity, and it cannot be said that the material contributes to the use as a positive electrode material and a negative electrode material without the use of a conductive material. The present inventors have made earnest investigations on the phenomenon, and as a result, it has been found that the electron conductivity of the composite active material described in PTL 1 is lowered because, for example, in the composite active material in Example 1, the coverage of the sulfide solid electrolyte having a low electron conductivity on the surface of the active material particles is as significantly high as 82.3% as compared to the composite ratio of the active material particles and the sulfide solid electrolyte (i.e., approximately 5/1 in terms of mass ratio). It has been found therefrom that the appropriate covering state corresponding to the composite ratio is important for achieving excellent battery characteristics.

Also in the method of mixing the active material with an organic solvent, such as ethanol, described in PTL 2 and NPL 1, the resulting composite material has a low electron conductivity, and it cannot be said that the material contributes to the use as a positive electrode material and a negative electrode material without the use of a conductive material. The present inventors have made earnest investigations on the literatures, and as a result, it has been found that as shown by Comparative Example 3 described later in this specification, the solid electrolyte is aggregated while becoming flaky form to cover the electrode active material, resulting in an unfavorable dispersion state of the solid electrolyte on the surface of the electrode active material, and the excellent contact state thereof cannot be secured to lower the electron conductivity of the resulting composite material, deteriorating the battery characteristics.

Based on the aforementioned knowledge, the present inventors have found that the covering state of the sulfide solid electrolyte to the electrode active material can be improved, i.e., the excellent contact state of the sulfide solid electrolyte and the electrode active material can be obtained, by making the electron conductivities of the electrode active material, the sulfide solid electrolyte, and the electrode composite material obtained therewith, and the electron conductivity parameter X derived from the fraction of the electrode active material within the particular ranges.

The electron conductivity of the electrode composite material containing the sulfide solid electrolyte and the electrode active material is theoretically shown by the following expression (2).

$$\Sigma(C) \text{ (theoretical)} = 10^{\wedge}[\{\text{Log}\Sigma(A) - \text{Log}\Sigma(SE)\}\alpha + \text{Log}\Sigma(SE)] \qquad (2)$$

wherein

$\Sigma(C)$: the electron conductivity of the electrode composite material
$\Sigma(A)$: the electron conductivity of the electrode active material
$\Sigma(SE)$: the electron conductivity of the sulfide solid electrolyte
$\alpha$: the fraction of the electrode active material

The actual measured value of the electron conductivity of the electrode composite material $\Sigma(C)$ should theoretically be the same as the theoretical value calculated by the expression (2), but may not be the same due to the influence of the state of the sulfide solid electrolyte and the electrode active material existing in the electrode composite material, for example, the dispersion state of the sulfide solid electrolyte covering the surface of the electrode active material (which may be hereinafter referred simply to as the "dispersion state") and the contact state of the sulfide solid electrolyte on the surface of the electrode active material derived therefrom (which may be hereinafter referred simply to as the "contact state"), and also the particle diameter and the like. Accordingly, the electron conductivity parameter X, which is the ratio of the actual measured value and the theoretical value, should not be 1 but fluctuates around 1 as the center. The present inventors have considered that the electron conductivity parameter X, which is the ratio of the actual measured value and the theoretical value, can be comprehended as an index showing the state of the sulfide solid electrolyte and the electrode active material existing in the electrode composite material, particularly as an index showing the extent of the dispersion state and the contact state described above, and can also be comprehended as an index showing the achievement of the appropriate covering state of the sulfide solid electrolyte corresponding to the fraction of the electrode active material (which may be hereinafter referred simply to as the "appropriate covering state corresponding to the fraction") since the good dispersion state and contact state can achieve the appropriate coverage of the sulfide solid electrolyte corresponding to the fraction of the electrode active material. In the case where the electron conductivity parameter X is in the particular range of $0.30 \leq X \leq 2.10$, the sulfide solid electrolyte covering the surface of the electrode composite material can be regulated to have a good dispersion state, thereby securing the excellent contact state thereof, and achieving the appropriate covering state of the sulfide solid electrolyte corresponding to the fraction of the electrode active material, and thus the electrode composite material that is excellent in conductivity and is capable of exhibiting a high battery capability has been obtained.

The electron conductivity parameter X is preferably 0.40 or more, more preferably 0.65 or more, and further preferably 0.80 or more, and the upper limit thereof is preferably 2.05 or less, more preferably 1.90 or less, further preferably 1.85 or less, still further preferably 1.80 or less, and particularly preferably 1.30 or less, from the standpoint of the enhancement of the battery capability through the enhancement of the dispersion state and the contact state of the sulfide solid electrolyte covering the surface of the electrode active material, and through the appropriate covering state corresponding to the fraction. While the upper limit and the lower limit of the parameter X can be arbitrarily selected from these numerical ranges as described above, the combination of the upper limit and the lower limit of the parameter X is preferably 0.40 or more and 2.05 or less, more preferably 0.65 or more and 1.90 or less, further preferably 0.80 or more and 1.85 or less, still further preferably 0.80 or more and 1.80 or less, and particularly preferably 0.80 or more and 1.30 or less, from the standpoint of the enhancement of the battery capability through the enhancement of the dispersion state and the contact state of the sulfide solid electrolyte covering the surface of the electrode active material, and through the appropriate covering state corresponding to the fraction.

In the calculation of the electron conductivity parameter X, the electron conductivity $\sum(SE)$ of the sulfide solid electrolyte is preferably $1.0 \times 10^{-7}$ S/cm or less, more preferably $5.0 \times 10^{-8}$ S/cm or less, further preferably $1.0 \times 10^{-8}$ S/cm or less, still further preferably $5.0 \times 10^{-9}$ S/cm or less, and particularly preferably $2.25 \times 10^{-9}$ S/cm or less, while it cannot be determined unconditionally since the electron conductivity may vary depending on the elements constituting the sulfide solid electrolyte other than sulfur, the mixing ratios thereof, and the like. In the case where the electron conductivity is in the range, the electron conductivity parameter X can be easily regulated to the range of $0.30 \leq X \leq 2.10$. The lower limit thereof is not particularly limited, and is generally $1.0 \times 10^{-10}$ S/cm or more.

The electron conductivity $\sum(SE)$ of a sulfide solid electrolyte that can be used in the electrode composite material is generally approximately $1.0 \times 10^{-8}$ S/cm within the aforementioned range. Accordingly, the electron conductivity parameter X can be calculated by using the general value in place of the actually measured value of the electron conductivity $\sum(SE)$ of the sulfide solid electrolyte. This is because in the case where the electron conductivity parameter X calculated with the general value is in the range of the present embodiment, it is considered that the dispersion state and the contact state of the sulfide solid electrolyte covering the surface of the electrode active material that are in favorable states better than certain levels can be obtained.

In this specification, the electron conductivity is a value that is measured in the following manner.

A specimen (e.g., the sulfide solid electrolyte, the electrode active material, or the electrode composite material) weighed in an amount of 0.2 g is pressed at 20 MPa with a ceramic cylinder having a diameter of 10 mm and a pressing tool, then pressed at 20 MPa after rotating by 120°, and then pressed at 20 MPa after further rotating by 120° in the same direction, so as to produce a pellet. The pellet is screwed at four ends thereof with a blocking electrode and fixed at 8 N m with a torque wrench to produce a cell. After the cell is applied with prescribed voltages (i.e., four points of 0.01 V, 0.1 V, 0.5 V, and 1 V) for 2 hours, the current values and the voltage values after 2 hours are plotted, and the resistance value $R_e$ is calculated from the gradient obtained by the least-square method. The value $\sigma_e$ calculated from the resistance value R, the length $L_e$ of the measured pellet, and the cross-sectional area $S_e$ of the pellet according to the following expression is designated as the electron conductivity.

$$\sigma_e = 1/R_e \times L_e/S_e$$

The electron conductivity $\sum(A)$ of the electrode active material is preferably $1.0 \times 10^{-6}$ S/cm or more, more preferably $5.0 \times 10^{-6}$ S/cm or more, further preferably $1.0 \times 10^{-5}$ S/cm or more, and still further preferably $1.0 \times 10^{-4}$ S/cm or more, while it cannot be determined unconditionally since the electron conductivity may vary depending on the elements constituting the electrode active material. In the case where the electron conductivity is in the range, the dispersion state and the contact state can be easily enhanced, and the appropriate covering state corresponding to the fraction can be easily achieved, i.e., the electron conductivity parameter X can be easily regulated to the range of $0.30 \leq X \leq 2.10$. The upper limit thereof is not particularly limited, and is generally $1.0 \times 10^{-1}$ S/cm or less.

The fraction $\alpha$ of the electrode active material is the proportion of the electrode active material with respect to the total amount of the sulfide solid electrolyte and the electrode active material contained in the electrode composite material, and is preferably 0.4 or more, more preferably 0.5 or more, further preferably 0.6 or more, still further preferably 0.7 or more, particularly preferably 0.8 or more, and more particularly preferably 0.85 or more, and the upper limit thereof is preferably 0.995 or less, more preferably 0.99 or less, further preferably 0.98 or less, and still further preferably 0.95 or less. In the case where the fraction $\alpha$ of the electrode active material is in the range, the electron conductivity parameter X can be easily regulated to the range of $0.30 \leq X \leq 2.10$.

The electron conductivity $\sum(C)$ of the electrode composite material is preferably $1.0 \times 10^{-6}$ S/cm or more, more preferably $5.0 \times 10^{-6}$ S/cm or more, further preferably $1.0 \times 10^{-5}$ S/cm or more, still further preferably $1.0 \times 10^{-4}$ S/cm or more, particularly preferably $1.0 \times 10^{-3}$ S/cm or more, and more particularly preferably $3.5 \times 10^{-3}$ S/cm or more, while it cannot be determined unconditionally since the electron conductivity may vary depending on the sulfide solid electrolyte and the electrode composite material constituting the electrode composite material and the mixing ratio thereof. In the case where the electron conductivity is in the range, the electron conductivity parameter X can be easily regulated to the range of $0.30 \leq X \leq 2.10$. The upper limit thereof is not particularly limited, is generally approximately $1.0 \times 10^{-1}$ S/cm or less, and is preferably $1.0 \times 10^{-2}$ S/cm or less, more preferably $6.50 \times 10^{-3}$ S/cm or less, and further preferably

$6.0 \times 10^{-3}$ S/cm or less, in consideration of the electron conductivity parameter X.

The electrode composite material of the present embodiment preferably has a value A in a range of 0.55 < A < 5.0, assuming that in the elemental analysis by the energy dispersive X-ray spectroscopy of an electron micrograph, the overlap area ratio of the mapping of the elements constituting the sulfide solid electrolyte with respect to the mapping of the elements constituting the electrode active material in the binarized image with the threshold value calculated by the discriminant analysis method is shown by $A \times (1-\alpha)/\alpha$ (wherein $\alpha$ represents the fraction of the electrode active material).

The overlap area ratio of the mapping of the elements constituting the sulfide solid electrolyte with respect to the mapping of the elements constituting the electrode active material can be used as an index of the contact state of the electrode active material and the sulfide solid electrolyte since the positional relationship of the elements constituting the sulfide solid electrolyte covering the electrode active material can be comprehended, and in general, there is a tendency that with a higher overlap area ratio, the contact state is enhanced, and the battery capability is enhanced.

The overlap area ratio is preferably 0.060 or more, more preferably 0.080 or more, further preferably 0.090 or more, and still further preferably 0.10 or more, and the upper limit thereof is preferably 0.80 or less, more preferably 0.70 or less, further preferably 0.60 or less, and still further preferably 0.50 or less, from the standpoint that a better battery capability is achieved by enhancing the contact state of the electrode active material and the sulfide solid electrolyte. In the case where the overlap area ratio is in the range, the electron conductivity parameter X can be easily regulated to the range of $0.30 \leq X \leq 2.10$. However, even with a value within the range, there are cases where the electron conductivity parameter X deviates from the range of $0.30 \leq X \leq 2.10$, and the contact state is deteriorated to fail to provide an excellent battery capability, for example, in the case where the sulfide solid electrolyte in flaky form is aggregated as in Comparative Example 3 described later.

In this specification, the overlap area ratio may be, for example, a value that is measured by the following method.

A specimen (e.g., the sulfide solid electrolyte or the electrode active material) is photographed with an electron microscope, such as a scanning electron microscope (SEM) or a scanning transmission electron microscope (STEM), and the electron micrograph of the specimen is subjected to elemental analysis by the energy dispersive X-ray spectroscopy (EDS) to result in a prescribed image (which may also be referred to as an EDS image), i.e., the result of the elemental analysis of the electron micrograph of the specimen with an energy dispersive X-ray spectroscopy device (EDS device), which is then subjected to a binarization process with the threshold value calculated by the discriminant analysis method (i.e., the so-called Otsu's binarization method), and mapped for the elements constituting the sulfide solid electrolyte, such as sulfur, and the elements constituting the electrode active material, such as nickel. The elements constituting the sulfide solid electrolyte preferably include a phosphorus element from the standpoint of the convenience in measurement and the like, and the elements constituting the electrode active material preferably include a transition element from the same standpoint.

The method of the binarization process of the image of the element obtained through the elemental analysis (i.e., the EDS image) may be a known method with no particular limitation, and for example, a process using OpenCV (open-source computer vision library) in Python is conveniently used. In this case, the pixel data obtained through the binarization process of the EDS image is converted to a numerical matrix by extracting the image data to a numerical matrix assuming that the case with no element existing is 0, and the case with the element existing is 255, and the elements constituting the sulfide solid electrolyte, such as a sulfur element and a phosphorus element, and the elements constituting the electrode active material, such as a nickel element, are mapped. The total number of the matrix elements of 255 included in the numerical matrix is calculated as the pixels having the elements constituting the electrode active material existing therein, the total number of the matrix elements of overlapping 255 included in the numerical matrix is calculated as the pixels having the elements constituting the electrode active material and the elements constituting the sulfide solid electrolyte overlapping each other, and the value obtained by dividing the total numbers by one another is designated as the overlap area ratio.

The electrode composite material of the present embodiment preferably has a value A in a range of 0.55 < A < 5.0 assuming that the overlap area ratio is shown by $A \times (1-\alpha)/\alpha$ (wherein $\alpha$ represents the fraction of the electrode active material). The overlap area ratio is an index of the contact state since the positional relationship of the elements constituting the sulfide solid electrolyte covering the electrode active material can be comprehended thereby as described above, and the value A calculated from the overlap area ratio and the fraction $\alpha$ of the electrode active material can be an index capable of comprehending the appropriate covering state corresponding to the fraction in addition to the contact state since the fraction $\alpha$ is further considered thereby. Therefore, in the case where the value A is in the range, the appropriate covering state of the sulfide solid electrolyte corresponding to the fraction $\alpha$ of the electrode active material can be easily obtained, and thereby the dispersion state and the contact state can be enhanced to provide an excellent battery capability.

From the same standpoint, the value A is preferably 0.60 or more, more preferably 0.65 or more, further preferably 0.7 or more, and still further preferably 0.75 or more, and the upper limit thereof is preferably 4.8 or less, more preferably 4.7 or less, further preferably 4.6 or less, and still further preferably 4.5 or less.

The electron conductivity parameter X can be regulated by the kinds of the sulfide solid electrolyte and the electrode active material contained in the electrode composite material, i.e., the electron conductivities corresponding to the kinds thereof, and the configuration thereof, such as the mixing ratio. The overlap area ratio, which is a preferred property, can also be regulated in the similar manner.

Preferred configurations for satisfying the electron conductivity parameter X in a range of $0.30 \leq X \leq 2.10$, and for satisfying the overlap area ratio, which is a preferred property, will be described below.

[Sulfide Solid Electrolyte]

The sulfide solid electrolyte used in the present embodiment will be described.

The sulfide solid electrolyte used in the electrode composite material of the present embodiment may be any of an amorphous sulfide solid electrolyte and a crystalline sulfide solid electrolyte, and a crystalline sulfide solid electrolyte is preferred from the standpoint of the battery characteristics.

The sulfide solid electrolyte used in the present embodiment contains at least a sulfur element, preferably contains a lithium element as an element for exhibiting an ionic conductivity, preferably contains a phosphorus element from the standpoint of the enhancement of the ionic conductivity, and more preferably contains a halogen element from the standpoint of the enhancement of the ionic conductivity.

The sulfide solid electrolyte that is preferably used in the present embodiment is preferably a crystalline sulfide solid electrolyte, and preferably contains a thio-LISICON Region II-type crystal structure. With the crystal structure contained, the sulfide solid electrolyte can be a solid electrolyte having a high ionic conductivity, and an electrode composite material having excellent battery characteristics can be obtained.

The blending ratio of the elements will be described in detail in the production method of the sulfide solid electrolyte described later, and the blending ratio (molar ratio) of lithium element/sulfur element/phosphorus element/halogen element is preferably (1.0 to 1.8)/(1.0 to 2.0)/(0.1 to 0.8)/(0.01 to 0.6), more preferably (1.1 to 1.7)/(1.2 to 1.8)/(0.2 to 0.6)/(0.05 to 0.5), and further preferably (1.2 to 1.6)/(1.3 to 1.7)/(0.25 to 0.5)/(0.08 to 0.4).

In the case a combination of bromine and iodine is used as the halogen element, the blending ratio (molar ratio) of lithium element/sulfur element/phosphorus element/bromine/iodine is preferably (1.0 to 1.8)/(1.0 to 2.0)/(0.1 to 0.8)/(0.01 to 0.3)/(0.01 to 0.3), more preferably (1.1 to 1.7)/(1.2 to 1.8)/(0.2 to 0.6)/(0.02 to 0.25)/(0.02 to 0.25), further preferably (1.2 to 1.6)/(1.3 to 1.7)/(0.25 to 0.5)/(0.03 to 0.2)/(0.03 to 0.2), and still further preferably (1.35 to 1.45)/(1.4 to 1.7)/(0.3 to 0.45)/(0.04 to 0.18)/(0.04 to 0.18). In the case where the blending ratio (molar ratio) of the lithium element, the sulfur element, the phosphorous element, and the halogen element is in the range, a solid electrolyte having a thio-LISICON Region II-type crystal structure and having a higher ionic conductivity can be easily obtained.

The sulfide solid electrolyte used in the present embodiment preferably has a volume based average particle diameter measured by a laser diffraction particle size distribution measuring method (which may be hereinafter referred simply to as an "average particle diameter") of 3 $\mu$m or more and a specific surface area measured by a BET method (which may be hereinafter referred simply to as a "specific surface area") of 20 $m^2/g$ or more. With these properties, the electron conductivity parameter X can be easily within a range of $0.30 \leq X \leq 2.10$, the dispersion state and the contact state of the sulfide solid electrolyte covering the surface of the electrode active material can be enhanced, and the appropriate covering state corresponding to the fraction can be obtained, facilitating a high battery capability.

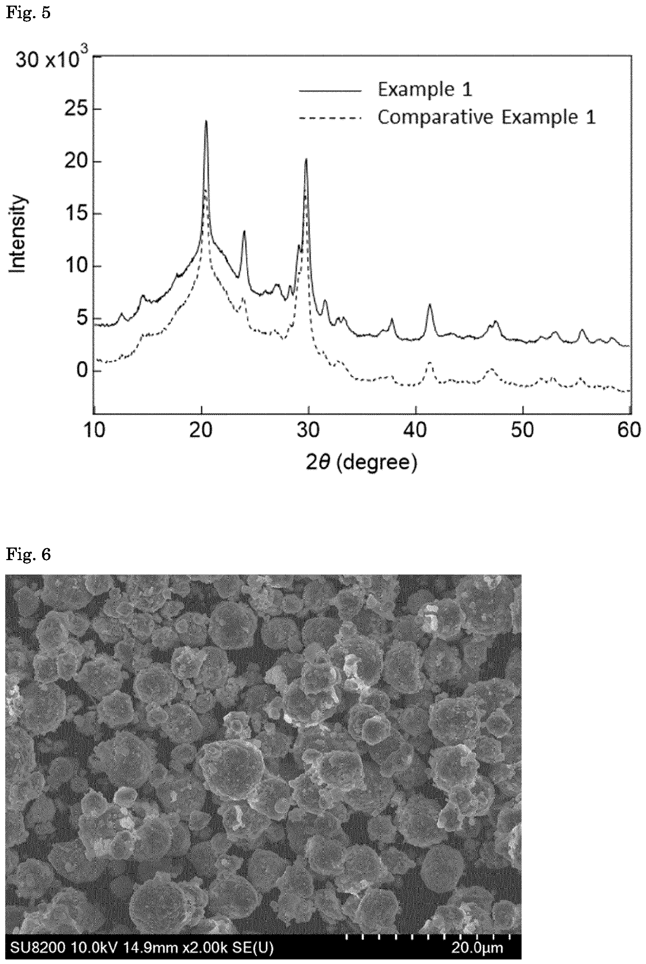

The crystalline sulfide solid electrolyte used in the present embodiment preferably has a considerably large specific surface area of 20 $m^2/g$ or more while having the certain average particle diameter or more. This means the structure including secondary particles formed through aggregation of fine primary particles having high crystallinity. The good contact with the active material can be formed through the structure of the solid electrolyte, and thereby the electrode composite material capable of exhibiting a high battery capability can be easily obtained. Specifically, the sulfide solid electrolyte used in the present embodiment is easily cracked to primary particles on the crystal surface thereof through collision with the active material in forming the electrode composite material by mixing with the active material. At this time, it is considered that the necking among the primary particles is broken to form a freshly formed surface, to which the active material is attached. The good contact with the active material is formed through the large Van der Waals' forces due to the fine particles. This phenomenon can also be comprehended from the SEM image of the sulfide solid electrolyte as one example of the present embodiment, in which the state where the extremely fine solid electrolyte is dispersed on the surface of the active material is observed (Fig. 6). As described above, with the aforementioned properties of the sulfide solid electrolyte, the excellent contact state with the electrode active material can be obtained to provide an excellent battery capability, without the aggregation of the sulfide solid electrolyte in flaky form as in Comparative Example 3 described later.

The sulfide solid electrolyte used in the present embodiment preferably has a volume based average particle diameter measured by a laser diffraction particle size distribution measuring method of 3 um or more. From the standpoint of the enhancement of the battery capability, the average particle diameter is preferably 4 $\mu$m or more, more preferably 5 $\mu$m or more, and further preferably 7 pm or more, and the upper limit thereof is preferably 150 $\mu$m or less, more

preferably 125 $\mu$m or less, further preferably 100 $\mu$m or less, and still further preferably 50 $\mu$m or less. The sulfide solid electrolyte tends to deteriorate through reaction with water in the air or the like. In the present embodiment, since the solid electrolyte has a large average particle diameter before cracking, the deterioration through reaction with water or the like can be prevented until the formation of the electrode composite material. Furthermore, the bulk density thereof can be large, which is advantageous in transportation.

In this specification, the volume based average particle diameter measured by a laser diffraction particle size distribution measuring method is a particle diameter to reach 50% of all the particles in sequential cumulation from the smallest particles in drawing the particle diameter distribution cumulative curve, and the volume distribution is concerned with an average particle diameter which can be, for example, measured with a laser diffraction/scattering particle diameter distribution measurement device. In this specification, the average particle diameter may also be referred to as an "average particle diameter ($D_{50}$)".

The average particle diameter may be measured, for example, in the following manner.

Firstly, 110 mL of toluene (produced by Wako Pure Chemical Industries, Ltd., product name: guaranteed reagent) having been dehydrated is placed in a dispersion tank of a laser diffraction particle size distribution measurement device, and 6% of tert-butyl alcohol (produced by Wako Pure Chemical Industries, Ltd., guaranteed reagent) having been dehydrated is further added as a dispersant.

After sufficiently mixing the aforementioned mixture, the dried sulfide solid electrolyte is added and measured for the particle diameter. The amount of the dried sulfide solid electrolyte added is regulated in such a manner that on the operation panel of the measurement device, the laser scattering intensity corresponding to the particle concentration falls in the prescribed range (10 to 20%). If the amount exceeds the range, there is a concern that multiple scattering occurs to fail to measure the accurate particle diameter distribution. If the amount is less than the range, there is a concern that the SN ratio is deteriorated to fail to measure accurately. In some measurement devices, the laser scattering intensity is displayed based on the amount of the "dried sulfide solid electrolyte" added, and the addition amount falling in the aforementioned laser scattering intensity may be found.

The amount of the "dried sulfide solid electrolyte" added may vary depending on the kind of the metal salt, the particle diameter, and the like, and is approximately 0.005 g to 0.05 g.

The sulfide solid electrolyte preferably has a specific surface area measured by a BET method of 20 m$^2$/g or more. From the standpoint of the enhancement of the battery capability, the specific surface area is more preferably 21 m$^2$/g or more, further preferably 23 m$^2$/g or more, still further preferably 25 m$^2$/g or more, and particularly preferably 27 m$^2$/g or more, and the upper limit thereof is preferably 70 m$^2$/g or less, more preferably 60 m$^2$/g or less, further preferably 50 m$^2$/g or less, and still further preferably 35 m$^2$/g or less.

In this specification, the specific surface area is a value measured by the BET method (gas adsorption method), in which the gas used may be nitrogen (nitrogen method) or krypton (krypton method), and may be appropriately selected for the measurement depending on the extent of the specific surface area. The specific surface area may be measured, for example, with a commercially available device, such as a gas adsorption amount measurement device (e.g., AUTOSORB 6 (produced by Sysmex Corporation)).

The sulfide solid electrolyte used in the present embodiment preferably has a full width at half maximum peak including the background in 2$\theta$ = 10 to 40° in the X-ray diffractometry using CuK$\alpha$ radiation of $\Delta 2\theta$ = 0.75° or less. According to the property thereof, the sulfide solid electrolyte has a higher ionic conductivity, and the battery capability is enhanced. By increasing the crystallinity of the primary particles, the solid electrolyte is cracked on the crystal surface into primary particles due to collision with the active material in mixing with the active material to provide the electrode composite material, and the solid electrolyte is dispersed in the electrode composite material. Accordingly, the electron conductivity parameter X can be easily within a range of $0.30 \leq X \leq 2.10$, the dispersion state and the contact state of the sulfide solid electrolyte covering the surface of the electrode active material can be enhanced, and the appropriate covering state corresponding to the fraction can be obtained, facilitating a high battery capability. The half-value width will be described in detail in the production method of the sulfide solid electrolyte used in the present embodiment.

(Electrode Active Material)

The electrode active material contained in the electrode composite material of the present embodiment may be a positive electrode active material or a negative electrode active material depending on the fact that the electrode composite material is used in a positive electrode or a negative electrode, respectively. In the present embodiment, the sulfide solid electrolyte is preferably used as a positive electrode by combining a positive electrode active material from the standpoint of the enhancement of the battery capability. Accordingly, the electrode active material contained in the electrode composite material of the present embodiment is preferably a positive electrode active material.

As the positive electrode active material, any material can be used without particular restrictions as far as it may promote a battery chemical reaction accompanied by transfer of a lithium ion caused due to the lithium element to be preferably adopted as an element capable of revealing the ionic conductivity in the present embodiment in relation to the negative electrode active material. Examples of such a positive electrode active material in and from which a lithium ion can be inserted and released include an oxide-based positive electrode active material and a sulfide-based positive electrode active material, and an oxide-based positive electrode active material is preferred.

The oxide-based positive electrode active material is preferably a lithium-containing transition metal complex oxide, that is the electrode active material used in the present embodiment preferably contains a transition element as a constitutional element thereof. Preferred examples of the transition metal contained in the complex oxide include a manganese element, a cobalt element, a nickel element, an iron element, a titanium element, a zirconium element, a tungsten element, a molybdenum element, a copper element, a chromium element, a tantalum element, a vanadium element, and a niobium element, and among these, one kind or a combination of multiple kinds thereof may be used. Preferred examples of the preferred element other than the transition element include Group 12 elements, which are representative elements, and among these, a zinc element is preferred.

Examples of the lithium-containing transition metal complex oxide include LMO (lithium manganese oxide), LCO (lithium cobalt oxide), NMC (lithium nickel manganese cobalt oxide), NCA (lithium nickel cobalt aluminum oxide), LNCO (lithium nickel cobalt oxide), and an olivine type compound ($LiMeNPO_4$:Me = Fe, Co, Ni, or Mn).

Examples of the sulfide-based positive electrode active material include titanium sulfide ($TiS_2$), molybdenum sulfide ($MoS_2$), iron sulfide (FeS and $FeS_2$), copper sulfide (CuS), and nickel sulfide ($Ni_3S_2$).

Besides the aforementioned positive electrode active materials, niobium selenide (NbSes) and the like can also be used.

In the present embodiment, the positive electrode active material can be used alone or in combination of plural kinds thereof.

As the negative electrode active material, any material can be used without particular restrictions as long as it may promote a battery chemical reaction accompanied by transfer of a lithium ion caused preferably due to the lithium element, such as an element which is preferably adopted as an element revealing the ionic conductivity in the present embodiment, and preferably a metal capable of forming an alloy together with the lithium element, an oxide thereof, and an alloy of the foregoing metal and the lithium element. As such a negative electrode active material in and from which a lithium ion can be inserted and released, any material which is known as the negative electrode active material in the battery field can be adopted without restrictions.

Examples of such a negative electrode active material include metallic lithium or a metal capable of forming an alloy together with metallic lithium, such as metallic lithium, metallic indium, metallic aluminum, metallic silicon, and metallic tin; an oxide of such a metal; and an alloy of such a metal and metallic lithium.

The electrode active material which is used in the present embodiment may also be one having a coating layer whose surface is coated.

Examples of the material which forms the coating layer include ionic conductors, such as nitrides or oxides of an element revealing the ionic conductivity in the sulfide solid electrolyte to be used in the present embodiment, preferably a lithium element, or complexes thereof. Specifically, examples thereof include lithium nitride ($Li_3N$); a conductor having a LISICON type crystal structure composed of, as a main structure, $Li_4GeO_4$, for example, $Li_{4-2x}Zn_xGeO_4$; a conductor having an $Li_3PO_4$ type skeleton structure, for example, a thio-LISICON type crystal structure, such as $Li_{4-x}Ge_{1-x}P_xS_4$; a conductor having a perovskite type crystal structure, such as $La_{2/3-x}Li_{3x}TiO_3$; and a conductor having an NASICON type crystal structure, such as $LiTi_2(PO_4)_3$.

In addition, examples thereof include lithium titanium oxide, such as $Li_yTi_{3-y}O_4$ (0 < y < 3) and $Li_4Ti_5O_{12}$ (LTO); lithium metal oxide of a metal belonging to the Group 5 of the periodic table, such as $LiNbO_3$ and $LiTaO_3$; and oxide-based conductors, such as $Li_2O$-$B_2O_3$-$P_2O_5$-based, $Li_2O$-$B_2O_3$-ZnO-based, and $Li_2O$-$Al_2O_3$-$SiO_2$-$P_2O_5$-$TiO_2$-based materials.

The electrode active material having a coating layer is, for example, obtained by attaching a solution containing various elements constituting a material for forming the coating layer onto the surface of the electrode active material and burning the electrode active material after attachment preferably at 200°C or higher and 400°C or lower.

Here, as the solution containing various elements, a solution containing an alkoxide of a metal of every sort, such as lithium ethoxide, titanium isopropoxide, niobium isopropoxide, and tantalum isopropoxide, may be used. In this case, as the solvent, an alcohol-based solvent, such as ethanol and butanol; an aliphatic hydrocarbon solvent, such as hexane, heptane, and octane; an aromatic hydrocarbon solvent, such as benzene, toluene, and xylene; and the like may be used.

The aforementioned attachment may be performed through dipping, spray coating, or the like.

From the viewpoint of enhancing the production efficiency and the battery capability, a burning temperature is preferably 200°C or higher and 400°C or lower as mentioned above, and more preferably 250°C or higher and 390°C or lower, and a burning time is typically about 1 minute to 10 hours, and preferably 10 minutes to 4 hours.

The coverage of the coating layer on a basis of a surface area of the electrode active material is preferably 90% or more, more preferably 95% or more, and still more preferably 100%, namely it is preferred that the entire surface is coated. The electrode composite material of the present embodiment has a large fraction $\alpha$ of the electrode active material and the appropriate covering state corresponding to the fraction α, and is excellent in dispersion state and contact state of the sulfide solid electrolyte on the surface of the electrode active material, providing excellent battery characteristics, as described above. In addition, a thickness of the coating layer is preferably 1 nm or more, and more preferably 2 nm or more, and an upper limit thereof is preferably 30 nm or less, and more preferably 25 nm or less.

The thickness of the coating layer can be measured through cross-sectional observation with a transmission electron microscope (TEM), and the coverage can be calculated from the thickness, the elemental analysis value, and the BET surface area of the coating layer.

The sulfide solid electrolyte used in the present embodiment may be a mechanically treated material thereof, and the electrode composite material of the present embodiment may contain a mechanically treated material of the sulfide solid electrolyte, and the electrode active material. Accordingly, the sulfide solid electrolyte used in the electrode composite material of the present embodiment may be the sulfide solid electrolyte described above, or may be the mechanically treated material thereof obtained by subjecting to a mechanical treatment.

The volume based average particle diameter of the mechanically treated material of the sulfide solid electrolyte, which may be regulated depending on desire, is generally 0.05 μm or more, preferably 0.07 um or more, more preferably 0.1 pm or more, and further preferably 0.15 μm or more, and the upper limit thereof is generally 50 μm or less, preferably 30 μm or less, more preferably 20 μm or less, further preferably 15 μm or less, and still further preferably 10 μm or less. In the present embodiment, the mechanically treated material of the sulfide solid electrolyte has a smaller average particle diameter than the sulfide solid electrolyte before subjecting to the mechanical treatment, and therefore the cracked material of the crystalline sulfide solid electrolyte, in which the mechanical treatment is cracking, is preferred.

The specific surface area of the mechanically treated material of the sulfide solid electrolyte may be regulated depending on desire, and is generally 0.1 m$^2$/g or more, preferably 0.3 m$^2$/g or more, more preferably 0.5 m$^2$/g or more, and further preferably 1 m$^2$/g or more, and the upper limit thereof is generally 70 m$^2$/g or less, preferably 50 m$^2$/g or less, more preferably 45 m$^2$/g or less, and further preferably 40 m$^2$/g or less.

The method of subjecting the sulfide solid electrolyte to the mechanical treatment will be described in detail in the method for producing the sulfide solid electrolyte described later.

The mixture of the mechanically treated material of the sulfide solid electrolyte and the electrode active material, which is the electrode composite material of the present embodiment, can be obtained by mixing the sulfide solid electrolyte and the electrode active material, or by mixing the mechanically treated material of the sulfide solid electrolyte and the electrode active material. The method for mixing the materials will be described in detail in the method for producing the electrode composite material described later.

(Other Components)

The electrode composite material of the present embodiment may contain other components, such as a conductive material and a binder, in addition to the sulfide solid electrolyte and the electrode active material.

Examples of the conductive material include a carbonaceous material, such as artificial graphite, graphite carbon fibers, resin baked carbon, pyrolyzed vapor-grown carbon, coke, meso-carbon microbeads, furfuryl alcohol resin baked carbon, polyacene, pitch-based carbon fibers, vapor-grown carbon fibers, natural graphite, and non-graphitizable carbon, from the standpoint of the enhancement of the battery capability by enhancing the electronic conductivity.

The use of the binder enhances the strength in production of a positive electrode and a negative electrode.

The binder is not particularly limited as far as it can impart functions, such as the binding capability and the flexibility, and examples thereof include a fluorine-based polymer, such as polytetrafluoroethylene and polyvinylidene fluoride, a thermoplastic elastomer, such as butylene rubber and styrenebutadiene rubber, and various resins, such as an acrylic resin, an acrylic polyol resin, a polyvinyl acetal resin, a polyvinyl butyral resin, and a silicone resin.

It suffices that the blending ratio (mass ratio) of the electrode active material and the sulfide solid electrolyte in the electrode composite material in the electrode composite material of the present embodiment is such a blending ratio that provides the fraction α of the electrode active material described above. In Examples described later, the blending ratio is 90/10 (which corresponds to a fraction α of the electrode active material of 0.90). This is because the change in rate characteristics is likely to occur with a relatively larger amount of the active material, and therefore the measurement is performed with a blending ratio that particularly manifests the difference in property of the solid electrolytes in the composite materials. Therefore, the blending ratio is not limited to 90/10 (which corresponds to a fraction α of the electrode active material of 0.90), and may be optimized within the aforementioned range.

The electrode composite material of the present embodiment has a significantly high coverage of 90% or more as described above, whereas the amount of the sulfide solid electrolyte used is as small as, for example, 90/10 (which corresponds to a fraction α of the electrode active material of 0.90) employed in Examples, and the appropriate covering state corresponding to the fraction is achieved. With the appropriate covering state corresponding to the fraction in this manner, the excellent dispersion state and contact state of the sulfide solid electrolyte on the surface of the electrode active material are achieved to provide excellent battery characteristics. It can be said that the achievement of the electron conductivity parameter X within the prescribed range of the electrode composite material of the present embodiment means the achievement of the appropriate covering state of the sulfide solid electrolyte on the surface of the electrode active material corresponding to the fraction of the electrode active material as described above.

In the case where the conductive material is contained, the content of the conductive material in the electrode composite material is not particularly restricted, and is preferably 0.5% by mass or more, more preferably 1% by mass or more, and further preferably 1.5% by mass or more, and the upper limit thereof is preferably 10% by mass or less, more preferably 8% by mass or less, and further preferably 5% by mass or less, in consideration of the enhancement of the battery capability and the production efficiency.

In the case where the binder is contained, the content of the binder in the electrode composite material is not particularly restricted, and is preferably 1% by mass or more, more preferably 3% by mass or more, and further preferably 5% by mass or more, and the upper limit thereof is preferably 20% by mass or less, more preferably 15% by mass or less, and further preferably 10% by mass or less, in consideration of the enhancement of the battery capability and the production efficiency.

The electrode composite material of the present embodiment exhibits a high battery capability, and is preferably used for the formation of a positive electrode layer, a negative electrode layer, and an electrolyte layer, particularly a positive electrode layer and a negative electrode layer, of an all-solid-state lithium battery. These layers may be produced by known methods.

The all-solid-state lithium battery preferably includes a collector, in addition to the positive electrode layer, the negative electrode layer, and the electrolyte layer, and a known collector may be used. Examples thereof used include a layer of a material that reacts with the solid electrolyte, such as Au, Pt, Al, Ti, or Cu, coated with Au or the like.

[Method for producing Electrode Composite Material]

The electrode composite material of the present embodiment can be produced, for example, by a production method including mixing the sulfide solid electrolyte and the electrode active material.

The sulfide solid electrolyte and the electrode active material used in the method for producing an electrode composite material have been described above, the blending ratio (mass ratio) and the embodiments and the like thereof have also been described above.

(Production of Sulfide Solid Electrolyte)

The sulfide solid electrolyte used in the present embodiment can be produced, for example, by the following production method.

The production method of the sulfide solid electrolyte used in the present embodiment preferably includes mixing a raw material inclusion that preferably contains a lithium element exhibiting the ionic conductivity and a phosphorus element enhancing the ionic conductivity, and more preferably contains a halogen element, and a complexing agent, in addition to a sulfur element.

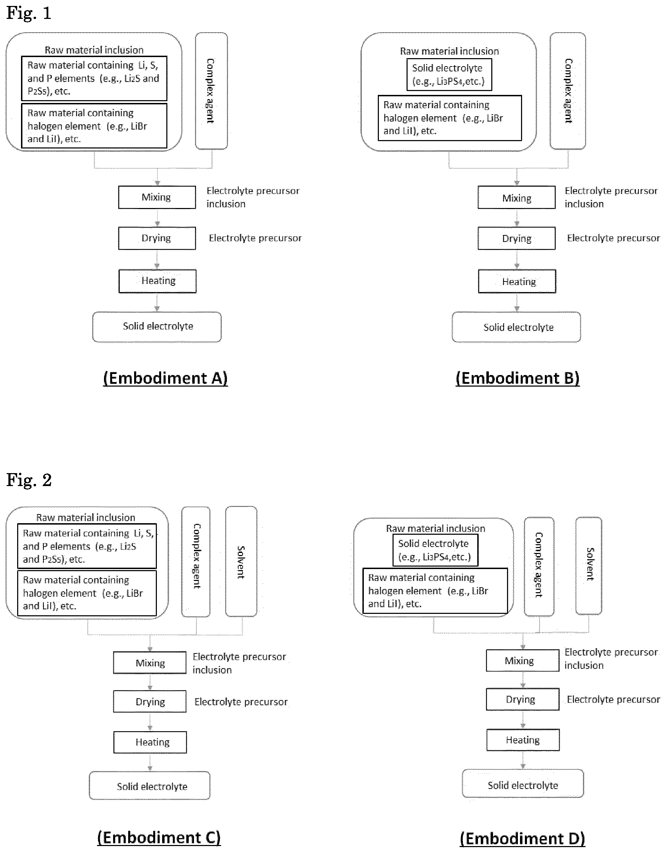

The production method of the sulfide solid electrolyte used in the present embodiment includes the following four embodiments depending upon whether or not a solid electrolyte, such as $Li_3PS_4$, is used as the raw material, and whether or not a solvent is used. Examples of preferred embodiments of these four embodiments are shown in Fig. 1 (Embodiments A and B) and Fig. 2 (Embodiments C and D). The present production method preferably includes: a production method of using raw materials, such as lithium sulfide and diphosphorus pentasulfide, and a complexing agent (Embodiment A); a production method of using raw materials, such as $Li_3PS_4$, as the electrolyte main structure and a complexing agent (Embodiment B); a production method of adding a solvent to the raw materials, such as lithium sulfide, and the complexing agent in the aforementioned Embodiment A (Embodiment C); and a production method of adding a solvent to the raw materials, such as $Li_3PS_4$, and the complexing agent in the aforementioned Embodiment B (Embodiment D).

The Embodiments A to D are described in this order below.

(Embodiment A)

As shown in Fig. 1, the Embodiment A is an embodiment using a raw material, such as lithium sulfide and diphosphorus pentasulfide, in the production method including mixing the raw material inclusion containing a lithium element, a sulfur element, and a phosphorus element, and preferably further containing a halogen element, with the complexing agent. By mixing the raw material inclusion with the complexing agent, in general, an electrolyte precursor inclusion that is a suspension is obtained, and by drying it, the electrolyte precursor is obtained. Furthermore, by heating the electrolyte precursor, an amorphous solid electrolyte or a crystalline solid electrolyte is obtained. In addition, while not illustrated, it is preferred that the electrolyte precursor is pulverized before heating, and an electrolyte precursor pulverized product obtained through pulverization is heated. That is, the present production method preferably includes mixing; pulverization of the electrolyte precursor obtained through mixing; and heating of the electrolyte precursor pulverized product obtained through pulverization.

While the description is hereunder made beginning from Embodiment A, one described with the wordings "of the present embodiment" is a matter applicable even in other embodiments.

(Raw Material Inclusion)

The raw material inclusion which is used in the present embodiment is one containing a lithium element, a sulfur element, and a phosphorus element, and preferably further containing a halogen element.

As the raw materials to be contained in the raw material inclusion, for example, a compound containing at least one of a lithium element, a sulfur element, and a phosphorus element, and preferably further containing a halogen element can be used. More specifically, representative examples of the foregoing compound include raw materials composed of at least two elements selected from the aforementioned four elements, such as lithium sulfide; lithium halides, e.g., lithium fluoride, lithium chloride, lithium bromide, and lithium iodide; phosphorus sulfides, e.g., diphosphorus trisulfide ($P_2S_3$) and diphosphorus pentasulfide ($P_2S_5$); phosphorus halides, e.g., various phosphorus fluorides (e.g., $PF_3$ and $PF_5$), various phosphorus chlorides (e.g., $PCl_3$, $PCl_5$, and $P_2Cl_4$), various phosphorus bromides (e.g., $PBr_3$ and $PBr_5$), and various phosphorus iodides (e.g., $PI_3$ and $P_2I_4$); and thiophosphoryl halides, e.g., thiophosphoryl fluoride ($PSF_3$), thiophosphoryl chloride ($PSCl_3$), thiophosphoryl bromide ($PSBr_3$), thiophosphoryl iodide ($PSI_3$), thiophosphoryl dichlorofluoride ($PSCl_2F$), and thiophosphoryl dibromofluoride ($PSBr_2F$), as well as halogen simple substances, such as fluorine ($F_2$), chlorine ($Cl_2$), bromine ($Br_2$), and iodine ($I_2$), with chlorine ($Cl_2$), bromine ($Br_2$), and iodine ($I_2$) being preferred, and bromine ($Br_2$) and iodine ($I_2$) being more preferred.

As materials which may be used as the raw material other than those mentioned above, a compound containing not only at least one element selected from the aforementioned four elements but also other element than the foregoing four elements can be used. More specifically, examples thereof include lithium compounds, such as lithium oxide, lithium hydroxide, and lithium carbonate; alkali metal sulfides, such as sodium sulfide, potassium sulfide, rubidium sulfide, and cesium sulfide; metal sulfides, such as silicon sulfide, germanium sulfide, boron sulfide, gallium sulfide, tin sulfide (e.g., SnS and $SnS_2$), aluminum sulfide, and zinc sulfide; phosphoric acid compounds, such as sodium phosphate and lithium phosphate; halide compounds of an alkali metal other than lithium, such as sodium halides, e.g., sodium iodide, sodium fluoride, sodium chloride, and sodium bromide; metal halides, such as an aluminum halide, a silicon halide, a germanium halide, an arsenic halide, a selenium halide, a tin halide, an antimony halide, a tellurium halide, and a bismuth halide; and phosphorus oxyhalides, such as phosphorus oxychloride ($POCl_3$) and phosphorus oxybromide ($POBr_3$).

In the Embodiment A, among them, phosphorus sulfides, such as lithium sulfide, diphosphorus trifluoride ($P_2S_3$), and diphosphorus pentasulfide ($P_2S_5$); halogen simple substances, such as fluorine ($F_2$), chlorine ($Cl_2$), bromine ($Br_2$), and iodine ($I_2$); and lithium halides, such as lithium fluoride, lithium chloride, lithium bromide, and lithium iodide are preferred as the raw material from the viewpoint of more easily obtaining a solid electrolyte having a high ionic conductivity in addition to the prescribed average particle diameter and specific surface area. Preferred examples of a combination of raw materials include a combination of lithium sulfide, diphosphorus pentasulfide, and a lithium halide; and a combination of lithium sulfide, diphosphorus pentasulfide, and a halogen simple substance, in which the lithium halide is preferably lithium bromide or lithium iodide, and the halogen simple substance is preferably bromine or iodine.

The lithium sulfide which is used in the Embodiment A is preferably a particle.

An average particle diameter ($D_{50}$) of the lithium sulfide particle is preferably 10 μm or more and 2,000 μm or less, more preferably 30 μm or more and 1,500 μm or less, and still more preferably 50 μm or more and 1,000 μm or less. In this specification, the average particle diameter ($D_{50}$) is a particle diameter to reach 50% of all the particles in sequential cumulation from the smallest particles in drawing the particle diameter distribution cumulative curve, and the volume distribution is concerned with an average particle diameter which can be, for example, measured with a laser diffraction/scattering particle diameter distribution measurement device. In addition, among the above-exemplified raw materials, the solid raw material is preferably one having an average particle diameter of the same degree as in the aforementioned lithium sulfide particle, namely one having an average particle diameter falling within the same range as in the aforementioned lithium sulfide particle is preferred.

In the case of using lithium sulfide, diphosphorus pentasulfide, and the lithium halide as the raw materials, from the viewpoint of obtaining higher chemical stability and a higher ionic conductivity, a proportion of lithium sulfide relative to the total of lithium sulfide and diphosphorus pentasulfide is preferably 70 to 80 mol%, more preferably 72 to 78 mol%, and still more preferably 74 to 76 mol%.

In the case of using lithium sulfide, diphosphorus pentasulfide, a lithium halide, and other raw material to be optionally used, the content of lithium sulfide and diphosphorus pentasulfide relative to the total of the aforementioned raw materials is preferably 60 to 100 mol%, more preferably 65 to 90 mol%, and still more preferably 70 to 80 mol%.

In the case of using a combination of lithium bromide and lithium iodide as the lithium halide, from the viewpoint of enhancing the ionic conductivity, a proportion of lithium bromide relative to the total of lithium bromide and lithium iodide is preferably 1 to 99 mol%, more preferably 20 to 90 mol%, still more preferably 40 to 80 mol%, and especially preferably 50 to 70 mol%.

In the case of using not only a halogen simple substance but also lithium sulfide and diphosphorus pentasulfide as the raw materials, a proportion of the molar number of lithium sulfide excluding lithium sulfide having the same molar number as the molar number of the halogen simple substance relative to the total molar number of lithium sulfide and diphosphorus pentasulfide excluding lithium sulfide having the same molar number as the molar number of the halogen simple substance falls preferably within a range of 60 to 90%, more preferably within a range of 65 to 85%, still more preferably within a range of 68 to 82%, yet still more preferably within a range of 72 to 78%, and even yet still more preferably within a range of 73 to 77%. This is because when the foregoing proportion falls within the aforementioned ranges, a higher ionic conductivity is obtained. In addition, in the case of using lithium sulfide, diphosphorus pentasulfide, and a halogen simple substance, from the same viewpoint, the content of the halogen simple substance relative to the total amount of lithium sulfide, diphosphorus pentasulfide, and the halogen simple substance is preferably 1 to 50 mol%, more preferably 2 to 40 mol%, still more preferably 3 to 25 mol%, and yet still more preferably 3 to 15 mol%.

In the case of using lithium sulfide, diphosphorus pentasulfide, a halogen simple substance, and a lithium halide, the content ($\alpha$ mol%) of the halogen simple substance and the content ($\beta$ mol%) of the lithium halide relative to the total of the aforementioned raw materials preferably satisfy the following expression (2), more preferably satisfy the following expression (3), still more preferably satisfy the following expression (4), and yet still more preferably satisfy the following expression (5).

$$2 \leq (2\alpha + \beta) \leq 100 \qquad (2)$$

$$4 \leq (2\alpha + \beta) \leq 80 \qquad (3)$$

$$6 \leq (2\alpha + \beta) \leq 50 \qquad (4)$$

$$6 \leq (2\alpha + \beta) \leq 30 \qquad (5)$$

In the case of using two halogen simple substances, when the molar number in the substance of the halogen element of one side is designated as A1, and the molar number in the substance of the halogen element of the other side is designated as A2, an A1/A2 ratio is preferably (1 to 99)/(99 to 1), more preferably 10/90 to 90/10, still more preferably 20/80 to 80/20, and yet still more preferably 30/70 to 70/30.

In the case where the two halogen simple substances are bromine and iodine, when the molar number of bromine is designated as B1, and the molar number of iodine is designated as B2, a B1/B2 ratio is preferably (1 to 99)/(99 to 1), more preferably 15/85 to 90/10, still more preferably 20/80 to 80/20, yet still more preferably 30/70 to 75/25, and especially preferably 35/65 to 75/25.

(Complexing Agent)

In the present embodiment, a complexing agent is used. The complexing agent as referred to in this specification is a substance capable of forming a complex together with the lithium element and means one having such properties of acting with the lithium element-containing sulfide and the halide, and the like contained in the aforementioned raw materials, thereby promoting formation of the electrolyte precursor.

As the complexing agent, any material can be used without being particularly restricted as long as it has the aforementioned properties, and in particular, a compound containing an element having high affinity to a lithium element, for example, a hetero element, such as a nitrogen element, an oxygen element, and a chlorine element, is preferred, with a compound having a group containing the hetero element being more preferred. This is because the hetero element and the group containing the hetero element are easily coordinated (bound) with lithium.

The complexing agent may be considered that the hetero element in the molecule has a high affinity with the lithium element, and the complexing agent has such properties of binding with the lithium-containing structure which is existent as a main structure in the solid electrolyte obtained by the present production method, such as $Li_3PS_4$ containing representatively a $PS_4$ structure, and the lithium-containing raw materials that are preferably used, such as a lithium halide, thereby easily forming an aggregate. For that reason, since by mixing the aforementioned raw material inclusion and the complexing agent, an aggregate via the lithium-containing structure, such as a $PS_4$ structure, or the complexing agent, and an aggregate via the lithium-containing raw material, such as a lithium halide, or the complexing agent are evenly existent, whereby an electrolyte precursor in which the halogen element is more likely dispersed and fixed is obtained, as a result, it may be considered that a solid electrolyte having a high ionic conductivity, in which the generation of hydrogen sulfide is suppressed, is obtained. It may be also considered that the prescribed average particle diameter and specific surface area can be easily obtained. In the production method of the present embodiment, the reason why the complexing agent is used is as described above, and the reason why the halogen element is preferably used is the same as above. Specifically, a solid electrolyte having a high ionic conductivity and suppressed in generation of hydrogen sulfide is obtained, and the prescribed average particle diameter and specific surface area can be easily obtained.

Accordingly, the complexing agent preferably has at least two hetero elements capable of coordinating (binding) in the molecule, and more preferably has at least two groups containing the hetero elements in the molecule. With at least two groups containing the hetero elements contained in the molecule, the lithium-containing structure, such as $Li_3PS_4$ containing a $PS_4$ structure, and the lithium-containing raw material that is preferably used, such as a lithium halide, can be bound with each other via the at least two hetero elements in the molecule. Accordingly, the halogen element is more likely dispersed and fixed in the electrolyte precursor, and as a result, a solid electrolyte having a high ionic conductivity in addition to the prescribed average particle diameter and specific surface area, in which the generation of hydrogen sulfide is suppressed, is obtained. In the aforementioned viewpoint, a nitrogen element is preferred in the hetero elements, and an amino group is preferred as the group containing a nitrogen element, i.e., an amine compound is preferred as the complexing agent.

The amine compound is not particularly limited as long as it has an amino group in the molecule since the formation of the electrolyte precursor can be facilitated thereby, and a compound having at least two amino groups in the molecule is more preferred. In view of the fact that the complexing agent has such a structure, the lithium-containing structure, such as $Li_3PS_4$ containing a $PS_4$ structure, and the lithium-containing raw material, such as a lithium halide, can be bound with each other via at least two nitrogen elements in the molecule, the halogen element is more likely dispersed and fixed in the electrolyte precursor. As a result, a solid electrolyte having a high ionic conductivity in addition to the prescribed average particle diameter and specific surface area is obtained.

Examples of such an amine compound include amine compounds, such as aliphatic amines, alicyclic amines, heterocyclic amines, and aromatic amines, and these amine compounds can be used alone or in combination of plural kinds thereof.

More specifically, as the aliphatic amine, aliphatic diamines, for example, aliphatic primary diamines, such as ethylenediamine, diaminopropane, and diaminobutane; aliphatic secondary diamines, such as N,N'-dimethylethylenediamine, N,N'-diethylethylenediamine, N,N'-dimethyldiaminopropane, and N,N'-diethyldiaminopropane; and aliphatic tertiary diamines, such as N,N,N',N'-tetramethyldiaminomethane, N,N,N',N'-tetramethylethylenediamine, N,N,N',N'-tetraethylethylenediamine, N,N,N',N'-tetramethyldiaminopropane, N,N,N',N'-tetraethyldiaminopropane, N,N,N',N'-tetramethyldiaminobutane, N,N,N',N'-tetramethyldiaminopentane, and N,N,N',N'-tetramethyldiaminohexane, are representatively preferably exemplified. Here, in the exemplification in this specification, for example, when the diaminobutane is concerned, it should be construed that all of isomers inclusive of not only isomers regarding the position of the amino group, such as 1,2-diaminobutane, 1,3-diaminobutane, and 1,4-diaminobutane, but also linear or branched isomers and the like regarding the butane are included unless otherwise noted.

The carbon number of the aliphatic amine is preferably 2 or more, more preferably 4 or more, and still more preferably 6 or more, and an upper limit thereof is preferably 10 or less, more preferably 8 or less, and still more preferably 7 or less. In addition, the carbon number of the hydrocarbon group of the aliphatic hydrocarbon group in the aliphatic amine is preferably 2 or more, and an upper limit thereof is preferably 6 or less, more preferably 4 or less, and still more preferably 3 or less.

As the alicyclic amine, alicyclic diamines, for example, alicyclic primary diamines, such as cyclopropanediamine and cyclohexanediamine; aliphatic secondary diamines, such as bisaminomethylcyclohexane; and alicyclic tertiary diamines, such as N,N,N',N'-tetramethyl-cyclohexanediamine and bis(ethylmethylamino)cyclohexane, are representatively preferably exemplified. As the heterocyclic amine, heterocyclic diamines, for example, heterocyclic primary diamines, such as isophoronediamine; heterocyclic secondary diamines, such as piperazine and dipiperidylpropane; and heterocyclic tertiary diamines, such as N,N-dimethylpiperazine and bismethylpiperidylpropane, are representatively preferably exemplified.

The carbon number of each of the alicyclic amine and the heterocyclic amine is preferably 3 or more, and more preferably 4 or more, and an upper limit thereof is preferably 16 or less, and more preferably 14 or less.

As the aromatic amine, aromatic diamines, for example, aromatic primary diamine, such as phenyldiamine, tolylenediamine, and naphthalenediamine; aromatic secondary diamines, such as N-methylphenylenediamine, N,N'-dimethylphenylenediamine, N,N'-bismethylphenylphenylenediamine, N,N'-dimethylnaphthalenediamine, and N-naphtylethylenediamine; and aromatic tertiary diamines, such as N,N-dimethylphenylenediamine, N,N,N',N'-tetramethylphenylenediamine, N,N,N',N'-tetramethyldiaminodiphenylmethane, and N,N,N',N'-tetramethylnaphthalenediamine, are representatively preferably exemplified.

The carbon number of the aromatic amine is preferably 6 or more, more preferably 7 or more, and still more preferably 8 or more, and an upper limit thereof is preferably 16 or less, more preferably 14 or less, and still more preferably 12 or less.

The amine compound which is used in the present embodiment may also be one substituted with a substituent, such as an alkyl group, an alkenyl group, an alkoxy group, a hydroxy group, and a cyano group, or a halogen atom.

While the diamines have been exemplified as specific examples, needless to say, the amine compound which may be used in the present embodiment is not limited to the diamines, and for example, monoamines, such as aliphatic monoamines, such as trimethylamine, triethylamine, ethyldimethylamine, and aliphatic monoamines corresponding to the aforementioned diamines, such as the aliphatic diamines; piperidine compounds, such as piperidine, methylpiperidine, and tetramethylpiperidine; pyridine compounds, such as pyridine and picoline; morpholine compounds, such as morpholine, methylmorpholine and thiomorpholine; imidazole compounds, such as imidazole and methylimidazole; alicyclic monoamines, such as monoamines corresponding to the aforementioned alicyclic diamines; heterocyclic monoamines corresponding to the aforementioned heterocyclic diamines; aromatic monoamines corresponding to the aforementioned aromatic diamines; and in addition, for example, polyamines having three or more amino groups, such as diethylenetriamine, N,N',N"-trimethyldiethylenetriamine, N,N,N',N",N"-pentamethyldiethylenetriamine, triethylenetetramine, N,N'-bis [(dimethylamino)ethyl] -N, N'-dimethylethylenediamine, hexamethylenetetramine, and tetraethylenepentamine, can also be used.

Among those described above, from the viewpoint of obtaining a higher ionic conductivity in addition to the prescribed average particle diameter and specific surface area, tertiary amines having a tertiary amino group as the amino group are preferred, tertiary diamines having two tertiary amino groups are more preferred, tertiary diamines having two tertiary amino groups on the both ends are still more preferred, and aliphatic tertiary diamines having a tertiary amino group on the both ends are yet still more preferred. In the aforementioned amine compounds, as the aliphatic tertiary diamine having a tertiary amino group on both ends, tetramethylethylenediamine, tetraethylethylenediamine, tetramethyldiaminopropane, and tetraethyldiaminopropane are preferred, and in consideration of easiness of availability and the like, tetramethylethylenediamine and tetramethyldiaminopropane are preferred.

As other complexing agent than the amine compound, for example, a compound having a group containing a hetero element, such as a halogen element, e.g., an oxygen element and a chlorine element, is high in an affinity with the lithium element, and such a compound is exemplified as the other complexing agent than the amine compound. In addition, a compound having a group containing, as the hetero element, a nitrogen element other than the amino group, for example, a nitro group and an amide group, provides the same effects.

Examples of the other complexing agent include alcohol-based solvents, such as ethanol and butanol; ester-based solvents, such as ethyl acetate and butyl acetate; aldehyde-based solvents, such as formaldehyde, acetaldehyde, and dimethylformamide; ketone-based solvents, such as acetone and methyl ethyl ketone; ether-based solvents, such as diethyl ether, diisopropyl ether, dibutyl ether, tetrahydrofuran, dimethoxyethane, diethoxyethane, cyclopentyl methyl ether, tert-butyl methyl ether, and anisole; glycol ester-based solvents, such as 2-methoxyethyl acetate, 2-ethoxyethyl acetate (ethylene glycol acetate), 2-methoxy-1-methylethyl acetate (propylene glycol monomethyl ether acetate), 2-ethoxymethylethyl acetate, 2-(2-ethoxyethoxy)ethyl acetate, (2-acetoxyethoxy)methyl acetate, 1-methyl-2-ethoxyethyl acetate (propylene glycol monoethyl ether acetate), ethyl 3-methoxypropionate, ethyl 3-ethoxypropyonate, and 2-methoxyethyl 3-(2-methoxyethoxy)propionate; halogen element-containing aromatic hydrocarbon solvents, such as trifluoromethylbenzene, nitrobenzene, chlorobenzene, chlorotoluene, and bromobenzene; nitrile-based solvents, such as acetonitrile, methoxyacetonitrile, propionitrile, methoxypropionitrile, isobutyronitrile, and a benzonitrile; and solvents containing a carbon atom and a hetero atom, such as dimethyl sulfoxide and carbon disulfide. Of these, an ether-based solvent is preferred, diethyl ether, diisopropyl ether, dibutyl ether, tetrahydrofuran, dimethoxyethane, and diethoxyethane are more preferred, diethyl ether, diisopropyl ether, dibutyl ether, and diethoxyethane are further preferred, and diethoxyethane is still further preferred.

(Mixing)

As shown in the flow chart of Fig. 1, the raw material inclusion and the complexing agent are mixed. In the present embodiment, though a mode of mixing the raw material inclusion and the complexing agent to be mixed may be in any of a solid state and a liquid state, in general, the raw material inclusion contains a solid, whereas the complexing agent is in a liquid state, and therefore, in general, mixing is made in a mode in which the solid raw material inclusion is existent in the liquid complexing agent.

The content of the raw material inclusion is preferably 5 g or more, more preferably 10 g or more, still more preferably 30 g or more, and yet still more preferably 50 g or more relative to the amount of one liter of the complexing agent, and an upper limit thereof is preferably 500 g or less, more preferably 400 g or less, still more preferably 300 g or less, and yet still more preferably 250 g of less. When the content of the raw material inclusion falls within the aforementioned range, the raw material inclusion is easily mixed, the dispersing state of the raw materials is enhanced, and the reaction among the raw materials is promoted, and therefore, the electrolyte precursor and further the solid electrolyte are easily efficiently obtained.

A method for mixing the raw material inclusion and the complexing agent is not particularly restricted, and the raw materials contained in the raw material inclusion and the complexing agent may be charged in an apparatus capable of mixing the raw material inclusion and the complexing agent and mixed. For example, by feeding the complexing agent into a tank, actuating an impeller, and then gradually adding the raw materials, a favorable mixing state of the raw material inclusion is obtained, and dispersibility of the raw materials is enhanced, and thus, such is preferred.

In the case of using a halogen simple substance as the raw material, there is a case where the raw material is not a solid. Specifically, fluorine and chlorine are a gas, and bromine is a liquid under normal temperature and normal pressure. For example, in the case where the raw material is a liquid, it may be fed into the tank separately from the other solid raw materials together with the complexing agent, and in the case where the raw material is a gas, the raw material may be fed such that it is blown into the complexing agent having the solid raw materials added thereto.

The present embodiment is characterized by including mixing the raw material inclusion and the complexing agent, and the electrolyte precursor can also be produced by a method not using an instrument to be used for the purpose of pulverization of solid raw materials, which is generally called a pulverizer, such as a medium type pulverizer, e.g., a ball mill and a bead mill. According to the present production method, by merely mixing the raw material inclusion and the complexing agent, the raw materials and the complexing agent contained in the inclusion are mixed, whereby the electrolyte precursor can be formed. In view of the fact that a mixing time for obtaining the electrolyte precursor can be shortened, or atomization can be performed, the mixture of the raw material inclusion and the complexing agent may be pulverized by a pulverizer.

Examples of an apparatus for mixing the raw material inclusion and the complexing agent include a mechanical agitation type mixer having an impeller provided in a tank. Examples of the mechanical agitation type mixer include a high-speed agitation type mixer and a double arm type mixer, and a high-speed agitation type mixer is preferably used from the viewpoint of increasing the homogeneity of raw materials in the mixture of the raw material inclusion and the complexing agent and obtaining a higher ionic conductivity in addition to the prescribed average particle diameter and specific surface area. In addition, examples of the high-speed agitation type mixer include a vertical axis rotating type mixer and a horizontal axis rotating type mixer, and mixers of any of these types may be used.

Examples of a shape of the impeller which is used in the mechanical agitation type mixer include a blade type, an arm type, an anchor type, a paddle type, a full-zone type, a ribbon type, a multistage blade type, a double arm type, a shovel type, a twin-shaft blade type, a flat blade type, and a C type blade type. From the viewpoint of increasing the homogeneity of raw materials in the raw material inclusion and obtaining a higher ionic conductivity in addition to the prescribed average particle diameter and specific surface area, an anchor type, a paddle type, a full-zone type, a shovel type, a flat blade type, a C type blade type, and the like are preferred.

A temperature condition on the occasion of mixing the raw material inclusion and the complexing agent is not particularly limited, and for example, it is -30 to 100°C, preferably -10 to 50°C, and more preferably around room temperature (23°C) (for example, (room temperature) $\pm$ about 5°C). In addition, a mixing time is about 0.1 to 150 hours, and from the viewpoint of more uniformly mixing the raw material inclusion and the complexing agent and obtaining a higher ionic conductivity in addition to the prescribed average particle diameter and specific surface area, the mixing time is preferably 1 to 120 hours, more preferably 4 to 100 hours, and still more preferably 8 to 80 hours.

By mixing the raw material inclusion and the complexing agent, owing to an interaction of the lithium element, the sulfur element, and the phosphorus element, and preferably further the halogen element, all of which are contained in the raw materials, with the complexing agent, an electrolyte precursor in which these elements are bound directly with each other via and/or not via the complexing agent is obtained. That is, in the present production method, the electrolyte precursor obtained by mixing of the raw material inclusion and the complexing agent is constituted of the complexing agent, the lithium element, the sulfur element, and the phosphorus element, and preferably further the halogen element, and by mixing the raw material inclusion and the complexing agent, a material containing the electrolyte precursor (hereinafter sometimes referred to as "electrolyte precursor inclusion") is obtained. In the present embodiment, the resulting electrolyte precursor is not one completely dissolved in the complexing agent that is a liquid, and typically, a suspension containing the electrolyte precursor that is a solid is obtained. In consequence, the present production method is corresponding to a heterogeneous system in a so-called liquid-phase method.

(Pulverization)

It is preferred that the present production method further includes pulverization of the electrolyte precursor. By pulverizing the electrolyte precursor, a solid electrolyte having a small particle diameter is obtained, and thereby the lowering of the ionic conductivity can be suppressed. Further, by combining a mechanical treatment described later, the crystalline sulfide solid electrolyte having the prescribed average particle diameter and specific surface area can be easily obtained, and the crystalline sulfide solid electrolyte suitable for the positive electrode layer, the negative electrode layer, and the electrolyte layer of the all-solid-state lithium battery can be easily produced, resulting in a higher battery capability.

The pulverization of the electrolyte precursor is different from mechanical milling that is a so-called solid-phase method and is not one for obtaining an amorphous or crystalline solid electrolyte owing to a mechanical stress. As mentioned above, the electrolyte precursor contains the complexing agent, and the lithium-containing structure, such as a $PS_4$ structure, and the raw materials containing lithium, such as a lithium halide, are bound (coordinated) with each other via the complexing agent. Then, it may be considered that when the electrolyte precursor is pulverized, fine particles of the electrolyte precursor are obtained while maintaining the aforementioned binding (coordination) and dispersing state. By heating this electrolyte precursor as described later, the components bound (coordinated) via the complexing agent are linked with each other at the same time of removal of the complexing agent, and the crystalline sulfide solid electrolyte is easily produced. For that reason, growth of large particles owing to aggregation of particles with each other as seen in usual synthesis of a solid electrolyte is hardly generated, whereby atomization can be easily achieved, and a higher battery capability can be obtained.

The pulverizer which is used for pulverization of the electrolyte precursor is not particularly restricted as long as it is able to pulverize the particles, and for example, a medium type pulverizer using a pulverization medium can be used. Among medium type pulverizers, in consideration of the fact that the electrolyte precursor is in a liquid state or slurry state mainly accompanied by liquids, such as the complexing agent and the solvent, a wet-type pulverizer capable of coping with wet pulverization is preferred.

Representative examples of the wet-type pulverizer include a wet-type bead mill, a wet-type ball mill, and a wet-type vibration mill, and a wet-type bead mill using beads as a pulverization medium is preferred from the standpoint that it is able to freely adjust the condition of a pulverization operation and is easy to cope with materials having a smaller particle diameter. In addition, a dry-type pulverizer, such as a dry-type medium type pulverizer, e.g., a dry-type bead mill, a dry-type ball mill, and a dry-type vibration mill, and a dry-type non-medium pulverizer, e.g., a jet mill, can also be used.

The electrolyte precursor to be pulverized by the pulverizer is typically fed as the electrolyte precursor inclusion which is obtained by mixing the raw material inclusion and the complexing agent and mainly fed in a liquid state or slurry state. That is, an object to be pulverized by the pulverizer mainly becomes an electrolyte precursor inclusion liquid or an electrolyte precursor-containing slurry. Accordingly, the pulverizer which is used in the present embodiment is preferably a flow type pulverizer capable of being optionally subjected to circulation driving of the electrolyte precursor inclusion liquid or electrolyte precursor-containing slurry. More specifically, it is preferred to use a pulverizer of a mode of circulating between a pulverizer (pulverization mixer) of pulverizing the slurry and a temperature-holding tank (reactor) as disclosed in JP 2010-140893 A.

The size of the bead which is used for the pulverizer may be appropriately selected according to the desired particle diameter and treatment amount and the like, and for example, it may be about 0.05 mm or more and 5.0 mm or less, and it is preferably 0.1 mm or more and 3.0 mm or less, and more preferably 0.3 mm or more and 1.5 mm or less in terms of a diameter of the bead.

As the pulverizer which is used for pulverization of the electrolyte precursor, a machine capable of pulverizing an object using ultrasonic waves, for example, a machine called an ultrasonic pulverizer, an ultrasonic homogenizer, a probe ultrasonic pulverizer, or the like, can be used.

In this case, various conditions, such as a frequency of ultrasonic waves, may be appropriately selected according to the desired average particle diameter of the electrolyte precursor, and the like. The frequency may be, for example, about 1 kHz or more and 100 kHz or less, and from the viewpoint of more efficiently pulverizing the electrolyte precursor, it is preferably 3 kHz or more and 50 kHz or less, more preferably 5 kHz or more and 40 kHz or less, and still more preferably 10 kHz or more and 30 kHz or less.

An output which the ultrasonic pulverizer has may be typically about 500 to 16,000 W, and it is preferably 600 to 10,000 W, more preferably 750 to 5,000 W, and still more preferably 900 to 1,500 W.

Although an average particle diameter ($D_{50}$) of the electrolyte precursor which is obtained through pulverization is appropriately determined according to the desire, it is typically 0.01 $\mu$m or more and 50 $\mu$m or less, preferably 0.03 $\mu$m or more and 5 $\mu$m or less, more preferably 0.05 $\mu$m or more and 3 $\mu$m or less. By taking such an average particle diameter, it becomes possible to cope with the desire of the solid electrolyte having a small particle diameter as 1 $\mu$m or less in terms of an average particle diameter. Further, a higher battery capability can be obtained.

A time for pulverization is not particularly restricted as long as it is a time such that the electrolyte precursor has the desired average particle diameter, and it is typically 0.1 hours or more and 100 hours or less. From the viewpoint of efficiently regulating the particle diameter to the desired size, the time for pulverization is preferably 0.3 hours or more and 72 hours or less, more preferably 0.5 hours or more and 48 hours or less, and still more preferably 1 hour or more and 24 hours or less.

The pulverization may be performed after drying the electrolyte precursor inclusion as described later, such as the electrolyte precursor inclusion liquid or electrolyte precursor-containing slurry, to form the electrolyte precursor as a powder.

In this case, among the aforementioned pulverizers as exemplified as the pulverizer for the pulverization, any one of the dry-type pulverizers is preferably used. Besides, the items regarding the pulverization, such as a pulverization condition, are the same as those in the pulverization of the electrolyte precursor inclusion liquid or electrolyte precursor-containing slurry, and the average particle diameter of the electrolyte precursor obtained through pulverization is also the same as that as mentioned above.

(Drying)

The present production method may include drying of the electrolyte precursor inclusion (typically, suspension). According to this, a powder of the electrolyte precursor is obtained. By performing drying in advance, it becomes possible to efficiently perform heating. The drying and the subsequent heating may be performed in the same process.

The electrolyte precursor inclusion can be dried at a temperature according to the kind of the remaining complexing agent (complexing agent not incorporated into the electrolyte precursor). For example, the drying can be performed at a temperature of a boiling point of the complexing agent or higher. In addition, the drying can be performed through drying under reduced pressure (vacuum drying) by using a vacuum pump or the like at typically 5 to 100°C, preferably 10 to 85°C, more preferably 15 to 70°C, and still more preferably around room temperature (23°C) (for example, (room temperature) $\pm$ about 5°C), to volatilize the complexing agent.

The drying may be performed by subjecting the electrolyte precursor inclusion to solid-liquid separation by means of filtration with a glass filter or the like, or decantation, or solid-liquid separation with a centrifuge or the like. In the present embodiment, after performing the solid-liquid separation, the drying may be performed under the aforementioned temperature condition.

Specifically, for the solid-liquid separation, decantation in which the electrolyte precursor inclusion is transferred into a container, and after the electrolyte precursor is precipitated, the complexing agent and solvent as a supernatant are removed, or filtration with a glass filter having a pore size of, for example, about 10 to 200 $\mu$m, and preferably 20 to 150 $\mu$m, is easy.

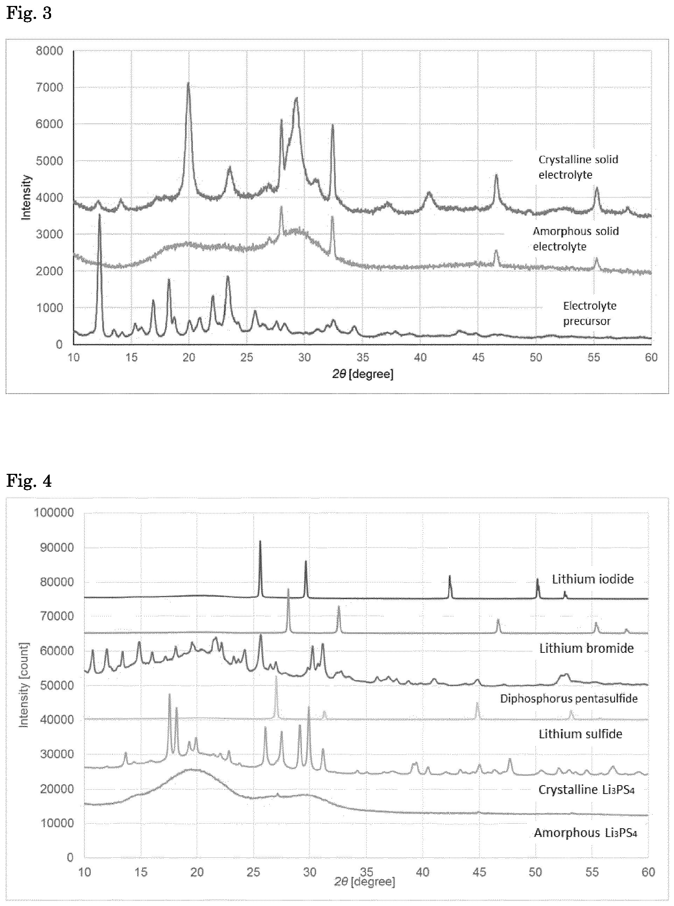

The electrolyte precursor has such a characteristic feature that it is constituted of the complexing agent, the lithium element, the sulfur element, and the phosphorus element, and preferably further the halogen element, and in the X-ray diffractometry, X-ray diffraction pattern with peaks different from the X-ray diffraction pattern with peaks derived from the raw materials are observed, and it preferably contains a co-crystal constituted of the complexing agent, the lithium element, the sulfur element, the phosphorus element, and the halogen element. When only the raw material inclusion is merely mixed, the peaks derived from the raw materials are merely observed, whereas when the raw material inclusion and the complexing agent are mixed, peaks different from the peaks derived from the raw materials are observed. Thus, the electrolyte precursor (co-crystal) has a structure explicitly different from the raw materials themselves contained in the raw material inclusion. This matter is specifically confirmed in the section of Examples. Measurement examples of the X-ray diffraction patterns of the electrolyte precursor (co-crystal) and the respective raw materials, such as lithium sulfide, are shown in Figs. 3 and 4, respectively. It is noted from the X-ray diffraction patterns that the electrolyte precursor (co-crystal) has a predetermined crystal structure. In addition, the diffraction pattern thereof does not contain the diffraction patterns of any raw materials, such as lithium sulfide, as shown in Fig. 4, and thus, it is noted that the electrolyte precursor (co-crystal) has a crystal structure different from the raw materials.

In addition, the electrolyte precursor (co-crystal) has such a characteristic feature that it has a structure different from the crystalline sulfide solid electrolyte. This matter is also specifically confirmed in the section of Examples. The X-ray diffraction pattern of the crystalline solid electrolyte is also shown in Fig. 3, and it is noted that the foregoing diffraction pattern is different from the diffraction pattern of the electrolyte precursor (co-crystal). The electrolyte precursor (co-crystal) has the predetermined crystal structure and is also different from the amorphous solid electrolyte having a broad pattern as shown in Fig. 3.

The co-crystal is constituted of the complexing agent, the lithium element, the sulfur element, and the phosphorus element, and preferably further the halogen element, and typically, it may be presumed that a complex structure in which the lithium element and the other elements are bound directly with each other via and/or not via the complexing agent is formed.

Here, the fact that the complexing agent constitutes the co-crystal can be, for example, confirmed through gas chromatography analysis. Specifically, the complexing agent contained in the co-crystal can be quantitated by dissolving a powder of the electrolyte precursor in methanol and subjecting the obtained methanol solution to gas chromatography analysis.

Although the content of the complexing agent in the electrolyte precursor varies with the molecular weight of the complexing agent, it is typically about 10% by mass or more and 70% by mass or less, and preferably 15% by mass or more and 65% by mass or less.

In the present production method, what the co-crystal containing the halogen element is formed is preferred from the standpoint of the enhancement of the ionic conductivity in addition to the prescribed average particle diameter and specific surface area. By using the complexing agent, the lithium-containing structure, such as a $PS_4$ structure, and the lithium-containing raw materials, such as a lithium halide, are bound (coordinated) with each other via the complexing agent, the co-crystal in which the halogen element is more likely dispersed and fixed is easily obtained, and the ionic conductivity is enhanced in addition to the prescribed average particle diameter and specific surface area.

In the case where the raw material inclusion containing the halogen element is used, the matter that the halogen element in the electrolyte precursor constitutes the co-crystal can be confirmed from the fact that even when the solid-liquid separation of the electrolyte precursor inclusion is performed, the predetermined amount of the halogen element is contained in the electrolyte precursor. This is because the halogen element which does not constitute the co-crystal is easily eluted as compared with the halogen element constituting the co-crystal and discharged into the liquid of solid-liquid separation. In addition, the foregoing matter can also be confirmed from the fact that by performing composition analysis through ICP analysis (inductively coupled plasma atomic emission spectrophotometry) of the electrolyte precursor or solid electrolyte, a proportion of the halogen element in the electrolyte precursor or sulfide solid electrolyte is not remarkably lowered as compared with a proportion of the halogen element fed from the raw materials.

In the case where the raw material inclusion containing the halogen element is used, the amount of the halogen element remaining in the electrolyte precursor is preferably 30% by mass or more, more preferably 35% by mass or more, and still more preferably 40% by mass or more relative to the prepared composition. An upper limit of the halogen element remaining in the electrolyte precursor is 100% by mass.

(Heating)

The present production method preferably includes heating the electrolyte precursor, and the heating the electrolyte precursor includes, for example, heating the electrolyte precursor to obtain the amorphous sulfide solid electrolyte, heating the electrolyte precursor to obtain the crystalline sulfide solid electrolyte, or heating the electrolyte precursor to obtain the amorphous sulfide solid electrolyte, and heating the amorphous sulfide solid electrolyte to obtain the crystalline sulfide solid electrolyte. By heating the electrolyte precursor, at least the complexing agent of the electrolyte precursor is removed to obtain the amorphous sulfide solid electrolyte or the crystalline sulfide solid electrolyte containing the lithium element, the sulfur element, and the phosphorus element, and preferably further a halogen element. The electrolyte precursor to be heated in this heating may be an electrolyte precursor pulverized product which has been pulverized through the aforementioned pulverization. In the present production method, the sulfide solid electrolyte used in the electrode composite material is preferably the crystalline sulfide solid electrolyte, and therefore the crystalline sulfide solid electrolyte is preferably produced.

The removal of the complexing agent in the electrolyte precursor is supported by the facts that the solid electrolyte obtained by removing the complexing agent through heating of the electrolyte precursor is identical in the X-ray diffraction pattern with the solid electrolyte obtained by the conventional method without using the complexing agent, in addition to the fact that it is evident from the results of the X-ray diffraction pattern, the gas chromatography analysis, and the like that the complexing agent constitutes the co-crystal of the electrolyte precursor,

In the present production method, the sulfide solid electrolyte is obtained by heating the electrolyte precursor to remove the complexing agent in the electrolyte precursor, and it is preferred that the content of the complexing agent in the sulfide solid electrolyte is low as far as possible, but the complexing agent may be contained to an extent that the performance of the solid electrolyte is not impaired. The content of the complexing agent in the sulfide solid electrolyte may be typically 10% by mass or less, and it is preferably 5% by mass or less, more preferably 3% by mass or less, and still more preferably 1% by mass or less.

In the present production method, in order to obtain the sulfide solid electrolyte, it may be obtained by heating the electrolyte precursor to obtain the amorphous sulfide solid electrolyte or the crystalline sulfide solid electrolyte, or it may be obtained by heating the electrolyte precursor to obtain the amorphous sulfide solid electrolyte and then heating the amorphous sulfide solid electrolyte to obtain the crystalline sulfide solid electrolyte. That is, in the present production method, both the amorphous sulfide solid electrolyte and the crystalline sulfide solid electrolyte can be produced.

Conventionally, in order to obtain a sulfide solid electrolyte having a high ionic conductivity, for example, a sulfide solid electrolyte having a thio-LISICON Region II-type crystal structure as mentioned later, it was required that an amorphous sulfide solid electrolyte is prepared through mechanical pulverization treatment, such as mechanical milling, or other melt quenching treatment or the like, and then, the amorphous sulfide solid electrolyte is heated. However, it may be said that the present production method is superior to the conventional production method by mechanical milling treatment or the like from the standpoint that a crystalline sulfide solid electrolyte having a thio-LISICON Region II-type crystal structure is obtained even by a method of not performing mechanical pulverization treatment, other melt quenching treatment, or the like.

In the present production method, whether or not the amorphous sulfide solid electrolyte is obtained, whether or not the crystalline sulfide solid electrolyte is obtained, whether or not after obtaining the amorphous sulfide solid electrolyte, the crystalline sulfide solid electrolyte is obtained, or whether or not the crystalline sulfide solid electrolyte is obtained directly from the electrolyte precursor is appropriately selected according to the desire, and is able to be adjusted by the heating temperature, the heating time, or the like.

For example, in the case of obtaining the amorphous sulfide solid electrolyte, the heating temperature of the electrolyte precursor may be determined according to the structure of the crystalline sulfide solid electrolyte which is obtained by heating the amorphous sulfide solid electrolyte (or the electrolyte precursor). Specifically, the heating temperature may be determined by subjecting the amorphous sulfide solid electrolyte (or the electrolyte precursor) to differential thermal analysis (DTA) with a differential thermal analysis device (DTA device) under a temperature rise condition of 10°C/min and adjusting the temperature to a range of preferably 5°C or lower, more preferably 10°C or lower, and still more preferably 20°C or lower starting from a peak top temperature of the exothermic peak detected on the lowermost temperature side. Although a lower limit thereof is not particularly restricted, it may be set to a temperature of about [(peak top temperature of the exothermic peak detected on the lowermost temperature side) - 40°C] or higher. By regulating the heating temperature to such a temperature range, the amorphous sulfide solid electrolyte is obtained more efficiently and surely. Although the heating temperature for obtaining the amorphous sulfide solid electrolyte cannot be unequivocally prescribed because it varies with the structure of the resulting crystalline sulfide solid electrolyte, in general, it is preferably 135°C or lower, more preferably 130°C or lower, and still more preferably 125°C or lower. Although a lower limit of the heating temperature is not particularly limited, it is preferably 90°C or higher, more preferably 100°C or higher, and still more preferably 110°C or higher.

In the case of obtaining the crystalline sulfide solid electrolyte by heating the amorphous sulfide solid electrolyte or directly from the electrolyte precursor, the heating temperature may be determined according to the structure of the crystalline sulfide solid electrolyte, and it is preferably higher than the aforementioned heating temperature for obtaining the amorphous sulfide solid electrolyte. Specifically, the heating temperature may be determined by subjecting the amorphous sulfide solid electrolyte (or the electrolyte precursor) to differential thermal analysis (DTA) with a differential thermal analysis device (DTA device) under a temperature rise condition of 10°C/min and adjusting the temperature to a range of preferably 5°C or higher, more preferably 10°C or higher, and still more preferably 20°C or higher starting from a peak top temperature of the exothermic peak detected on the lowermost temperature side. Although an upper limit thereof is not particularly restricted, it may be set to a temperature of about [(peak top temperature of the exothermic peak detected on the lowermost temperature side) + 40°C] or lower. By regulating the heating temperature to such a temperature range, the crystalline sulfide solid electrolyte is obtained more efficiently and surely. Although the heating temperature for obtaining the crystalline sulfide solid electrolyte cannot be unequivocally prescribed because it varies with the structure of the resulting crystalline sulfide solid electrolyte, in general, it is preferably 130°C or higher, more preferably 135°C or higher, and still more preferably 140°C or higher. Although an upper limit of the heating temperature is not particularly limited, it is preferably 300°C or lower, more preferably 280°C or lower, and still more preferably 250°C or lower.

Although the heating time is not particularly limited as long as it is a time for which the desired amorphous sulfide solid electrolyte or crystalline sulfide solid electrolyte is obtained, for example, it is preferably 1 minute or more, more preferably 10 minutes or more, still more preferably 30 minutes or more, and yet still more preferably 1 hour or more. In addition, though an upper limit of the heating temperature is not particularly restricted, it is preferably 24 hours or less, more preferably 10 hours or less, still more preferably 5 hours or less, and yet still more preferably 3 hours or less.

It is preferred that the heating is performed in an inert gas atmosphere (for example, a nitrogen atmosphere and an argon atmosphere) or in a reduced pressure atmosphere (especially, in vacuo). This is because deterioration (for example, oxidation) of the crystalline sulfide solid electrolyte can be prevented from occurring. Although a method for heating is not particularly limited, for example, a method of using a hot plate, a vacuum heating device, an argon gas atmosphere furnace, or a firing furnace can be adopted. In addition, industrially, a lateral dryer or a lateral vibration fluid dryer provided with a heating means and a feed mechanism, or the like may be selected according to the heating treatment amount.

(Amorphous Sulfide Solid Electrolyte)

The amorphous sulfide solid electrolyte obtained by the present production method contains the lithium element, the sulfur element, and the phosphorus element, and preferably further the halogen element. As representative examples thereof, there are preferably exemplified solid electrolytes constituted of lithium sulfide, phosphorus sulfide, and a lithium halide, such as $Li_2S$-$P_2S_5$-LiI, $Li_2S$-$P_2S_5$-LiCl, $Li_2S$-$P_2S_5$-LiBr, and $Li_2S$-$P_2S_5$-LiI-LiBr; and sulfide solid electrolytes further containing other element, such as an oxygen element and a silicon element, for example, $Li_2S$-$P_2S_5$-$Li_2O$-LiI and $Li_2S$-$SiS_2$-$P_2S_5$-LiI. From the viewpoint of obtaining a higher ionic conductivity, sulfide solid electrolytes constituted of lithium sulfide, phosphorus sulfide, and a lithium halide, such as $Li_2S$-$P_2S_5$-LiI, $Li_2S$-$P_2S_5$-LiCl, $Li_2S$-$P_2S_5$-LiBr, and $Li_2S$-$P_2S_5$-LiI-LiBr, are preferred.

The kinds of the elements constituting the amorphous sulfide solid electrolyte can be confirmed by, for example, an inductivity coupled plasma optical emission spectrometer (ICP).

In the case where the amorphous sulfide solid electrolyte obtained in the present production method is one having at least $Li_2S$-$P_2S_5$, from the viewpoint of obtaining a higher ionic conductivity, a molar ratio of $Li_2S$ to $P_2S_5$ is preferably (65 to 85)/(15 to 35), more preferably (70 to 80)/(20 to 30), and still more preferably (72 to 78)/(22 to 28).

In the case where the amorphous sulfide solid electrolyte obtained in the present production method is $Li_2S$-$P_2S_5$-LiI-LiBr, the total content of lithium sulfide and diphosphorus pentasulfide is preferably 60 to 95 mol%, more preferably 65 to 90 mol%, and still more preferably 70 to 85 mol%. In addition, a proportion of lithium bromide relative to the total of lithium bromide and lithium iodide is preferably 1 to 99 mol%, more preferably 20 to 90 mol%, still more preferably 40 to 80 mol%, and especially preferably 50 to 70 mol%.

In the amorphous sulfide solid electrolyte obtained in the present production method, in the case where raw material inclusion containing the halogen element is used, a blending ratio (molar ratio) of lithium element to sulfur element to phosphorus element to halogen element is preferably (1.0 to 1.8)/(1.0 to 2.0)/(0.1 to 0.8)/(0.01 to 0.6), more preferably (1.1 to 1.7)/(1.2 to 1.8)/(0.2 to 0.6)/(0.05 to 0.5), and still more preferably (1.2 to 1.6)/(1.3 to 1.7)/(0.25 to 0.5)/(0.08 to 0.4). In addition, in the case of using a combination of bromine and iodine as the halogen element, a blending ratio (molar ratio) of lithium element to sulfur element to phosphorus element to bromine to iodine is preferably (1.0 to 1.8)/(1.0 to 2.0)/(0.1 to 0.8)/(0.01 to 0.3)/(0.01 to 0.3), more preferably (1.1 to 1.7)/(1.2 to 1.8)/(0.2 to 0.6)/(0.02 to 0.25)/(0.02 to 0.25), still more preferably (1.2 to 1.6)/(1.3 to 1.7)/(0.25 to 0.5)/(0.03 to 0.2)/(0.03 to 0.2), and yet still more preferably (1.35 to 1.45)/(1.4 to 1.7)/(0.3 to 0.45)/(0.04 to 0.18)/(0.04 to 0.18). By allowing the blending ratio (molar ratio) of lithium element to sulfur element to phosphorus element to halogen element to fall within the aforementioned range, it becomes easy to provide a sulfide solid electrolyte having a thio-LISICON Region II-type crystal structure and having a higher ionic conductivity.

Although the shape of the amorphous sulfide solid electrolyte is not particularly restricted, examples thereof include a granular shape. The average particle diameter ($D_{50}$) of the granular amorphous solid electrolyte is, for example, within a range of 0.01 to 500 $\mu$m, and preferably 0.1 to 200 $\mu$m.

Although the shape of the amorphous sulfide solid electrolyte is not particularly restricted, examples thereof include a granular shape. The average particle diameter ($D_{50}$) of the granular amorphous solid electrolyte is, for example, within a range of 0.01 to 500 $\mu$m, and preferably 0.1 to 200 $\mu$m.

The volume based average particle diameter of the amorphous sulfide solid electrolyte obtained by the present production method is 3 $\mu$m or more as similar to the average particle diameter of the sulfide solid electrolyte used in the electrode composite material of the present embodiment described above. The specific surface area measured by a BET method of the amorphous sulfide solid electrolyte obtained by the present production method is 20 $m^2$/g or more as similar to the specific surface area of the sulfide solid electrolyte used in the electrode composite material of the present embodiment.

In the present production method, the amorphous sulfide solid electrolyte is finally heated to convert to the crystalline sulfide solid electrolyte, and constitutes the electrode composite material of the present embodiment with the electrode active material.

(Crystalline Sulfide Solid Electrolyte)

The crystalline sulfide solid electrolyte obtained by the present production method may be so-called glass ceramics which are obtained by heating the amorphous sulfide solid electrolyte to a crystallization temperature or higher. Examples of a crystal structure thereof include an $Li_3PS_4$ crystal structure, an $Li_4P_2S_6$ crystal structure, an $Li_7PS_6$ crystal structure, an $Li_7P_3S_{11}$ crystal structure, and a crystal structure having peaks at around of $2\theta$ = 20.2° and 23.6° (see, for example, JP 2013-16423 A).

In addition, examples thereof include an $Li_{4-x}Ge_{1-x}P_xS_4$-based thio-LISICON Region II-type crystal structure (see Kanno, et al., Journal of The Electrochemical Society, 148 (7) A742-746 (2001)) and a crystal structure similar to the $Li_{4-x}Ge_{1-x}P_xS_4$-based thio-LISICON Region II-type crystal structure (see Solid State Ionics, 177 (2006), 2721-2725). Among them, the thio-LISICON Region II-type crystal structure is preferred as the crystal structure of the crystalline sulfide solid electrolyte obtained by the present production method from the standpoint that a higher ionic conductivity is obtained. Here, the "thio-LISICON Region II-type crystal structure" expresses any one of an $Li_{4-x}Ge_{1-x}P_xS_4$-based thio-LISICON Region II-type crystal structure and a crystal structure similar to the $Li_{4-x}Ge_{1-x}P_xS_4$-based thio-LISICON Region II-type crystal structure. In addition, though the crystalline sulfide solid electrolyte obtained by the present production method may be one having the aforementioned thio-LISICON Region II-type crystal structure or may be one having the thio-LISICON Region II-type crystal structure as a main crystal, it is preferably one having the thio-LISICON Region II-type crystal structure as a main crystal from the standpoint that a higher ionic conductivity is obtained. In this specification, the wording "having as a main crystal" means that a proportion of the crystal structure serving as an object in the crystal structure is 80% or more, and it is preferably 90% or more, and more preferably 95% or more. In addition, from the viewpoint of obtaining a higher ionic conductivity, the crystalline sulfide solid electrolyte obtained by the present production method is preferably one not containing crystalline $Li_3PS_4$ ($\beta$-$Li_3PS_4$).

In the X-ray diffractometry using a CuKa radiation, the $Li_3PS_4$ crystal structure gives diffraction peaks, for example, at around $2\theta = 17.5°$, $18.3°$, $26.1°$, $27.3°$, and $30.0°$; the $Li_4P_2S_6$ crystal structure gives diffraction peaks, for example, at around $2\theta = 16.9°$, $27.1°$, and $32.5°$; the $Li_7PS_6$ crystal structure gives diffraction peaks, for example, at around $2\theta = 15.3°$, $25.2°$, $29.6°$, and $31.0°$; the $Li_7P_3S_{11}$ crystal structure gives diffraction peaks, for example, at around $2\theta = 17.8°$, $18.5°$, $19.7°$, $21.8°$, $23.7°$, $25.9°$, $29.6°$, and $30.0°$; the $Li_{4-x}Ge_{1-x}P_xS_4$-based thio-LISICON Region II-type crystal structure gives diffraction peaks, for example, at around $2\theta = 20.1°$, $23.9°$, and $29.5°$; and the crystal structure similar to the $Li_{4-x}Ge_{1-x}P_xS_4$-based thio-LISICON Region II-type crystal structure gives diffraction peaks, for example, at around $2\theta = 20.2°$ and $23.6°$. The position of these peaks may vary within a range of $\pm 0.5°$.

As mentioned above, in the case when the thio-LISICON Region II-type crystal structure is obtained in the present embodiment, the foregoing crystal structure is preferably one not containing crystalline $Li_3PS_4$ ($\beta$-$Li_3PS_4$). Fig. 3 shows an X-ray diffractometry example of the crystalline sulfide solid electrolyte obtained by the present production method. In addition, Fig. 4 shows an X-ray diffractometry example of crystalline $Li_3PS_4$ ($\beta$-$Li_3PS_4$). As grasped from Figs. 3 and 4, the sulfide solid electrolyte of the present embodiment does not have diffraction peaks at $2\theta = 17.5°$ and $26.1°$, which the crystalline $Li_3PS_4$ shows, or even in the case where it has diffraction patterns, extremely small peaks as compared with the diffraction peaks of the thio-LISICON Region II-type crystal structure are merely detected.

The crystal structure represented by a compositional formula $Li_{7-x}P_{1-y}Si_yS_6$ or $Li_{7+x}P_{1-y}Si_yS_6$ (x is -0.6 to 0.6, and y is 0.1 to 0.6), which has the aforementioned structural skeleton of $Li_7PS_6$ and in which a part of P is substituted with Si, is a cubic crystal or a orthorhombic crystal, and is preferably a cubic crystal, and in X-ray diffractometry using a CuKa radiation, the crystal structure gives peaks appearing mainly at $2\theta = 15.5°$, $18.0°$, $25.0°$, $30.0°$, $31.4°$, $45.3°$, $47.0°$, and $52.0°$. The crystal structure represented by the aforementioned compositional formula $Li_{7-x-2y}PS_{6-x-y}Cl_x$ ($0.8 \leq x \leq 1.7$, and $0 < y \leq (-0.25x + 0.5)$) is preferably a cubic crystal, and in the X-ray diffractometry using a CuKa radiation, the crystal structure gives peaks appearing mainly at $2\theta = 15.5°$, $18.0°$, $25.0°$, $30.0°$, $31.4°$, $45.3°$, $47.0°$, and $52.0°$. The crystal structure represented by the aforementioned compositional formula $Li_{7-x}PS_{6-x}Ha_x$ (Ha represents Cl or Br, and x is preferably 0.2 to 1.8) is preferably a cubic crystal, and in the X-ray diffractometry using a CuKa radiation, the crystal structure gives peaks appearing mainly at $2\theta = 15.5°$, $18.0°$, $25.0°$, $30.0°$, $31.4°$, $45.3°$, $47.0°$, and $52.0°$.

These peak positions may vary within a range of $\pm 0.5°$.

In the X-ray diffractometry using CuKa radiation of the crystalline sulfide solid electrolyte obtained by the present production method, the full width at half maximum peak including the background in $2\theta = 10$ to $40°$ is preferably $\Delta 2\theta = 0.75°$ or less. A higher ionic conductivity can be obtained by such a property, and the battery capability is enhanced. In the same viewpoint, the full width at half maximum peak is more preferably $\Delta 2\theta = 0.71°$ or less, and further preferably $\Delta 2\theta = 0.66°$ or less. The full width at half maximum in such a range means that a good crystallinity is obtained. Accordingly, the electrolyte can be easily cracked into primary particles due to collision with the active material in mixing with the active material. The cracking can be performed with less energy, and therefore the decrease in ionic conductivity due to vitrification is hard to occur.

As the crystalline sulfide solid electrolyte having such a property, one having a thio-LISICON Region II-type crystal structure is typically exemplified.

For example, Fig. 5 shows an example of the X-ray diffraction measurement of the crystalline sulfide solid electrolytes having a thio-LISICON Region II-type crystal structure, from which it is found that the maximum peak including the background in $2\theta = 10$ to $40°$ is the peak at $20.1°$, and the peak is a sharp peak having a full width at half maximum of $\Delta 2\theta = 0.59°$. By having a sharp peak having a full width at half maximum of $0.75°$ or less as the maximum peak, the crystalline sulfide solid electrolyte exhibits a significantly high ionic conductivity, and the battery capability can be enhanced.

Although the shape of the crystalline sulfide solid electrolyte is not particularly restricted, examples thereof include a granular shape. The average particle diameter ($D_{50}$) of the granular crystalline solid electrolyte is, for example, within a range of 0.01 to 500 pm, and preferably 0.1 to 200 pm.

The volume based average particle diameter of the crystalline sulfide solid electrolyte obtained by the present production method is 3 $\mu m$ or more as similar to the average particle diameter of the sulfide solid electrolyte used in the electrode composite material of the present embodiment described later. The specific surface area measured by a BET method thereof is 20 $m^2/g$ or more as similar to the specific surface area of the sulfide solid electrolyte of the present embodiment.

(Embodiment B)

Next, the Embodiment B is described.

The Embodiment B is concerned with a mode in which in the present production method including mixing a raw material inclusion containing a lithium element, a sulfur element, and a phosphorus element, and preferably further a halogen element with a complexing agent, raw materials containing, as the raw material inclusion, a solid electrolyte,

such as $Li_3PS_4$, and the like and the complexing agent are used. In the Embodiment A, the electrolyte precursor is formed while synthesizing the lithium-containing structure, such as $Li_3PS_4$, existent as a main structure in the sulfide solid electrolyte obtained by the present production method, through reaction among the raw materials, such as lithium sulfide, and therefore, it may be considered that a constitution ratio of the aforementioned structure is liable to become small.

Then, in the Embodiment B, a solid electrolyte containing the aforementioned structure is previously prepared by means of production or the like, and this is used as the raw material. According to this, an electrolyte precursor in which the aforementioned structure and the raw materials containing lithium, such the lithium halide, are bound (coordinated) with each other via the complexing agent, consequently, the halogen element is dispersed and fixed, is more likely obtained. As a result, a sulfide solid electrolyte having a high ionic conductivity in addition to the prescribed average particle diameter and specific surface area, in which the generation of hydrogen sulfide is suppressed, is obtained.

Examples of the raw material containing a lithium element, a sulfur element, and a phosphorus element, which may be used in the Embodiment B, include an amorphous solid electrolyte or crystalline solid electrolyte having a $PS_4$ structure as a molecular structure. From the viewpoint of suppressing the generation of hydrogen sulfide, a $P_2S_7$ structure-free amorphous solid electrolyte or crystalline solid electrolyte is preferred. As such a solid electrolyte, ones produced by a conventionally existing production method, such as a mechanical milling method, a slurry method, and a melt quenching method, can be used, and commercially available products can also be used.

In this case, the solid electrolyte containing a lithium element, a sulfur element, and a phosphorus element is preferably an amorphous solid electrolyte. The dispersibility of the halogen element in the electrolyte precursor is enhanced, and the halogen element is easily bound with the lithium element, the sulfur element, and the phosphorus element in the solid electrolyte, and as a result, a solid electrolyte having a higher ionic conductivity in addition to the prescribed average particle diameter and specific surface area can be obtained.

In the Embodiment B, the content of the amorphous sulfide solid electrolyte or the like having a $PS_4$ structure is preferably 60 to 100 mol%, more preferably 65 to 90 mol%, and further preferably 70 to 80 mol%, relative to the total of the raw materials.

In the case of using the amorphous sulfide solid electrolyte having a $PS_4$ structure or the like and the halogen simple substance, the content of the halogen simple substance is preferably 1 to 50 mol%, more preferably 2 to 40 mol%, still more preferably 3 to 25 mol%, and yet still more preferably 3 to 15 mol% relative to the amorphous sulfide solid electrolyte having a $PS_4$ structure or the like.

Besides, in the case of using the halogen simple substance and the lithium halide and the case of using the two halogen simple substances, the same as in the Embodiment A is applicable.

In the Embodiment B, in all other cases than aforementioned the raw materials, for example, the complexing agent, the mixing, the heating, the drying, the amorphous sulfide solid electrolyte, the crystalline sulfide solid electrolyte, and the like, are the same as those described in the Embodiment A.

In the Embodiment B, the matter that what the electrolyte precursor is pulverized is preferred, the pulverizer to be used for pulverization, the matter that after mixing or after drying, the pulverization may be performed, various conditions regarding pulverization, and the like are also the same as those in the Embodiment A.

(Embodiments C and D)

As shown in the flow chart of Fig. 2, the Embodiments C and D are different from the Embodiments A and B, respectively from the standpoint that a solvent is added to the raw material inclusion and the complexing agent. The Embodiments C and D are concerned with a heterogeneous method of solid-liquid coexistence, whereas in the Embodiments A and B, the electrolyte precursor that is a solid is formed in the complexing agent that is a liquid. At this time, when the electrolyte precursor is easily soluble in the complexing agent, there is a case where separation of the components is generated. In the Embodiments C and D, by using a solvent in which the electrolyte precursor is insoluble, elution of the components in the electrolyte precursor can be suppressed.

(Solvent)

In the production method of the Embodiments C and D, it is preferred to add the solvent to the raw material inclusion and the complexing agent. In view of the fact that the raw material inclusion and the complexing agent are mixed using the solvent, an effect to be brought by using the complexing agent, namely an effect in which formation of the electrolyte precursor acting with the lithium element, the sulfur element, and the phosphorus element, and preferably further the halogen element is promoted, an aggregate via the lithium-containing structure, such as a $PS_4$ structure, or the complexing agent, and an aggregate via the lithium-containing raw material, such as a lithium halide, or the complexing agent are evenly existent, whereby an electrolyte precursor in which the halogen element is more likely dispersed and fixed is obtained, as a result, an effect for obtaining a high ionic conductivity in addition to the prescribed average particle diameter and specific surface area is easily exhibited.

The present production method is a so-called heterogeneous method, and it is preferred that the electrolyte precursor is not completely dissolved in the complexing agent that is a liquid but deposited. In the Embodiments C and D, by adding the solvent, the solubility of the electrolyte precursor can be adjusted. In particular, the halogen element is liable to be eluted from the electrolyte precursor, and therefore, by adding the solvent, the elution of the halogen element is suppressed, whereby the desired electrolyte precursor is obtained. As a result, a crystalline solid electrolyte, namely the aforementioned sulfide solid electrolyte of the present embodiment, having a high ionic conductivity in addition to the prescribed average particle diameter and specific surface area, in which the generation of hydrogen sulfide is suppressed, can be obtained via the electrolyte precursor in which the components, such as a halogen, are dispersed.

As the solvent having such properties, a solvent having a solubility parameter of 10 or less is preferably exemplified. In this specification, the solubility parameter is described in various literatures, for example, "Handbook of Chemistry" (published in 2004, Revised 5th Edition, by Maruzen Publishing Co., Ltd.) and is a value $\delta$ ($(cal/cm^3)^{1/2}$) calculated according to the following numerical formula (1), which is also called a Hildebrand parameter, SP value.

$$\delta = \sqrt{(\Delta H - RT)/V} \qquad (1)$$

In the numerical formula (1), $\Delta H$ is a molar heating value; R is a gas constant; T is a temperature; and V is molar volume.

By using the solvent having a solubility parameter of 10 or less, the solvent has such properties that as compared by the aforementioned complexing agent, it relatively hardly dissolves the halogen element, the raw materials containing a halogen element, such as a lithium halide, and further the halogen element-containing component constituting the co-crystal contained in the electrolyte precursor (for example, an aggregate in which lithium halide and the complexing agent are bound with each other); it is easy to fix the halogen element within the electrolyte precursor; the halogen element is existent in a favorable state in the resulting electrolyte precursor and further the solid electrolyte; and a sulfide solid electrolyte having a high ionic conductivity in addition to the prescribed average particle diameter and specific surface area is easily obtained. That is, it is preferred that the solvent which is used in the present embodiment has such properties that it does not dissolve the electrolyte precursor. From the same viewpoint, the solubility parameter of the solvent is preferably 9.5 or less, more preferably 9.0 or less, and still more preferably 8.5 or less.

More specifically, as the solvent which is used in the production method of the Embodiments C and D, it is possible to broadly adopt a solvent which has hitherto been used in the production of a sulfide solid electrolyte. Examples thereof include hydrocarbon solvents, such as an aliphatic hydrocarbon solvent, an alicyclic hydrocarbon solvent, and an aromatic hydrocarbon solvent; and carbon atom-containing solvents, such as an alcohol-based solvent, an ester-based solvent, an aldehyde-based solvent, a ketone-based solvent, an ether-based solvent, a nitrile-based solvent, and a solvent containing a carbon atom and a hetero atom. Of these, preferably, a solvent having a solubility parameter falling within the aforementioned range may be appropriately selected and used.

More specifically, examples of the solvent include an aliphatic hydrocarbon solvent, such as hexane (7.3), pentane (7.0), 2-ethylhexane, heptane (7.4), octane (7.5), decane, undecane, dodecane, and tridecane; an alicyclic hydrocarbon solvent, such as cyclohexane (8.2) and methylcyclohexane; an aromatic hydrocarbon solvent, such as benzene, toluene (8.8), xylene (8.8), mesitylene, ethylbenzene (8.8), tert-butylbenzene, trifluoromethylbenzene, nitrobenzene, chlorobenzene (9.5), chlorotoluene (8.8), and bromobenzene; an alcohol-based solvent, such as ethanol (12.7) and butanol (11.4); an ester-based solvent, such as ethyl acetate (9.1) and butyl acetate (8.5); an aldehyde-based solvent, such as formaldehyde, acetaldehyde (10.3), and dimethylformamide (12.1); a ketone-based solvent, such as acetone (9.9) and methyl ethyl ketone; an ether-based solvent, such as diethyl ether (7.4), diisopropyl ether (6.9), dibutyl ether, tetrahydrofuran (9.1), dimethoxyethane (7.3), cyclopentylmethyl ether (8.4), tert-butylmethyl ether, and anisole; a nitrile-based solvent, such as acetonitrile (11.9), methoxyacetonitrile, propionitrile, methoxypropionitrile, isobutyronitrile, and benzonitrile; and a solvent containing a carbon atom and a hetero atom, such as dimethyl sulfoxide, and carbon disulfide. The numerical values within the parentheses in the aforementioned exemplifications are an SP value.

Of these solvents, an aliphatic hydrocarbon solvent, an alicyclic hydrocarbon solvent, an aromatic hydrocarbon solvent, and an ether-based solvent are preferred; and from the viewpoint of obtaining a higher ionic conductivity in addition to the prescribed average particle diameter and specific surface area more stably, heptane, cyclohexane, toluene, ethylbenzene, diethyl ether, diisopropyl ether, dibutyl ether, dimethoxyethane, cyclopentylmethyl ether, tert-butylmethyl ether, and anisole are more preferred; diethyl ether, diisopropyl ether, and dibutyl ether are still more preferred; diisopropyl ether and dibutyl ether are yet still more preferred; and dibutyl ether is especially preferred. The solvent which is used in the present embodiment is preferably the organic solvent as exemplified above and is an organic solvent different from the aforementioned complexing agent. In the present embodiment, these solvents may be used alone or in combination of plural kinds thereof.

In the case of using the solvent, the content of the raw materials in the raw material inclusion may be regulated to one relative to one liter of the total amount of the complexing agent and the solvent.

As for drying in the Embodiments C and D, the electrolyte precursor inclusion can be dried at a temperature according to the kind of each of the remaining complexing agent (complexing agent not incorporated into the electrolyte precursor) and the solvent. For example, the drying can be performed at a temperature of a boiling point of the complexing agent or solvent or higher. In addition, the drying can be performed through drying under reduced pressure (vacuum drying) by using a vacuum pump or the like at typically 5 to 100°C, preferably 10 to 85°C, more preferably 15 to 70°C, and still more preferably around room temperature (23°C) (for example, (room temperature) $\pm$ about 5°C), to volatilize the complexing agent and the solvent. In addition, in the drying in the Embodiments C and D, in the case where the solvent remains in the electrolyte precursor, the solvent is also removed. However, different from the complexing agent constituting the electrolyte precursor, the solvent hardly constitutes the electrolyte precursor. In consequence, the content of the solvent which may remain in the electrolyte precursor is typically 3% by mass or less, preferably 2% by mass or less, and more preferably 1% by mass or less.

In the Embodiment C, in all other cases except for the solvent, for example, the complexing agent, the mixing, the heating, the drying, the amorphous sulfide solid electrolyte, and the crystalline sulfide solid electrolyte, and the like are the same as those described in the Embodiment A. In addition, in the Embodiment D, all other cases than the solvent are the same as those described in the Embodiment B.

In the Embodiments C and D, the matter that what the electrolyte precursor is pulverized is preferred, the pulverizer to be used for pulverization, the matter that after mixing or after drying, the pulverization may be performed, various conditions regarding pulverization, and the like are also the same as those in the Embodiment A.

(Mechanical Treatment)

In the method for producing an electrode composite material of the present embodiment, the crystalline sulfide solid electrolyte obtained in the Embodiments A to D (which may be hereinafter referred to as a "precursor for mechanical treatment") may be used after further mechanically treated.

The amorphous sulfide solid electrolyte and the crystalline sulfide solid electrolyte obtained in the Embodiments A to D can easily achieve an electron conductivity parameter X within a range of $0.30 \leq X \leq 2.10$, are excellent in conductivity by excellent contact state of the solid electrolyte and the electrode active material, and facilitate the electrode composite material capable of exhibiting a high battery capability. From the same viewpoint, the amorphous sulfide solid electrolyte and the crystalline sulfide solid electrolyte, which is the precursor for mechanical treatment, are preferably mechanically treated. The crystalline sulfide solid electrolyte having the desired average particle diameter and specific surface area, preferably the average particle diameter and specific surface area described above, can be easily obtained, the contact state of the electrode active material and the sulfide solid electrolyte can be enhanced, and the crystalline sulfide solid electrolyte suitable for the positive electrode layer, the negative electrode layer, and the electrolyte layer in the all-solid-state lithium battery can be easily produced, resulting in the electrode composite material capable of exhibiting a high battery capability.

The method of the mechanical treatment of the precursor for mechanical treatment is not particularly restricted, and examples thereof include a method of using an apparatus, such as a pulverizer and an agitator.

Examples of the agitator include a mechanical agitation type mixer having an impeller provided in a tank exemplified as the apparatus capable of being used in the production method of the precursor for mechanical treatment. Examples of the mechanical agitation type mixer include a high-speed agitation type mixer and a double arm type mixer, both of which can be used, and a high-speed agitation type mixer is preferred from the standpoint of regulating the desired average particle diameter and specific surface area more easily. Specific examples of the high-speed agitation type mixer include a vertical axis rotating type mixer and a horizontal axis rotating type mixer as described above, and also include various apparatuses, such as a high-speed thin film spin type agitator and a high-speed shearing type agitator. Among these, a high-speed thin film spin type agitator (which may also be referred to as a thin film spin type high-speed mixer or the like) is preferred from the standpoint of regulating the desired average particle diameter and specific surface area more easily.

Examples of the pulverizer used in the present production method include a pulverizer having a rotor capable of agitating at least the sulfide solid electrolyte having a volume based average particle diameter measured by a laser diffraction particle size distribution measuring method of 3 um or more and a specific surface area measured by a BET method of 20 m$^2$/g or more, which is the precursor for mechanical treatment.

In the present production method, the cracking (atomization) and the granulation (grain growth) of the precursor for mechanical treatment can be regulated by regulating the peripheral velocity of the rotor of the pulverizer. Specifically, the average particle diameter can be decreased through cracking, whereas the average particle diameter can be increased through granulation, and therefore the average particle diameter, the specific surface area, and the like of the sulfide solid electrolyte can be easily and freely regulated. More specifically, the cracking can be performed by rotating the rotor at a low peripheral velocity, whereas the granulation can be performed by rotating the rotor at a high peripheral velocity. In this manner, the average particle diameter, the specific surface area, and the like of the sulfide solid electrolyte can be easily regulated only by regulating the peripheral velocity of the rotor.

In the present embodiment, in the case where the amorphous sulfide solid electrolyte and the crystalline sulfide solid electrolyte, which are obtained by any method of the Embodiments A to D, preferably the precursor for mechanical treatment, which is the crystalline sulfide solid electrolyte, is mechanically treated, it is preferred that the precursor for mechanical treatment is cracked by the mechanical treatment, and the further atomized crystalline sulfide solid electrolyte is used in the electrode composite material, from the standpoint of the achievement of a higher battery capability.

The peripheral velocity of the rotor cannot be determined unconditionally since the low peripheral velocity and the high peripheral velocity may vary depending, for example, on the particle diameter, the material, the amount used, and the like of the medium used in the pulverizer. For example, in the apparatus that does not use a pulverization medium, such as balls and beads, such as the high-speed thin film spin type agitator, mainly, the cracking occurs, whereas the granulation is hard to occur even at a relatively high peripheral velocity. In the apparatus that uses a pulverization medium, such as a ball mill and a bead mill, the cracking can be achieved at the low peripheral velocity, whereas the granulation can be achieved at the high peripheral velocity, as described above. Therefore, under the same prescribed condition including the pulverization apparatus, the pulverization medium, and the like, the peripheral velocity capable of achieving the cracking is smaller than the peripheral velocity capable of achieving the granulation. Therefore, for example, under the condition in which the granulation can be achieved beyond a peripheral velocity of 6 m/s, the low peripheral velocity means less than 6 m/s, and the high peripheral velocity means 6 m/s or more.

More specific examples of the apparatus as the pulverizer include a medium type pulverizer. The medium type pulverizer is roughly classified into a container driving type pulverizer and a medium agitation type pulverizer.

Examples of the container driving type pulverizer include an agitation tank, a pulverization tank, and a ball mill and a bead mill combined thereto. The ball mill and the bead mill used may be any of various types, such as a rotary type, a tumbling type, a vibration type, and a planetary type.

Examples of the medium agitation type pulverizer include various pulverizers, for example, an impact type pulverizer, such as a cutter mill, a hammer mill, and a pin mill; a tower type pulverizer, such as a tower mill; an agitation tank type pulverizer, such as a tumbling mill, an attritor, an aquamizer, and a sand grinder; a circulation tank type pulverizer, such as a visco mill and a pearl mill; a circulation type pulverizer; an annular type pulverizer, such as a co-ball mill; and a continuous dynamic type pulverizer.

In the present production method, a container driving type pulverizer is preferred, and in particular, a bead mill and a ball mill are preferred, from the standpoint of regulating the desired average particle diameter and specific surface area more easily. The container driving type pulverizer, such as a bead mill and a ball mill, has a container, such as an agitation tank or a pulverization tank, for housing the precursor for mechanical treatment, as a rotor capable of agitating the precursor for mechanical treatment. Therefore, the average particle diameter, the specific surface area, and the like of the sulfide solid electrolyte can be easily regulated by regulating the peripheral velocity of the rotor, as described above.

With the bead mill and the ball mill, since the average particle diameter, the specific surface area, and the like can also be regulated by regulating the particle diameter, the material, the amount used, and the like of the beads, balls, and the like used, the morphology thereof can be more finely regulated, and the average particle diameter, the specific surface area, and the like can be regulated in a manner that have not achieved than ever before. For example, the bead mill used may be a centrifugal separation type using so-called microbeads having extremely fine particles (approximately 0.015 to 1 mm in diameter) (such as an ultra apex mill (UAM)).

In the regulation of the average particle diameter, the specific surface area, and the like, there is a tendency that the average particle diameter is decreased (cracking) to increase the specific surface area by decreasing the energy applied to the precursor for mechanical treatment, i.e., decreasing the peripheral velocity of the rotor or decreasing the particle diameter of the beads, balls, or the like, whereas there is a tendency that the average particle diameter is increased (granulation) to decrease the specific surface area by increasing the energy, i.e., increasing the peripheral velocity of the rotor or increasing the particle diameter of the beads, balls, or the like.

For example, there is also a tendency that the average particle diameter is increased (granulation) by increasing the period of time of the mechanical treatment.

In the present embodiment, since it is preferred as described above that the mechanically treated material obtained by cracking through the mechanical treatment (cracked material) is produced and mixed with the electrode active material, it is preferred to decrease the energy applied to the precursor for mechanical treatment, i.e., decrease the peripheral velocity of the rotor or to decrease the particle diameter of the balls, beads, or the like, and also it is preferred to decrease the period of time of the mechanical treatment.

The particle diameter of the medium used in the bead mill, the ball mill, and the like may be appropriately determined in consideration of the kind, the scale, and the like of the apparatus used in addition to the desired morphology, and in general, is preferably 0.01 mm or more, more preferably 0.015 mm or more, further preferably 0.02 mm or more, and still further preferably 0.04 mm or more, and the upper limit thereof is preferably 3 mm or less, more preferably 2 mm or less, further preferably 1 mm or less, and still further preferably 0.8 mm or less.

Examples of the material of the medium include metals, such as stainless steel, chrome steel, and tungsten carbide; ceramics, such as zirconia and silicon nitride; and minerals, such as agate.

The period of time of the mechanical treatment may be appropriately determined in consideration of the kind, the scale, and the like of the apparatus used in addition to the desired average particle diameter, specific surface area, and the like, and in general, is preferably 5 seconds or more, more preferably 30 seconds or more, further preferably 3 minutes or more, and still further preferably 15 minutes or more, and the upper limit thereof is preferably 5 hours or less, more preferably 3 hours or less, further preferably 2 hours or less, and still further preferably 1.5 hours or less.

The peripheral velocity of the rotor in the mechanical treatment (i.e., the rotational speed in the apparatus, such as the bead mill and the ball mill) may be appropriately determined in consideration of the kind, the scale, and the like of the apparatus used in addition to the desired average particle diameter, specific surface area, and the like, and in general, is preferably 0.5 m/s or more, more preferably 1 m/s or more, further preferably 2 m/s or more, and still further preferably 3 m/s or more, and the upper limit thereof is preferably 55 m/s or less, more preferably 40 m/s or less, further preferably 25 m/s or less, and still further preferably 15 m/s or less. The peripheral velocity may be constant or may be changed during the treatment.

The mechanical treatment may be performed along with a solvent. The solvent used may be selected from those exemplified as the solvent capable of being used in the Embodiments C and D of the production method of the precursor for mechanical treatment described above. From the standpoint of obtaining a high ionic conductivity more stably in addition to the prescribed average particle diameter and specific surface area, an aliphatic hydrocarbon solvent, an alicyclic hydrocarbon solvent, an aromatic hydrocarbon solvent, and an ether-based solvent are preferred, heptane, cyclohexane, toluene, ethylbenzene, diethyl ether, diisopropyl ether, dibutyl ether, dimethoxyethane, cyclopentyl methyl ether, tert-butyl methyl ether, and anisole are more preferred, heptane, toluene, and ethylbenzene are further preferred, and heptane and toluene are still further preferred. In the present embodiment, the atomization through cracking can be easily achieved without the use of a dispersant. However, a dispersant may be used from the standpoint of the further enhancement of the dispersion for more efficient atomization. Among the aforementioned solvents, for example, an ether-based solvent can function as a dispersant.

The amount of the solvent used may be such an amount that the content of the precursor for mechanical treatment relative to the total amount of the precursor for mechanical treatment and the solvent is preferably 1% by mass or more, more preferably 3% by mass or more, and further preferably 5% by mass or more, and the upper limit thereof is preferably 30% by mass or less, more preferably 20% by mass or less, and further preferably 15% by mass or less.

(Mixing of Sulfide Solid Electrolyte and Electrode Active Material)

In the present production method, the mixing method of the sulfide solid electrolyte, preferably the crystalline sulfide solid electrolyte, with the electrode active material is preferably, for example, the method using an apparatus, such as a pulverizer and an agitator, described for the method of the mechanical treatment of the precursor for mechanical treatment. The apparatus may be used alone or in combination depending on necessity, and from the standpoint of efficiently providing the electrode composite material, the apparatus is preferably used alone, and the mixing is preferably performed with a pulverizer or an agitator.

The apparatus, such as a pulverizer and an agitator, used is preferably those described for the apparatus capable of being used in the aforementioned mechanical treatment, and in particular, the pulverizer is preferably an agitation tank type pulverizer or a container driving type pulverizer, and more preferably a tumbling mill, a ball mill, or a bead mill, and the agitator is preferably a high-speed agitation type mixer, and more preferably a thin film spin type high-speed agitator.

In this mixing, an agitation tank type pulverizer is preferred, and in particular, a tumbling mill is more preferred, in consideration of the case using a conductive material and a binder.

In this mixing, the sulfide solid electrolyte, preferably the crystalline sulfide solid electrolyte, may be or may not be one having been subjected to the aforementioned mechanical treatment. By using the mechanically treated material, a more uniform mixed state can be obtained in mixing with the electrode active material, so as to achieve the enhancement of the battery capability, whereas by not using the mechanically treated material, the production efficiency can be enhanced. Any one of them may be selected in consideration of the capability, the production efficiency, and the like of the desired electrode composite material.

In the present embodiment, in the case where the mechanically treated material is not used as the sulfide solid electrolyte, preferably the crystalline sulfide solid electrolyte, the electrode composite material containing the crystalline sulfide solid electrolyte and the electrode active material, or the electrode composite material containing the crystalline sulfide solid electrolyte, at least a part of which is a mechanically treated material having been substantially subjected to a mechanical treatment by the mixing, and the electrode active material is obtained. In the case where the mechanically treated material is used as the crystalline sulfide solid electrolyte, the electrode composite material as a mixture of the mechanically treated material of the crystalline sulfide solid electrolyte and the electrode active material is obtained.

In this mixing, any of dry mixing using no solvent and wet mixing using a solvent may be employed. In the case where a solvent is used, the solvent used may be appropriately selected from various solvents exemplified as the solvent capable of being used in the mechanical treatment, i.e., an aliphatic hydrocarbon solvent, an alicyclic hydrocarbon solvent, an aromatic hydrocarbon solvent, an ether-based solvent, a nitrile-based solvent, and the like, in which an aromatic hydrocarbon solvent and a nitrile-based solvent are preferred, and in particular, toluene and isobutyronitrile are more preferred.

The amount of the solvent used is the same as the amount thereof used in the aforementioned mechanical treatment.

Examples

The present invention is described specifically with reference to Examples, but it should be construed that the present invention is by no means restricted by these Examples.

(Production Example 1)

In a 1 L reaction tank equipped with an impeller, 15.3 g of lithium sulfide and 24.7 g of diphosphorus pentasulfide were added in a nitrogen atmosphere. After actuating the impeller, 400 mL of tetrahydrofuran having been cooled to -20°C was introduced into the tank. After spontaneously raising the temperature to room temperature (23°C), agitation was continued for 72 hours, the resulting reaction liquid slurry was placed in a glass filter (pore size: 40 to 100 pm) to obtain a solid component, and then the solid component was dried at 90°C, to provide 38 g of $Li_3PS_4$ (purity: 90% by mass) as white powder. The resulting powder was subjected to powder X-ray diffractometry (XRD) with an X-ray diffraction (XRD) apparatus (SmartLab apparatus, produced by Rigaku Corporation), and as a result, the powder showed a hallow pattern and was confirmed as amorphous $Li_3PS_4$.

(Production Example 2)

"BEAD MILL LMZ015" (produced by Ashizawa Finetech Ltd.) was used as a bead mill, in which 485 g of a zirconia ball having a diameter of 0.5 mm was charged. A 2.0 L glass reactor equipped with an agitator was used as a reaction tank.

34.77 g of lithium sulfide and 45.87 g of diphosphorus pentasulfide were charged in the reaction tank, and 1,000 mL of dehydrated toluene was further added to prepare a slurry. The slurry charged in the reaction tank was circulated at a flow rate of 600 mL/min by using a pump within the bead mill apparatus, the bead mill was started to operate at a peripheral velocity of 10 m/s, and then 13.97 g of iodine (produced by Wako Pure Chemical Industries, Ltd., guaranteed reagent) and 13.19 g of bromine (produced by Wako Pure Chemical Industries, Ltd., guaranteed reagent) dissolved in 200 mL of dehydrated toluene were poured into the reaction tank.

After completion of the pouring of iodine and bromine, the peripheral velocity of the bead mill was changed to 12 m/s, hot water (HW) was passed therethrough by means of external circulation, and reaction was performed in such a manner that the ejection temperature of the pump was kept at 70°C. After removing the supernatant of the resulting slurry, the residue was placed on a hot plate and dried at 80°C, so as to provide an amorphous solid electrolyte in a powder form. The resulting amorphous solid electrolyte in a powder form was heated to 195°C for 3 hours by using a hot plate installed in a globe box, so as to provide a crystalline solid electrolyte. The resulting crystalline solid electrolyte was subjected to powder X-ray diffractometry (XRD), and as a result, crystallization peaks were detected at $2\theta = 20.2°$ and 23.6°, and a thio-LISICON Region II-type crystal structure thereof was confirmed.

(Production Example 3: Production of Positive Electrode Active Material)

$LiNi_{0.8}Co_{0.15}Al_{0.05}O_2$ (average particle diameter ($D_{50}$): 6.2 $\mu$m, BET specific surface area: 0.43 $m^2$/g, hereinafter referred to as "NCA" in some cases) was produced with reference to the non-patent literature (N. Ohta, K. Takada, L. Zhang, R. Ma, M. Osada, T. Sasaki, Adv. Mater., 18, 2226 (2006)).

As a solution for forming a coating layer, a mixed liquid of 491.1 g of a lithium ethoxide ($LiOCH_2CH_3$) solution prepared by using 208.9 g of titanium isopropoxide ($TiOCHCH_2CH_3$) having a purity of 99%, 4.1 g of metal Li, and 487 g of ethanol was used.

The lithium ethoxide solution was coated on the NCA by a spray coating method, and after drying to remove the excessive solution, which was subjected to a burning treatment at 300°C for 0.5 hour with a muffle furnace, so as to produce a positive electrode active material including NCA having formed thereon a coating layer of LTO ($Li_4Ti_5O_{12}$).

The resulting positive electrode active material has a surface coverage of 92% and a thickness of the coating layer of 4.2 nm.

(Example 1)

In a Schlenk flask (capacity: 100 mL) having a stirring bar placed therein, 1.70 g of the white powder ($Li_3PS_4$: 1.53 g) obtained in Production Example 1, 0.19 g of lithium bromide, and 0.28 g of lithium iodide were introduced under a nitrogen atmosphere. After rotating the stirring bar, 20 mL of tetramethylethylenediamine (TMEDA) as a complexing agent was added, agitation was continued for 12 hours, and the resulting electrolyte precursor inclusion was dried in vacuum (at room temperature: 23°C) to provide an electrolyte precursor in the form of powder. Subsequently, the powder of the electrolyte precursor was heated at 120°C in vacuum for 2 hours to provide an amorphous sulfide solid electrolyte. Furthermore, the amorphous sulfide solid electrolyte was heated at 140°C in vacuum for 2 hours to provide a crystalline sulfide solid electrolyte (the heating temperature for providing a crystalline sulfide solid electrolyte (140°C in this example) may be referred to as a "crystallization temperature").

A part of each of the resulting powder of the electrolyte precursor and crystalline sulfide solid electrolyte was dissolved in methanol, and the resulting methanol solution was subjected to gas chromatographic analysis to measure the content of tetramethylethylenediamine. The content of the complexing agent in the electrolyte precursor was 55.0% by mass, and the content of the complexing agent in the crystalline sulfide solid electrolyte was 1.2% by mass.

The resulting electrolyte precursor, amorphous sulfide solid electrolyte, and crystalline sulfide solid electrolyte each were subjected to powder X-ray diffractometry (XRD) by using a powder X-ray diffraction (XRD) apparatus (D2 PHASER, produced by Bruker Japan K.K.). The X-ray diffraction spectrum of the crystalline sulfide solid electrolyte is shown in Fig. 5.

In the measurement of this example, the X-ray diffractometry (XRD) was performed in the following manner.

The powder of the solid electrolyte in each of the examples was placed in a groove having a diameter of 20 mm and a depth of 0.2 mm and leveled with glass to provide a specimen. The specimen was measured while preventing from contacting with air covered with a Kapton film for XRD. The $2\theta$ position of the diffraction peak was determined by the Le Bail analysis by using an XRD analysis program, RIETAN-FP.

The measurement was performed with the powder X-ray diffraction apparatus under the following condition.

Tube voltage: 30 kV
Tube current: 10 mA
X-ray wavelength: Cu-K$\alpha$ radiation (1.5418 Å)
Optical system: concentration method
Slit configuration: solar slit 4°, diffusion slit 1 mm, K$\beta$ filter (Ni plate) used
Detector: semiconductor detector
Measurement range: $2\theta$ = 10 to 60 deg
Step width, scanning speed: 0.05 deg, 0.05 deg/sec

The analysis of the peak position for confirming the presence of the crystal structure from the measurement result was performed by using an XRD analysis program, RIETAN-FP, and the peak position was obtained while calibrating the base line by the 11th order Legendre orthogonal polynomial.

The resulting amorphous sulfide solid electrolyte was subjected to composition analysis through ICP analysis (inductively coupled plasma atomic emission spectrophotometry). As a result of the composition analysis, the contents of Li, P, S, Br, and I were 10.1, 13.2, 55.2, 8.4, and 13.1% by mass, respectively.

In the X-ray diffraction spectrum of the electrolyte precursor, peaks different from the peaks derived from the used raw materials were observed, and the X-ray diffraction pattern exhibited was different from the amorphous sulfide solid electrolyte and the crystalline sulfide solid electrolyte. The raw materials used in Example 1 (i.e., amorphous $Li_3PS_4$, lithium bromide, and lithium iodide) and the raw materials used in the other examples (i.e., lithium sulfide, diphosphorus pentasulfide, and crystalline $Li_3PS_4$) were also subjected to the powder X-ray diffractometry (XRD), and the X-ray diffraction spectra thereof are shown in Fig. 4. The X-ray diffraction spectrum of the electrolyte precursor showed the X-ray diffraction pattern different from that of the X-ray diffraction spectra of the raw materials.

It was confirmed that the X-ray diffraction spectrum of the amorphous sulfide solid electrolyte had no peak other than the peaks derived from the raw materials. In the X-ray diffraction spectrum of the crystalline sulfide solid electrolyte, the crystalline peaks were detected mainly at $2\theta$ = 20.2° and 23.6°, which showed the presence of the thio-LISICON Region II-type crystal structure, and the measurement of the ionic conductivity revealed $2.90 \times 10^{-3}$ (S/cm), from which a high ionic conductivity was confirmed.

In this example, the measurement of the ionic conductivity was performed in the following manner.

From the resulting crystalline sulfide solid electrolyte, a circular pellet having a diameter of 10 mm (cross sectional area $S_i$: 0.785 cm$^2$) and a height ($L_i$) of 0.1 to 0.3 cm was molded to prepare a sample. Electrode terminals were connected to the top and the bottom of the sample, and the ionic conductivity was measured at 25°C according to an alternate current impedance method (frequency range: 5 MHz to 0.5 Hz, amplitude: 10 mV) to provide a Cole-Cole plot. In the vicinity of the right end of the arc observed in the high frequency side region, the real part Z' ($\Omega$) at the point where -Z" ($\Omega$) is minimized was referred to as a bulk resistance R ($\Omega_i$) of the electrolyte, and the ion conductivity $\sigma$ (S/cm) was calculated according to the following expressions.

$$R_i = \rho(L_i/S_i)$$

$$\sigma = 1/\rho$$

The resulting crystalline sulfide solid electrolyte had a volume based average particle diameter of 7.5 pm, a specific surface area of 33 m$^2$/g, and a full width at half maximum $\Delta 2\theta$ of the maximum peak ($2\theta = 20.2°$) including the background in $2\theta = 10$ to $40°$ of $0.59°$.
The full width at half maximum peak was calculated in the following manner.
A range of $\pm 2°$ of the maximum peak was used for the calculation of the half value width. Assuming that the proportion of Lorenz function was A ($0 \leq A \leq 1$), the correction value of the peak intensity was B, the $2\theta$ maximum peak was C, the peak position in a range used for the calculation (C $\pm 2°$) was D, the full width at half maximum peak parameter was E, the background was F, and the peak intensity of the peaks in the peak range used for the calculation was G, the following value was calculated for each of the peak positions when A, B, C, D, E and F were used as variables.

$$H = G \cdot \{B \times \{A/(1 + (D \cdot C)^2/E^2) + (1 \cdot A) \times \exp(\cdot 1 \times (D \cdot C)^2/E^2)\} + F\}$$

The values H were summed within the range of the peak C $\pm 2°$, and the summed value was minimized by the GRG non-linear solver function of Excel (Microsoft Corporation), so as to provide the full width at half maximum peak parameter. The full width at half maximum peak G was obtained from the full width at half maximum parameter according to the following expression.

$$G = E \times 2 \times (\ln 4)^{(1/2)}$$

The average particle diameter was measured by using a laser diffraction particle size distribution measurement device ("LA-920 (model number), produced by Horiba, Ltd.). The specific surface area was a value that was measured by the BET fluid method (three-point method) using nitrogen gas as the adsorbate according to JIS R1626:1996.

(Production of Positive Electrode Composite Material)

Subsequently, 0.1 g of the crystalline sulfide solid electrolyte and 0.9 g of the positive electrode active material obtained in Production Example 3 were mixed by using a tumbling mill ("Small-size Ball Mill AV Type" (model number), produced by Asahi Rika Factory, Ltd.) at a rotation number of 600 rpm for 1 hour, so as to provide an electrode composite material (positive electrode composite material). The resulting electrode composite material (positive electrode composite material) was observed with a scanning electron microscope (SEM). The photograph thereof by a scanning electron microscope (SEM) is shown in Fig. 6.

(Production of Half-Cell using Positive Electrode Composite Material)

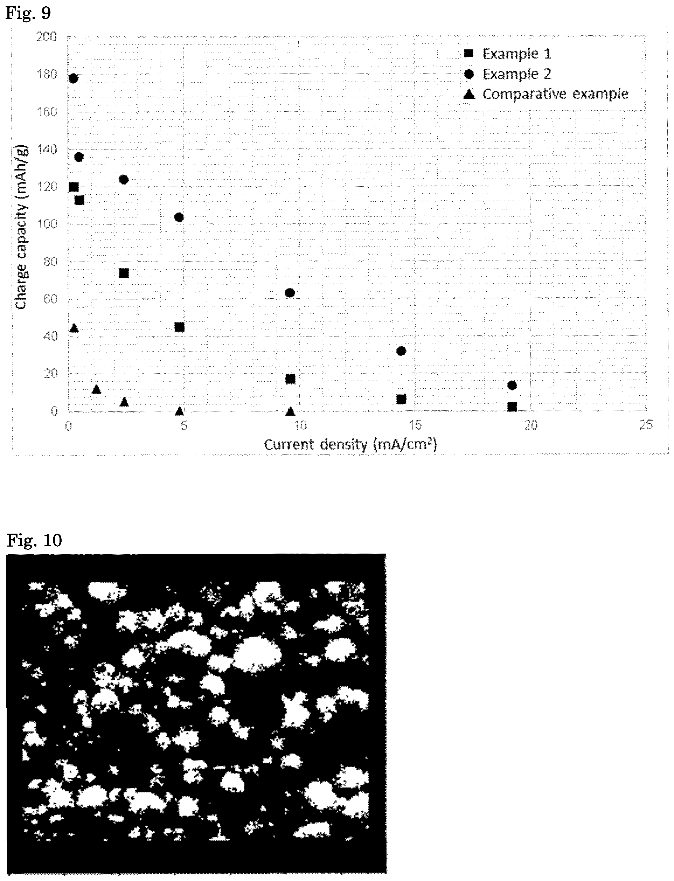

60 mg of 80(75Li$_2$S/25P$_2$S$_5$)-10LiBr-10LiI obtained in Production Example 2 as the crystalline sulfide solid electrolyte was placed in a ceramic cylinder having a diameter of 10 mm and press-molded to form an electrolyte layer.
23.6 mg of the positive electrode composite material was placed on the upper part of the electrolyte layer and press-molded to form a work electrode, and an InLi alloy foil was adhered to the surface of the electrolyte layer opposite to the work electrode and press-molded to form a reference electrode also functioning as a counter electrode. Then, the cell was screwed at four positions every 90°, so as to provide a half-cell having a three-layer structure. The InLi alloy can be used as a reference electrode, as far as the raw material ratio (Li/In) is 0.8 or less, by which the reaction potential of Li insert and release can be kept constant.
The resulting half-cell was evaluated for the cycle characteristics at a cut-off voltage of 3.6 V for charging and 2.5 V for discharging and a constant current density of 0.24 mAcm$^{-2}$ for charging and discharging. As a result, the charge capacity in the first cycle was 120 mAh/g; while the current density in the second cycle was fixed at 0.48 mAcm$^{-2}$, the charge capacity in the second cycle was 113 mAh/g; while the current density in the third cycle was fixed at 2.4 mAcm$^{-2}$, the charge capacity in the third cycle time became 74 mAh/g; and while the current density in the fourth cycle was fixed at 4.8 mAcm$^{-2}$, the charge capacity in the fourth cycle was 45 mAh/g. The cycle characteristics were evaluated at current densities in the fifth cycle, the sixth cycle, and the seventh cycle fixed at 9.6 mAcm$^{-2}$, 14.4 mAcm$^{-2}$, and 19.2 mAcm$^{-2}$, respectively, and as a result, the charge capacities in the fifth cycle, the sixth cycle, and the seventh cycle were 17 mAh/g, 6.3 mAh/g, and 2 mAh/g, respectively. The results are shown in Fig. 9 with the ordinate as the charge capacity and the abscissa as the C rate.

The crystalline sulfide solid electrolyte and the positive electrode active material used in the production of the positive electrode composite material, and the resulting positive electrode composite material were measured for the electron conductivity by the measurement method described above. The electron conductivity of the electrode composite material $\Sigma(C)$ was $5.70 \times 10^{-3}$ S/cm. The electron conductivity of the crystalline sulfide solid electrolyte $\Sigma(SE)$ was $2.08 \times 10^{-9}$ S/cm. The electron conductivity of the positive electrode active material $\Sigma(A)$ was $2.45 \times 10^{-2}$ S/cm. The fraction $\alpha$ of the electrode active material was 0.9, and the electron conductivity parameter X calculated by the expression (1) was 1.18. The results are shown in Table 1. In the case where $1.0 \times 10^{-8}$ S/cm as the general value of the electron conductivity of a sulfide solid electrolyte was used in the calculation of the electron conductivity parameter X, the value X was 1.01.

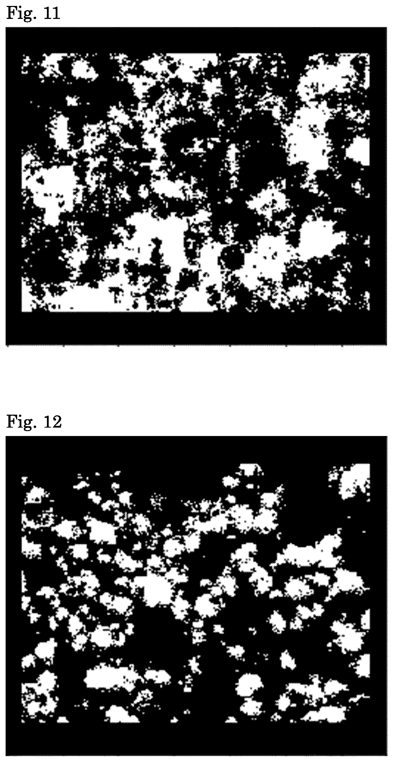

Subsequently, the overlap area ratio of the mapping of the elements constituting the sulfide solid electrolyte with respect to the mapping of the elements constituting the electrode active material was measured in the measurement method described above. In the measurement, the electrode active material and the sulfide solid electrolyte were photographed with a scanning electron microscope (SEM), and the electron micrographs each were subjected to elemental analysis with an energy dispersive X-ray spectroscopy device (EDS device). The image (EDS image) of the nickel element constituting the electrode active material is shown in Fig. 10, and the image (EDS image) of the phosphorus element constituting the sulfide solid electrolyte is shown in Fig. 11. The overlap area ratio of the mapping of the elements constituting the sulfide solid electrolyte with respect to the mapping of the elements constituting the electrode active material measured by using the image of the nickel element and the image of the phosphorus element by the measurement method described above was 0.45. The fraction $\alpha$ of the electrode active material was 0.9, and thus the value A was 4.05. In the measurement of the overlap area ratio, the method of the binarization process of the image of the elemental analysis was a process using OpenCV (open-source computer vision library) in Python. The results are shown in Table 1.

(Example 2)

An electrode composite material (positive electrode composite material) and a half-cell were produced in the same manner as in Example 1 except that in the production of the electrode composite material (positive electrode composite material) in Example 1, toluene and isobutyronitrile were added as a solvent in such an amount that the total content of the crystalline sulfide solid electrolyte and the positive electrode active material was 10% by mass, by using a high-speed thin film spin type agitator ("Filmix" (product name), produced by Primix Corporation) at a rotation number of 16,000 rpm for 20 seconds.

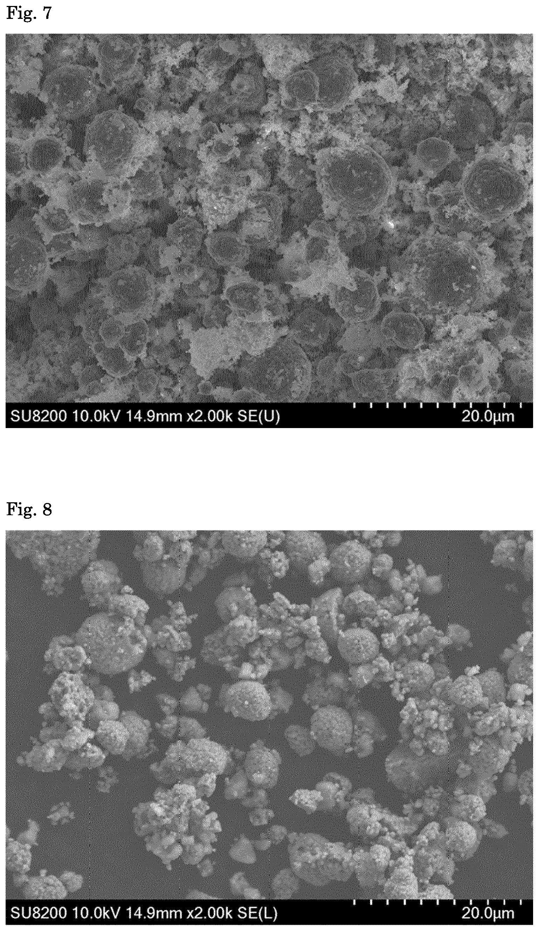

The resulting electrode composite material (positive electrode composite material) was observed with a scanning electron microscope (SEM). The photograph thereof by a scanning electron microscope (SEM) is shown in Fig. 7.

The resulting half-cell was subjected to the same cycle evaluation as in Example 1 for evaluating the cycle characteristics in the same manner as in Example 1. As a result, the charge capacity in the first cycle was 178 mAh/g, the charge capacity in the second cycle was 136 mAh/g, the charge capacity in the third cycle time became 124 mAh/g; and the charge capacity in the fourth cycle was 104 mAh/g. The charge capacities in the fifth cycle, the sixth cycle, and the seventh cycle were 63 mAh/g, 32 mAh/g, and 13 mAh/g, respectively. The results are shown in Fig. 9 with the ordinate as the charge capacity and the abscissa as the C rate.

The electron conductivities were measured in the same manner as in Example 1. The electron conductivity of the electrode composite material $\Sigma(C)$ was $4.60 \times 10^{-3}$ S/cm. The electron conductivity of the crystalline sulfide solid electrolyte $\Sigma(SE)$ and the electron conductivity of the positive electrode active material $\Sigma(A)$ were the same as in Example 1. The fraction $\alpha$ of the electrode active material was 0.9, and the electron conductivity parameter X calculated by the expression (1) was 0.96. The results are shown in Table 1. In the case where the general value of the electron conductivity of a sulfide solid electrolyte was used in the calculation of the electron conductivity parameter X, the value X was 0.82.

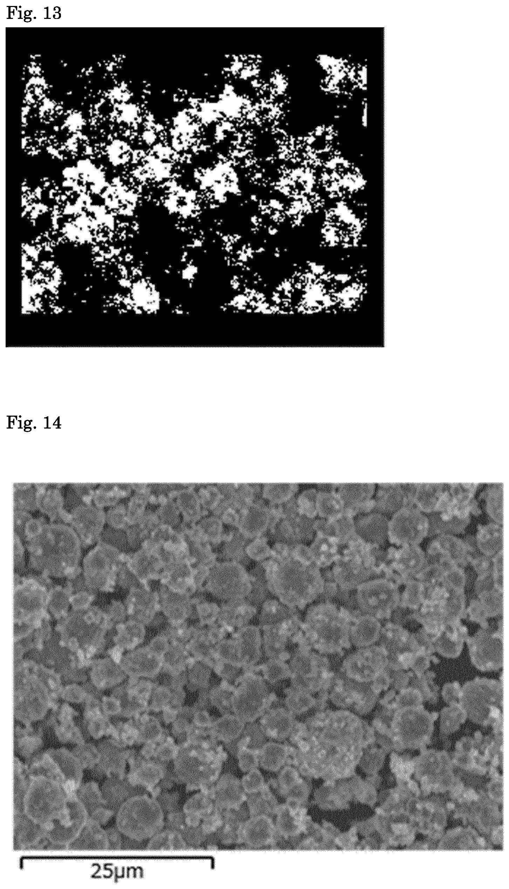

The overlap area ratio measured in the same manner as in Example 1 was 0.13. The fraction $\alpha$ of the electrode active material was 0.9, and thus the value A was 1.17. The results are shown in Table 1. The image (EDS image) of the nickel element constituting the electrode active material is shown in Fig. 12, and the image (EDS image) of the phosphorus element constituting the sulfide solid electrolyte is shown in Fig. 13.

(Example 3)

An electrode composite material (positive electrode composite material) and a half-cell were produced in the same manner as in Example 1 except that in Example 1, 1,2-diethoxyethane (DEE) was used as the complexing agent instead of tetramethylethylenediamine (TMEDA) to produce a sulfide solid electrolyte.

The resulting electrode composite material (positive electrode composite material) was observed with a scanning electron microscope (SEM). The photograph thereof by a scanning electron microscope (SEM) is shown in Fig. 14.

The resulting half-cell was subjected to the same cycle evaluation as in Example 1 for evaluating the cycle characteristics in the same manner as in Example 1. As a result, the charge capacity in the first cycle was 139 mAh/g, the charge capacity in the second cycle was 138 mAh/g, the charge capacity in the third cycle time became 57 mAh/g; and the charge capacity in the fourth cycle was 27 mAh/g. The charge capacities in the fifth cycle, the sixth cycle, and the seventh cycle were 8.3 mAh/g, 0 mAh/g, and 0 mAh/g, respectively. The "0 mAh/g" in the sixth and seventh cycles means that the function as a battery is not exhibited, and the charge capacity cannot be measured.

The electron conductivities were measured in the same manner as in Example 1. The electron conductivity of the electrode composite material $\Sigma(C)$ was $6.93 \times 10^{-3}$ S/cm. The electron conductivity of the crystalline sulfide solid electrolyte $\Sigma(SE)$ was $2.36 \times 10^{-9}$ S/cm. The electron conductivity of the positive electrode active material $\Sigma(A)$ was the same as in Example 1. The fraction $\alpha$ of the electrode active material was 0.9, and the electron conductivity parameter X calculated by the expression (1) was 1.42. The results are shown in Table 1. In the case where the general value of the electron conductivity of a sulfide solid electrolyte was used in the calculation of the electron conductivity parameter X, the value X was 1.23.

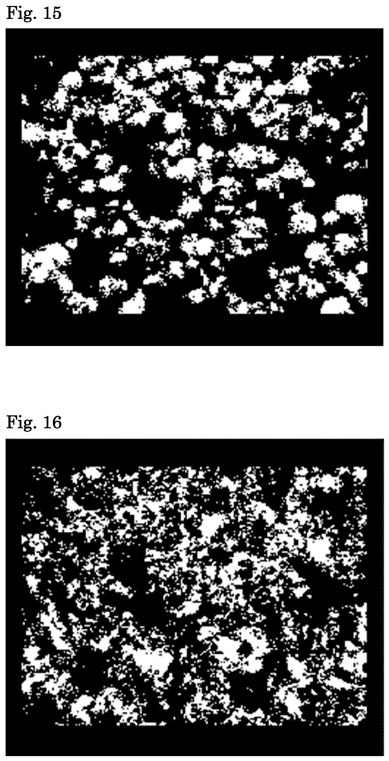

The overlap area ratio measured in the same manner as in Example 1 was 0.36. The fraction $\alpha$ of the electrode active material was 0.9, and thus the value A was 3.24. The results are shown in Table 1. The image (EDS image) of the nickel element constituting the electrode active material is shown in Fig. 15, and the image (EDS image) of the phosphorus element constituting the sulfide solid electrolyte is shown in Fig. 16.

(Example 4)

An electrode composite material (positive electrode composite material) and a half-cell were produced in the same manner as in Example 1 except that in Example 1, propylene glycol monomethyl ether acetate (PGMEA) was used as the complexing agent instead of tetramethylethylenediamine (TMEDA) to produce a sulfide solid electrolyte.

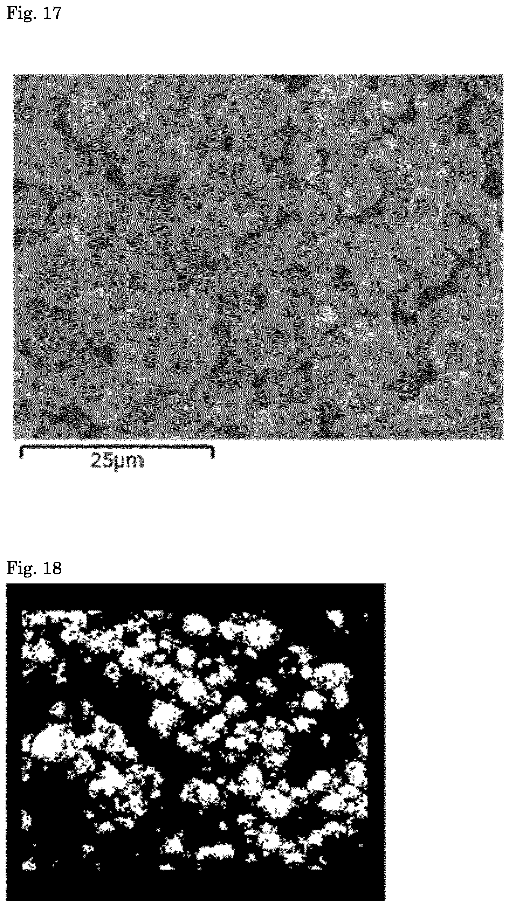

The resulting electrode composite material (positive electrode composite material) was observed with a scanning electron microscope (SEM). The photograph thereof by a scanning electron microscope (SEM) is shown in Fig. 17.

The resulting half-cell was subjected to the same cycle evaluation as in Example 1 for evaluating the cycle characteristics in the same manner as in Example 1. As a result, the charge capacity in the first cycle was 151 mAh/g, the charge capacity in the second cycle was 145 mAh/g, the charge capacity in the third cycle time became 88 mAh/g; and the charge capacity in the fourth cycle was 43 mAh/g. The charge capacities in the fifth cycle, the sixth cycle, and the seventh cycle were 16 mAh/g, 5.5 mAh/g, and 0 mAh/g, respectively. The "0 mAh/g" in the seventh cycle means that the function as a battery is not exhibited, and the charge capacity cannot be measured.

The electron conductivities were measured in the same manner as in Example 1. The electron conductivity of the electrode composite material $\Sigma(C)$ was $5.13 \times 10^{-3}$ S/cm. The electron conductivity of the crystalline sulfide solid electrolyte $\Sigma(SE)$ was $2.03 \times 10^{-9}$ S/cm. The electron conductivity of the positive electrode active material $\Sigma(A)$ was the same as in Example 1. The fraction $\alpha$ of the electrode active material was 0.9, and the electron conductivity parameter X calculated by the expression (1) was 1.07. The results are shown in Table 1. In the case where the general value of the electron conductivity of a sulfide solid electrolyte was used in the calculation of the electron conductivity parameter X, the value X was 0.91.

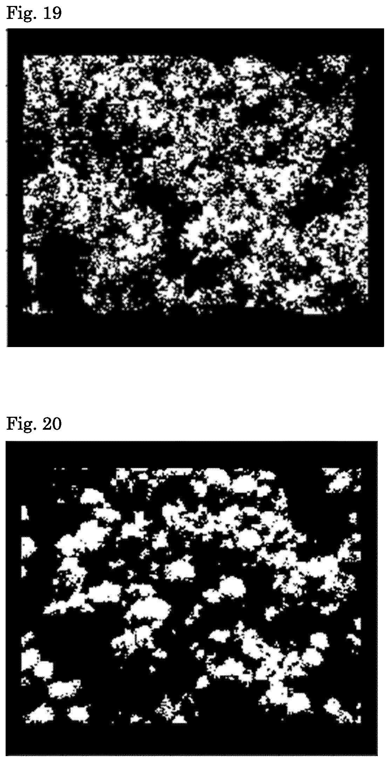

The overlap area ratio measured in the same manner as in Example 1 was 0.48. The fraction $\alpha$ of the electrode active material was 0.9, and thus the value A was 4.32. The results are shown in Table 1. The image (EDS image) of the nickel element constituting the electrode active material is shown in Fig. 18, and the image (EDS image) of the phosphorus element constituting the sulfide solid electrolyte is shown in Fig. 19.

(Example 5)

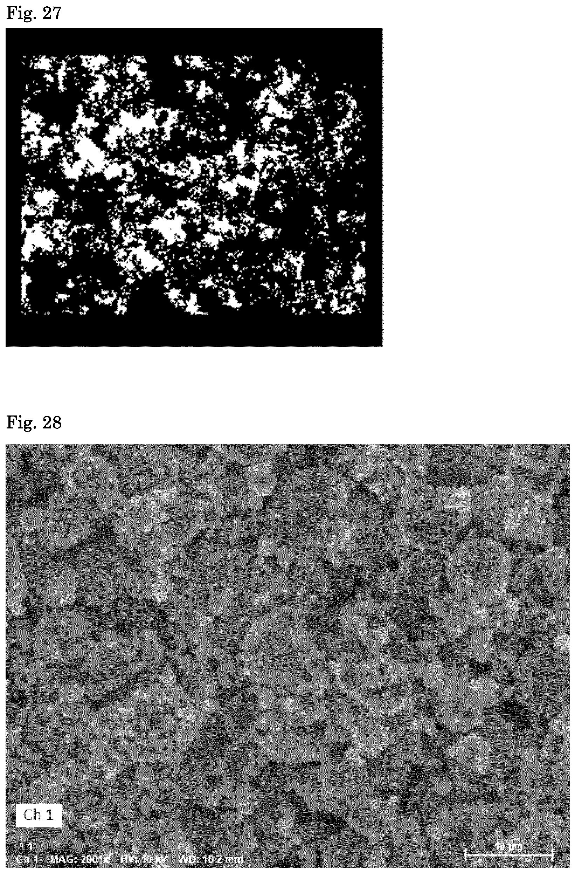

An electrode composite material (positive electrode composite material) and a half-cell were produced in the same manner as in Example 1 except that in the production of the electrode active material (positive electrode active material) in Example 1, 0.2 g of the crystalline sulfide solid electrolyte and 0.8 g of the positive electrode active material were used. The half-cell was produced in the same manner as in Example 1. The resulting electrode composite material (positive electrode composite material) was observed with a scanning electron microscope (SEM). The photograph thereof by a scanning electron microscope (SEM) is shown in Fig. 28.

The electron conductivities were measured in the same manner as in Example 1. The electron conductivity of the electrode composite material $\Sigma(C)$ was $1.28 \times 10^{-3}$ S/cm. The electron conductivity of the crystalline sulfide solid electrolyte $\Sigma(SE)$ and the electron conductivity of the positive electrode active material $\Sigma(A)$ were the same as in Example 1. The fraction $\alpha$ of the electrode active material was 0.8, and the electron conductivity parameter X calculated by the expression (1) was 1.36. The results are shown in Table 1. In the case where the general value of the electron conductivity of a sulfide solid electrolyte was used in the calculation of the electron conductivity parameter X, the value X was 0.99.

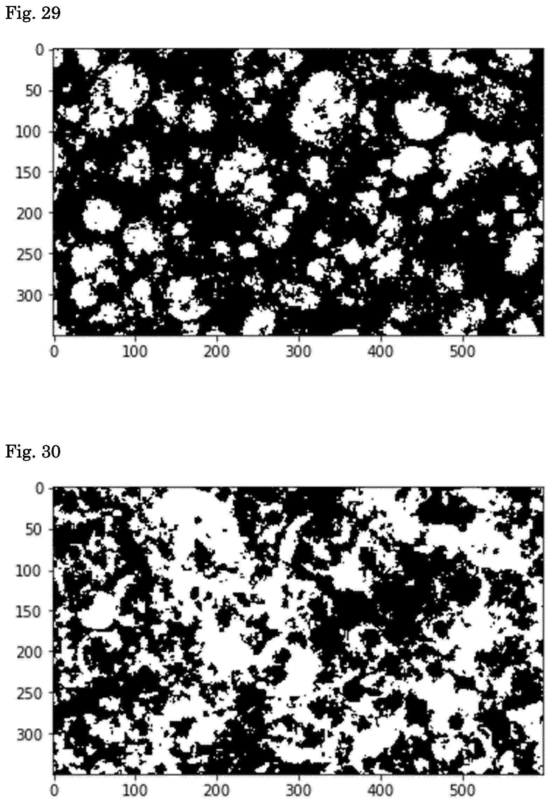

The overlap area ratio measured in the same manner as in Example 1 was 0.21. The fraction $\alpha$ of the electrode active material was 0.8, and thus the value A was 0.84. The results are shown in Table 1. The image (EDS image) of the nickel element constituting the electrode active material is shown in Fig. 29, and the image (EDS image) of the phosphorus element constituting the sulfide solid electrolyte is shown in Fig. 30.

(Example 6)

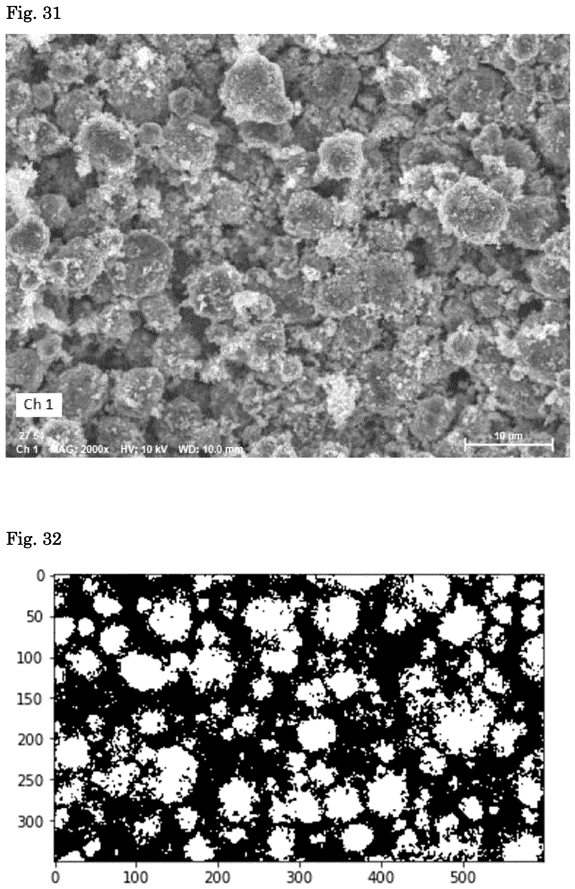

The electrolyte precursor obtained in Example 1 was subjected to thermogravimetric analysis (TG) under a heating condition of 10°C/min with a thermogravimetric analyzer (TG-DTA device, "TGA 2 (model number)", produced by Mettler Toledo, Inc.), and the entire mass decrease was assumed to be the solvent. In consideration of this, 0.24 g of the electrolyte precursor and 0.9 g of the positive electrode active material providing a charge ratio of the powder of 9/1 after heating the electrolyte precursor were mixed in the same manner as in Example 1. After mixing, the mixture of the active material and the precursor was heated to 160°C in vacuum for 2 hours to obtain an electrode composite material. The half-cell was produced in the same manner as in Example 1. The resulting electrode composite material (positive electrode composite material) was observed with a scanning electron microscope (SEM). The photograph thereof by a scanning electron microscope (SEM) is shown in Fig. 31. The resulting half-cell was subjected to the same cycle evaluation as in Example 1 for evaluating the cycle characteristics in the same manner as in Example 1. As a result, the charge capacity in the first cycle was 146 mAh/g, the charge capacity in the second cycle was 137 mAh/g, the charge capacity in the third cycle time became 107 mAh/g; and the charge capacity in the fourth cycle was 77 mAh/g. The charge capacities in the fifth cycle, the sixth cycle, and the seventh cycle were 39.1 mAh/g, 18.2 mAh/g, and 7.10 mAh/g, respectively.

The electron conductivities were measured in the same manner as in Example 1. The electron conductivity of the electrode composite material $\Sigma(C)$ was $9.19 \times 10^{-3}$ S/cm. The electron conductivity of the crystalline sulfide solid electrolyte $\Sigma(SE)$ and the electron conductivity of the positive electrode active material $\Sigma(A)$ were the same as in Example 1. The fraction $\alpha$ of the electrode active material was 0.9, and the electron conductivity parameter X calculated by the expression (1) was 1.91. The results are shown in Table 1. In the case where the general value of the electron conductivity of a sulfide solid electrolyte was used in the calculation of the electron conductivity parameter X, the value X was 1.63.

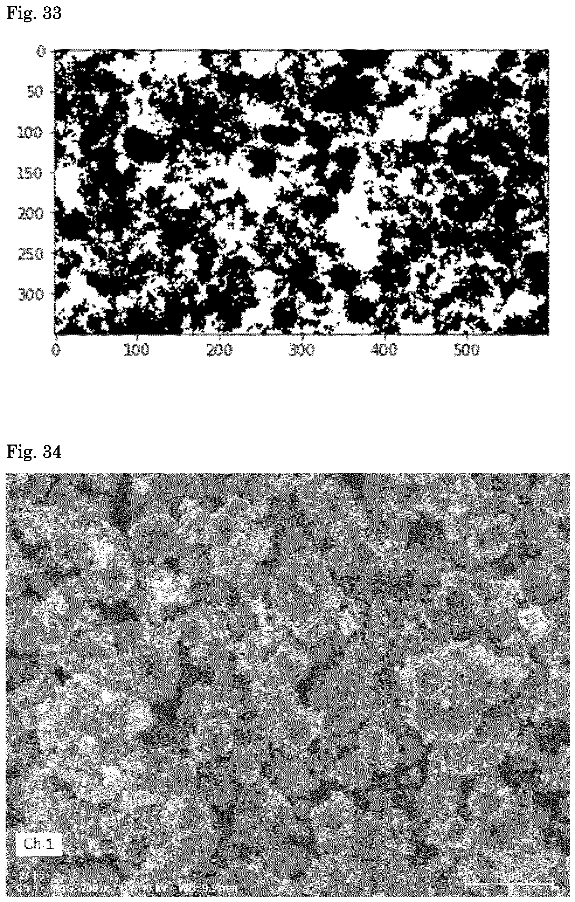

The overlap area ratio measured in the same manner as in Example 1 was 0.21. The fraction $\alpha$ of the electrode active material was 0.9, and thus the value A was 1.89. The results are shown in Table 1. The image (EDS image) of the nickel element constituting the electrode active material is shown in Fig. 32, and the image (EDS image) of the phosphorus element constituting the sulfide solid electrolyte is shown in Fig. 33.

(Example 7)

The electrolyte precursor obtained in Example 1 was heated to 120°C in vacuum for 2 hours to obtain an electrolyte precursor in a vitreous state. The thermogravimetric analysis (TG) was performed in the same manner as in Example 6, and the entire mass decrease was assumed to be the solvent. In consideration of this, 0.11 g of the electrolyte precursor in a vitreous state and 0.9 g of the positive electrode active material providing a charge ratio of the powder of 9/1 after heating the electrolyte precursor in a vitreous state were mixed in the same manner as in Example 1. After mixing, the mixture of the active material and the precursor was heated to 160°C in vacuum for 2 hours to obtain an electrode composite material. The half cell was produced in the same manner as in Example 1. The resulting electrode composite material (positive electrode composite material) was observed with a scanning electron microscope (SEM). The photograph thereof by a scanning electron microscope (SEM) is shown in Fig. 34. The resulting half-cell was subjected to the same cycle evaluation as in Example 1 for evaluating the cycle characteristics in the same manner as in Example 1. As a result, the charge capacity in the first cycle was 142 mAh/g, the charge capacity in the second cycle was 134 mAh/g, the charge capacity in the third cycle time became 107 mAh/g; and the charge capacity in the fourth cycle was 74.4 mAh/g. The charge capacities in the fifth cycle, the sixth cycle, and the seventh cycle were 32.3 mAh/g, 13.3 mAh/g, and 3.88 mAh/g, respectively.

The electron conductivities were measured in the same manner as in Example 1. The electron conductivity of the electrode composite material $\Sigma(C)$ was $9.72 \times 10^{-3}$ S/cm. The electron conductivity of the crystalline sulfide solid electrolyte $\Sigma(SE)$ and the electron conductivity of the positive electrode active material $\Sigma(A)$ were the same as in Example 1. The fraction $\alpha$ of the electrode active material was 0.9, and the electron conductivity parameter X calculated by the expression (1) was 2.02. The results are shown in Table 1. In the case where the general value of the electron conductivity of a sulfide solid electrolyte was used in the calculation of the electron conductivity parameter X, the value X was 1.72.

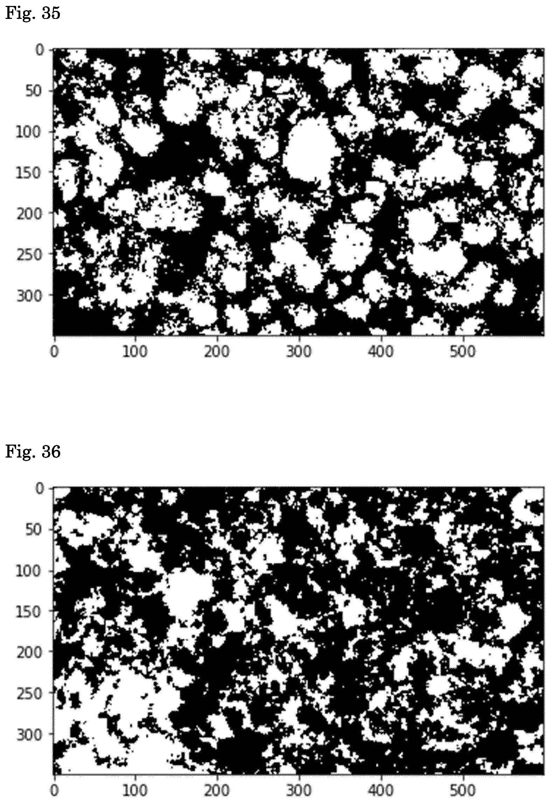

The overlap area ratio measured in the same manner as in Example 1 was 0.26. The fraction $\alpha$ of the electrode active material was 0.9, and thus the value A was 2.34. The results are shown in Table 1. The image (EDS image) of the nickel element constituting the electrode active material is shown in Fig. 35, and the image (EDS image) of the phosphorus element constituting the sulfide solid electrolyte is shown in Fig. 36.

(Comparative Example 1)

A positive electrode composite material and a half-cell were produced in the same manner as in Example 1 except that in the production of the electrode composite material (positive electrode composite material) in Example 1, the crystalline sulfide solid electrolyte obtained in Production Example 2 (average particle diameter: 6.6 $\mu$m, BET specific surface area: 3.4 m$^2$/g) was used as the crystalline sulfide solid electrolyte. The crystalline sulfide solid electrolyte obtained in Production Example 2 was subjected to powder X-ray diffractometry (XRD) by using a powder X-ray diffraction (XRD) apparatus (D2 PHASER (product number), produced by Bruker Japan K.K.). The X-ray diffraction spectrum thereof is shown in Fig. 5. The full width at half maximum $\Delta 2\theta$ of the maximum peak ($2\theta = 20.2°$) including the background in $2\theta = 10$ to $40°$ was $0.78°$.

The resulting electrode composite material (positive electrode composite material) was observed with a scanning electron microscope (SEM). The photograph thereof by a scanning electron microscope (SEM) is shown in Fig. 8.

The resulting half-cell was evaluated for the cycle characteristics at a cut-off voltage of 3.6 V for charging and 2.5 V for discharging and a constant current density of 0.24 mAcm$^{-2}$ for charging and discharging. As a result, the charge capacity in the first cycle was 45.3 mAh/g; while the current density in the second cycle was fixed at 1.2 mAcm$^{-2}$, the charge capacity in the second cycle was 12 mAh/g; while the current density in the third cycle was fixed at 2.4 mAcm$^{-2}$, the charge capacity in the third cycle time became 5.4 mAh/g; while the current density in the fourth cycle was fixed at 4.8 mAcm$^{-2}$, the charge capacity in the fourth cycle was 0.4 mAh/g; and while the current density in the fifth cycle was fixed at 9.6 mAcm$^{-2}$, the charge capacity in the fifth cycle was 0 mAh/g. The results are shown in Fig. 9 with the ordinate as the charge capacity and the abscissa as the C rate. The "0 mAh/g" in the fifth cycle means that the function as a battery is not exhibited, and the charge capacity cannot be measured.

The electron conductivities were measured in the same manner as in Example 1. The electron conductivity of the electrode composite material $\Sigma(C)$ was $1.23 \times 10^{-2}$ S/cm. The electron conductivity of the crystalline sulfide solid electrolyte $\Sigma(SE)$ was $2.07 \times 10^{-9}$ S/cm. The electron conductivity of the positive electrode active material $\Sigma(A)$ was the same as in Example 1. The fraction $\alpha$ of the electrode active material was 0.9, and the electron conductivity parameter X calculated by the expression (1) was 2.56. The results are shown in Table 1. In the case where the general value of the electron conductivity of a sulfide solid electrolyte was used in the calculation of the electron conductivity parameter X, the value X was 2.19.

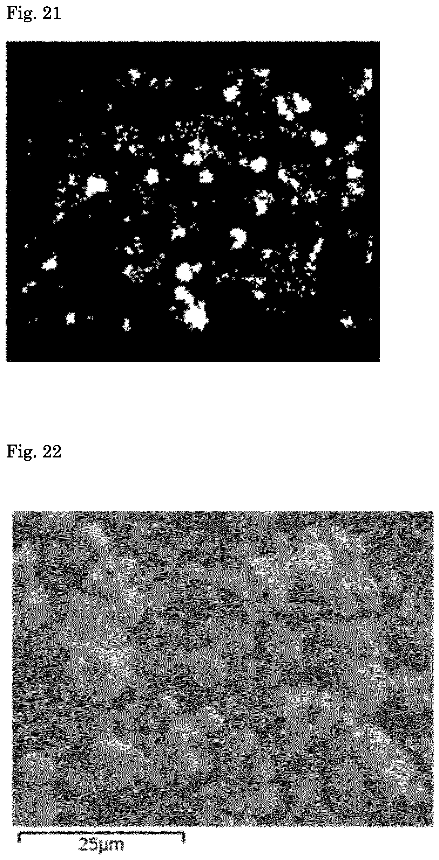

The overlap area ratio measured in the same manner as in Example 1 was 0.059. The fraction $\alpha$ of the electrode active material was 0.9, and thus the value A was 0.531. The results are shown in Table 1. The image (EDS image) of the nickel element constituting the electrode active material is shown in Fig. 20, and the image (EDS image) of the phosphorus element constituting the sulfide solid electrolyte is shown in Fig. 21.

(Comparative Example 2)

An electrode composite material (positive electrode composite material) and a half-cell were produced in the same manner as in Example 1 except that in the production of the electrode active material (positive electrode active material) in Example 1, tetramethylethylenediamine (TMEDA) as the solvent was added to make a total content of the crystalline sulfide solid electrolyte and the positive electrode active material of 10% by mass, and the mixing was performed with a stirring bar instead of the tumbling mill.

The resulting electrode composite material (positive electrode composite material) was observed with a scanning electron microscope (SEM). The photograph thereof by a scanning electron microscope (SEM) is shown in Fig. 22.

The resulting half-cell was subjected to the same cycle evaluation as in Example 1 for evaluating the cycle characteristics in the same manner as in Example 1. As a result, the charge capacity in the first cycle was 72 mAh/g, the charge capacity in the second cycle was 51 mAh/g, the charge capacity in the third cycle time became 9.4 mAh/g; and the charge capacity in the fourth cycle was 2.5 mAh/g. The charge capacities in the fifth cycle, the sixth cycle, and the seventh cycle were $1.0 \times 10^{-4}$ mAh/g, $8.0 \times 10^{-5}$ mAh/g, and $6.6 \times 10^{-5}$ mAh/g, respectively.

The electron conductivities were measured in the same manner as in Example 1. The electron conductivity of the electrode composite material $\Sigma(C)$ was $1.27 \times 10^{-4}$ S/cm. The electron conductivity of the crystalline sulfide solid electrolyte $\Sigma(SE)$ and the electron conductivity of the positive electrode active material $\Sigma(A)$ were the same as in Example 1. The fraction $\alpha$ of the electrode active material was 0.9, and the electron conductivity parameter X calculated by the expression (1) was 0.026. The results are shown in Table 1. In the case where the general value of the electron conductivity of a sulfide solid electrolyte was used in the calculation of the electron conductivity parameter X, the value X was 0.023.

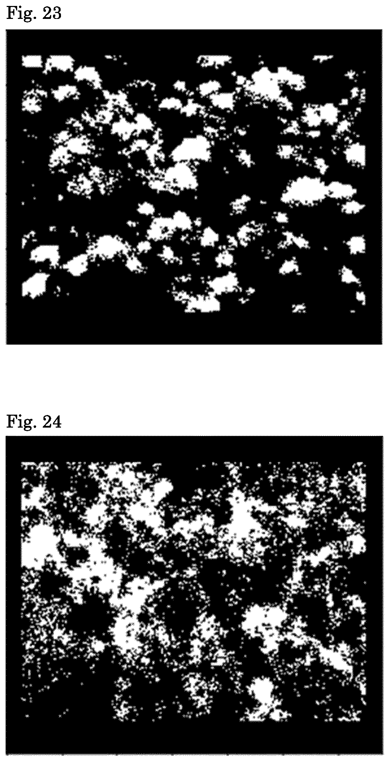

The overlap area ratio measured in the same manner as in Example 1 was 0.21. The fraction $\alpha$ of the electrode active material was 0.9, and thus the value A was 1.89. The results are shown in Table 1. The image (EDS image) of the nickel element constituting the electrode active material is shown in Fig. 23, and the image (EDS image) of the phosphorus element constituting the sulfide solid electrolyte is shown in Fig. 24.

(Comparative Example 3)

An electrode composite material (positive electrode composite material) and a half-cell were produced in the same manner as in Example 1 except that in the production of the electrode active material (positive electrode active material) in Example 1, ethanol as the solvent was added to make a total content of the crystalline sulfide solid electrolyte and the positive electrode active material of 10% by mass, and the mixing was performed with a stirring bar instead of the tumbling mill.

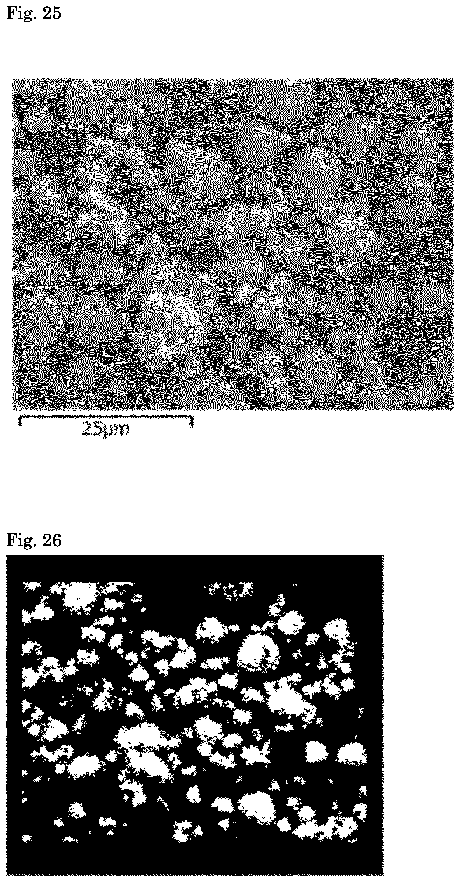

The resulting electrode composite material (positive electrode composite material) was observed with a scanning electron microscope (SEM). The photograph thereof by a scanning electron microscope (SEM) is shown in Fig. 25.

The resulting half-cell was subjected to the same cycle evaluation as in Example 1 for evaluating the cycle characteristics in the same manner as in Example 1. As a result, the charge capacity in the first cycle was 1.3 mAh/g, the charge capacity in the second cycle was 0.030 mAh/g, the charge capacity in the third cycle time became 0 mAh/g; and the charge capacity in the fourth cycle was 0 mAh/g. The charge capacities in the fifth cycle, the sixth cycle, and the seventh cycle were 0 mAh/g, 0 mAh/g, and 0 mAh/g, respectively. The "0 mAh/g" in the third to seventh cycles means that the function as a battery is not exhibited, and the charge capacity cannot be measured.

The electron conductivities were measured in the same manner as in Example 1. The electron conductivity of the electrode composite material $\Sigma(C)$ was $1.21 \times 10^{-3}$ S/cm. The electron conductivity of the crystalline sulfide solid electrolyte $\Sigma(SE)$ and the electron conductivity of the positive electrode active material $\Sigma(A)$ were the same as in Example 1. The fraction $\alpha$ of the electrode active material was 0.9, and the electron conductivity parameter X calculated by the expression (1) was 0.25. The results are shown in Table 1. In the case where the general value of the electron conductivity of a sulfide solid electrolyte was used in the calculation of the electron conductivity parameter X, the value X was 0.22.

The overlap area ratio measured in the same manner as in Example 1 was 0.26. The fraction $\alpha$ of the electrode active material was 0.9, and thus the value A was 2.34. The results are shown in Table 1. The image (EDS image) of the nickel element constituting the electrode active material is shown in Fig. 26, and the image (EDS image) of the phosphorus element constituting the sulfide solid electrolyte is shown in Fig. 27.

(Comparative Example 4)

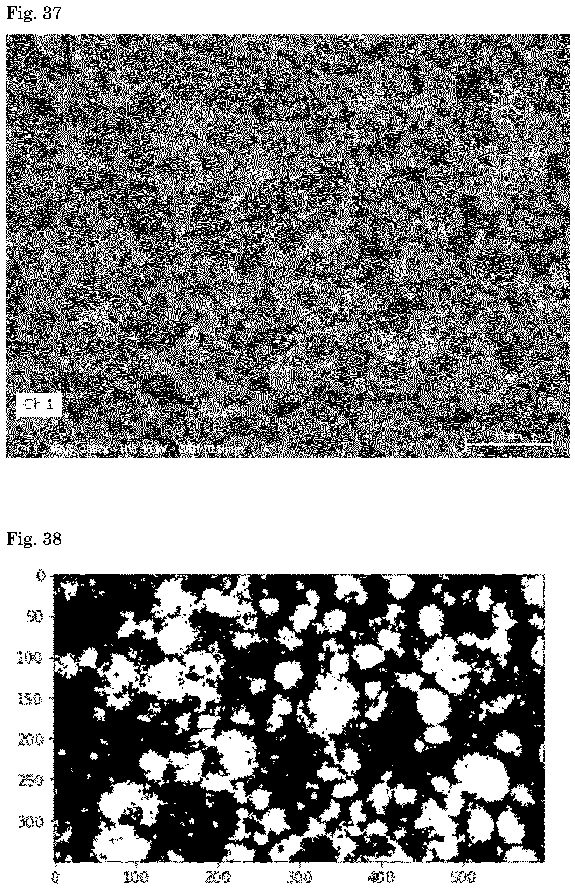

An electrode composite material (positive electrode composite material) and a half-cell were produced in the same manner as in Comparative Example 1 except that in the production of the electrode active material (positive electrode active material) in Comparative Example 1, 0.2 g of the crystalline sulfide solid electrolyte and 0.8 g of the positive electrode active material were used. The half-cell was produced in the same manner as in Example 1. The resulting electrode composite material (positive electrode composite material) was observed with a scanning electron microscope (SEM). The photograph thereof by a scanning electron microscope (SEM) is shown in Fig. 37.

The electron conductivities were measured in the same manner as in Example 1. The electron conductivity of the electrode composite material $\Sigma(C)$ was $2.83 \times 10^{-3}$ S/cm. The electron conductivity of the crystalline sulfide solid electrolyte $\Sigma(SE)$ was $2.07 \times 10^{-9}$ S/cm. The electron conductivity of the positive electrode active material $\Sigma(A)$ was the same as in Example 1. The fraction $\alpha$ of the electrode active material was 0.8, and the electron conductivity parameter X calculated by the expression (1) was 3.00. The results are shown in Table 1. In the case where the general value of the electron conductivity of a sulfide solid electrolyte was used in the calculation of the electron conductivity parameter X, the value X was 2.19.

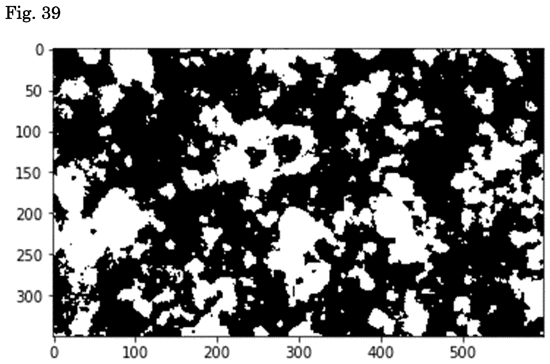

The overlap area ratio measured in the same manner as in Example 1 was 0.056. The fraction $\alpha$ of the electrode active material was 0.8, and thus the value A was 0.22. The results are shown in Table 1. The image (EDS image) of the nickel element constituting the electrode active material is shown in Fig. 38, and the image (EDS image) of the phosphorus element constituting the sulfide solid electrolyte is shown in Fig. 39.

Table 1

| | Example | | | | | | | Comparative Example | | | |
|---|---|---|---|---|---|---|---|---|---|---|---|
| | 1 | 2 | 3 | 4 | 5 | 6 | 7 | 1 | 2 | 3 | 4 |
| Complexing agent | TMEDA | TMEDA | DEE | PGMEA | TMEDA | TMEDA | TMEDA | - | TMEDA | TMEDA | - |
| Production of electrode composite material | | | | | | | | | | | |
| Dry method | ○ | - | ○ | ○ | ○ | ○ | ○ | ○ | - | - | ○ |
| Wet method | - | ○ | - | - | - | - | - | - | ○ | ○ | - |
| Electron conductivity | | | | | | | | | | | |
| $\Sigma$(SE) measured value | $2.08 \times 10^{-9}$ | $2.08 \times 10^{-9}$ | $2.36 \times 10^{-9}$ | $2.03 \times 10^{-9}$ | $2.08 \times 10^{-9}$ | $2.08 \times 10^{-9}$ | $2.08 \times 10^{-9}$ | $2.07 \times 10^{-9}$ | $2.08 \times 10^{-9}$ | $2.08 \times 10^{-9}$ | $2.07 \times 10^{-9}$ |
| $\Sigma$(SE) general value | $1.00 \times 10^{-8}$ | $1.00 \times 10^{-8}$ | $1.00 \times 10^{-8}$ | $1.00 \times 10^{-8}$ | $1.00 \times 10^{-8}$ | $1.00 \times 10^{-8}$ | $1.00 \times 10^{-8}$ | $1.00 \times 10^{-8}$ | $1.00 \times 10^{-8}$ | $1.00 \times 10^{-8}$ | $1.00 \times 10^{-8}$ |
| $\Sigma$(A) | $2.45 \times 10^{-2}$ | $2.45 \times 10^{-2}$ | $2.45 \times 10^{-2}$ | $2.45 \times 10^{-2}$ | $2.45 \times 10^{-2}$ | $2.45 \times 10^{-2}$ | $2.45 \times 10^{-2}$ | $2.45 \times 10^{-2}$ | $2.45 \times 10^{-2}$ | $2.45 \times 10^{-2}$ | $2.45 \times 10^{-2}$ |
| $\Sigma$(C) | $5.70 \times 10^{-3}$ | $4.60 \times 10^{-3}$ | $6.93 \times 10^{-3}$ | $5.13 \times 10^{-3}$ | $1.28 \times 10^{-3}$ | $9.19 \times 10^{-3}$ | $9.72 \times 10^{-3}$ | $1.23 \times 10^{-2}$ | $1.27 \times 10^{-4}$ | $1.21 \times 10^{-3}$ | $2.83 \times 10^{-3}$ |
| Fraction $\alpha$ of electrode active material | 0.9 | 0.9 | 0.9 | 0.9 | 0.8 | 0.9 | 0.9 | 0.9 | 0.9 | 0.9 | 0.8 |
| Parameter X (using measured value) | 1.18 | 0.96 | 1.42 | 1.07 | 1.36 | 1.91 | 2.02 | 2.56 | 0.026 | 0.25 | 3.00 |
| Parameter X (using general value) | 1.01 | 0.82 | 1.23 | 0.91 | 0.99 | 1.63 | 1.72 | 2.19 | 0.023 | 0.22 | 2.19 |
| Overlap area ratio | 0.45 | 0.13 | 0.36 | 0.48 | 0.21 | 0.21 | 0.26 | 0.059 | 0.21 | 0.26 | 0.056 |
| A | 4.05 | 1.17 | 3.24 | 4.32 | 0.84 | 1.89 | 2.34 | 0.531 | 1.89 | 2.34 | 0.22 |

It is confirmed from the aforementioned results that the electrode composite material of the present embodiment satisfies an electron conductivity parameter X of $0.30 \leq X \leq 2.10$, and is capable of exhibiting a high battery capability. The comparison between Examples 1 and 5 shows that equivalent electron conductivity parameters are obtained even though the fraction $\alpha$ of the electrode active material is changed between 0.9 and 0.8 in the production of the electrode composite material, and it is considered therefrom that the battery capabilities of these electrode composite materials are equivalent to each other.

On the other hand, the electrode composite materials of Comparative Examples do not satisfy an electron conductivity parameter X of $0.30 \leq X \leq 2.10$, and does not exhibit a high battery capability. The electrode composite material of Comparative Example 1 has a significantly small overlap area ratio and a small value A, and it is considered therefrom that the contact state of the electrolyte and the active material is deteriorated, the covering state corresponding to the fraction is also deteriorated, and the electrolyte and the active material are not dispersed but each are aggregated to make an electron conductivity parameter X lager than the range of $0.30 \leq X \leq 2.10$, failing to exhibit a high battery capability. The SEM image of Comparative Example 1 (Fig. 8) shows that the amount of the sulfide solid electrolyte on the surface of the electrode active material is apparently small, which evidences that the overlap area ratio is small. Comparative Example 4 having an electron conductivity parameter X larger than the range of $0.30 \leq X \leq 2.10$ as similar to Comparative Example 1 also has the same tendency as in Comparative Example 1, and it is considered that a high battery capability cannot be exhibited thereby.

According to the SEM image of the electrode composite material of Comparative Example 3 (Fig. 25), it is found that the solid electrolyte is aggregated while becoming flaky form to cover the electrode active material, resulting in an unfavorable dispersion state of the sulfide solid electrolyte on the surface of the electrode active material, and the contact state thereof is also deteriorated to lower the electron conductivity of the resulting composite material, deteriorating the battery characteristics. In Comparative Example 2, the parameter X is smaller than the range of $0.30 \leq X \leq 2.10$ as similar to Comparative Example 3, showing that the electrolyte thickly exists around the active material to lower the electron conductivity, and the SEM image of the electrode composite material of Comparative Example 2 (Fig. 22) shows the same tendency as in Comparative Example 3 (Fig. 25), showing that the dispersion state and the contact state are deteriorated, from which it is considered that the battery capability is deteriorated.

Industrial Applicability

The electrode composite material of the present embodiment is capable of exhibiting a high battery capability. Since the electrode composite material of the present embodiment is excellent in contact state of the electrode active material and the sulfide solid electrolyte, the contact state thereof is not deteriorated even in the form of powder or in the form of slurry, and therefore a battery produced therewith by various film forming methods and molding methods, such as the electrostatic coating method of dry-coating in the form of powder, the wet coating molding, and the press-molding, is capable of exhibiting a high battery capability. Accordingly, the electrode composite material can be favorably applied to an all-solid-state lithium battery, particularly to the battery used in information-related instruments, communication instruments, and the like, such as personal computers, video cameras, and mobile phones.

**Claims**

1. An electrode composite material comprising a sulfide solid electrolyte and an electrode active material, having an electron conductivity parameter X represented by the following expression (1) satisfying $0.30 \leq X \leq 2.10$:

$$X = \Sigma(C)/10^{\wedge}[\{Log\Sigma(A)\text{-}Log\Sigma(SE)\}\alpha + Log\Sigma(SE)] \qquad (1)$$

wherein

$\Sigma(C)$: the electron conductivity of the electrode composite material,
$\Sigma(A)$: the electron conductivity of the electrode active material,
$\Sigma(SE)$: the electron conductivity of the sulfide solid electrolyte, and
$\alpha$: the fraction of the electrode active material.

2. The electrode composite material according to claim 1, wherein the electrode composite material has a value A in a range of $0.55 < A < 5.0$, assuming that in elemental analysis by energy dispersive X-ray spectroscopy of an electron micrograph, an overlap area ratio of a mapping of the elements constituting the sulfide solid electrolyte with respect to a mapping of the elements constituting the electrode active material in a binarized image with a threshold value calculated by discriminant analysis method is shown by $A \times (1-\alpha)/\alpha$ (wherein $\alpha$ represents a fraction of the electrode active material).

3. The electrode composite material according to claim 1 or 2, wherein elements constituting the electrode active material include a transition element, and elements constituting the sulfide solid electrolyte include a phosphorus element.

4. The electrode composite material according to any one of claims 1 to 3, wherein elements constituting the electrode active material include at least one selected from a manganese element, a cobalt element, a nickel element, an iron element, a titanium element, a zirconium element, a tungsten element, a molybdenum element, a copper element, a chromium element, a tantalum element, a zinc element, a vanadium element, and a niobium element.

5. The electrode composite material according to any one of claims 1 to 4, wherein the electrode active material is an oxide-based positive electrode active material.

6. The electrode composite material according to any one of claims 1 to 5, wherein the fraction $\alpha$ of the electrode active material is 0.6 or more and 0.99 or less.

7. The electrode composite material according to any one of claims 1 to 6, wherein the electron conductivity $\Sigma(C)$ of the electrode composite material is $1.0 \times 10^{-6}$ S/cm or more.

8. The electrode composite material according to any one of claims 1 to 7, wherein the electron conductivity $\Sigma(A)$ of the electrode active material is $1.0 \times 10^{-5}$ S/cm or more.

9. The electrode composite material according to any one of claims 1 to 8, wherein the electron conductivity $\Sigma(SE)$ of the sulfide solid electrolyte is $1.0 \times 10^{-7}$ S/cm or less.

10. The electrode composite material according to any one of claims 1 to 9, wherein the electron conductivity parameter X is calculated assuming that the electron conductivity $\Sigma(SE)$ of the sulfide solid electrolyte is $1.0 \times 10^{-8}$ S/cm.

11. The electrode composite material according to any one of claims 1 to 10, wherein the sulfide solid electrolyte contains at least one selected from a lithium element, a sulfur element, and a phosphorus element.

12. The electrode composite material according to any one of claims 1 to 11, wherein the sulfide solid electrolyte contains a lithium element, a sulfur element, a phosphorus element, and a halogen element.

13. The electrode composite material according to any one of claims 1 to 12, wherein the sulfide solid electrolyte is a crystalline sulfide solid electrolyte.

14. The electrode composite material according to any one of claims 1 to 13, wherein the sulfide solid electrolyte contains a thio-LISICON Region II-type crystal structure.

15. The electrode composite material according to any one of claims 1 to 14, wherein the sulfide solid electrolyte is a crystalline sulfide solid electrolyte having a volume based average particle diameter measured by a laser diffraction particle size distribution measuring method of 3 pm or more and a specific surface area measured by a BET method of 20 m$^2$/g or more.

16. The electrode composite material according to any one of claims 1 to 15, wherein the sulfide solid electrolyte is a mechanically treated material.

17. The electrode composite material according to any one of claims 1 to 16, wherein the sulfide solid electrolyte has a full width at half maximum peak including a background in $2\theta = 10$ to $40°$ in X-ray diffractometry using CuK$\alpha$ radiation of $\Delta 2\theta = 0.75°$ or less.

Fig. 1

(Embodiment A)

(Embodiment B)

Fig. 2

(Embodiment C)

(Embodiment D)

Fig. 3

Fig. 4

Fig. 5

Fig. 6

SU8200 10.0kV 14.9mm x2.00k SE(U)                    20.0μm

Fig. 7

SU8200 10.0kV 14.9mm x2.00k SE(U)　　　　20.0μm

Fig. 8

SU8200 10.0kV 14.9mm x2.00k SE(L)　　　　20.0μm

Fig. 9

Fig. 10

Fig. 11

Fig. 12

Fig. 13

Fig. 14

25µm

Fig. 15

Fig. 16

Fig. 17

25μm

Fig. 18

Fig. 19

Fig. 20

Fig. 21

Fig. 22

25μm

Fig. 23

Fig. 24

Fig. 25

25μm

Fig. 26

Fig. 27

Fig. 28

Fig. 29

Fig. 30

Fig. 31

Fig. 32

Fig. 33

Fig. 34

Fig. 35

Fig. 36

Fig. 37

Fig. 38

Fig. 39

## INTERNATIONAL SEARCH REPORT

| International application No. |
| --- |
| PCT/JP2021/005990 |

### A. CLASSIFICATION OF SUBJECT MATTER

Int. Cl. H01M4/13(2010.01)i, H01M4/131(2010.01)i, H01M4/136(2010.01)i, H01M4/48(2010.01)i, H01M4/505(2010.01)i, H01M4/525(2010.01)i, H01M4/58(2010.01)i, H01M4/62(2006.01)i
FI: H01M4/13, H01M4/62 Z, H01M4/48, H01M4/525, H01M4/58, H01M4/505, H01M4/131, H01M4/136

According to International Patent Classification (IPC) or to both national classification and IPC

### B. FIELDS SEARCHED

Minimum documentation searched (classification system followed by classification symbols)
Int. Cl. H01M4/13, H01M4/131, H01M4/136, H01M4/48, H01M4/505, H01M4/525, H01M4/58, H01M4/62

Documentation searched other than minimum documentation to the extent that such documents are included in the fields searched
Published examined utility model applications of Japan     1922-1996
Published unexamined utility model applications of Japan   1971-2021
Registered utility model specifications of Japan           1996-2021
Published registered utility model applications of Japan   1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | JP 2013-229132 A (TOYOTA MOTOR CORP.) 07 November 2013 | 1-17 |
| A | JP 2015-176801 A (TOYOTA MOTOR CORP.) 05 October 2015 | 1-17 |
| A | WO 2018/047946 A1 (FUJIFILM CORP.) 15 March 2018 | 1-17 |
| A | JP 2019-145299 A (SAMSUNG ELECTRONICS CO., LTD.) 29 August 2019 | 1-17 |
| A | JP 2018-125260 A (PANASONIC INTELLECTUAL PROPERTY MANAGEMENT CO., LTD.) 09 August 2018 | 1-17 |

☒ Further documents are listed in the continuation of Box C.       ☒ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 30.03.2021 | 13.04.2021 |

| Name and mailing address of the ISA/ | Authorized officer |
| --- | --- |
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**INTERNATIONAL SEARCH REPORT**

International application No.

PCT/JP2021/005990

C (Continuation).   DOCUMENTS CONSIDERED TO BE RELEVANT

| Category* | Citation of document, with indication, where appropriate, of the relevant passages | Relevant to claim No. |
|---|---|---|
| A | WO 2018/047565 A1 (IDEMITSU KOSAN CO., LTD.) 15 March 2018 | 1-17 |

Form PCT/ISA/210 (continuation of second sheet) (January 2015)

## INTERNATIONAL SEARCH REPORT
Information on patent family members

| International application No. |
|---|
| PCT/JP2021/005990 |

| Patent Documents referred to in the Report | Publication Date | Patent Family | Publication Date |
|---|---|---|---|
| JP 2013-229132 A | 07.11.2013 | (Family: none) | |
| JP 2015-176801 A | 05.10.2015 | (Family: none) | |
| WO 2018/047946 A1 | 15.03.2018 | US 2019/0207253 A1<br>CN 109690834 A | |
| JP 2019-145299 A | 29.08.2019 | US 2019/0260065 A1<br>KR 10-2019-0100078 A | |
| JP 2018-125260 A | 09.08.2018 | US 2018/0226681 A1<br>EP 3358663 A1<br>CN 108390066 A | |
| WO 2018/047565 A1 | 15.03.2018 | US 2019/0140313 A1<br>EP 3511948 A1<br>CN 109690696 A<br>KR 10-2019-0051962 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014154407 A
- JP 2014191899 A
- JP 2010140893 A
- JP 2013016423 A

**Non-patent literature cited in the description**

- *J. Jpn. Soc. Colour Mater.,* 2016, vol. 89 (9), 300-305
- **KANNO et al.** *Journal of The Electrochemical Society,* 2001, vol. 148 (7), A742-746
- *Solid State Ionics,* 2006, vol. 177, 2721-2725